# EUROPEAN PATENT APPLICATION

(11) **EP 4 503 477 A1**
(43) Date of publication of application: **05.02.2025**
(21) Application number: 22933513.8
(22) Date of filing: 25.03.2022
(51) Int. Cl.: H04B 10/11

(54) **LIGHT EMITTING DEVICE AND OPTICAL WIRELESS COMMUNICATION SYSTEM**

(71) Applicant: NIKON CORPORATION, Tokyo 140-8601 (JP)
(72) Inventor: SHIBAZAKI Yuichi, Tokyo, 108-6290 (JP)
(74) Representative: Arnold & Siedsma
(86) International application number: PCT/JP2022/014533
(87) International publication number: WO 2023/181375

(57) **Abstract**

A light emitting device for emitting an emission beam from a light generating device to a physical object includes an image forming optical system, an optical member configured to output light input via the image forming optical system toward an image plane of the image forming optical system and output the emission beam input from the light generating device via a conjugate plane conjugate to the image plane toward the image forming optical system, an imaging device configured to capture at least a part of an image of the physical object formed on the image plane by the image forming optical system, a position changing device configured to change a position of the emission beam from the light generating device on the conjugate plane so that an emission position of the emission beam output by the image forming optical system is changed; and a control device configured to control the position changing device on the basis of imaging results of the imaging device. The control device controls the position changing device on the basis of the imaging results of the imaging device so that the emission beam output by the image forming optical system is emitted to at least a part of the physical object.

## Description

### [Technical Field]

The present invention relates to a light emitting device and an optical wireless communication system.

### [Background Art]

An optical communication method using laser light is known. For example, Patent Document 1 describes an optical communication device.

### [Citation List]

### [Patent Document]

[Patent Document 1]
United States Patent No. 5,065,455

### [Summary of Invention]

According to the present invention, there is provided a light emitting device for emitting an emission beam from a light generating device to a physical object, the light emitting device including: an image forming optical system; an optical member configured to output light input via the image forming optical system toward an image plane of the image forming optical system and output the emission beam input from the light generating device via a conjugate plane conjugate to the image plane toward the image forming optical system; an imaging device configured to capture at least a part of an image of the physical object formed on the image plane by the image forming optical system; a position changing device configured to change a position of the emission beam from the light generating device on the conjugate plane so that an emission position of the emission beam output by the image forming optical system is changed; and a control device configured to control the position changing device on the basis of imaging results of the imaging device, wherein the control device controls the position changing device on the basis of the imaging results of the imaging device so that the emission beam output by the image forming optical system is emitted to at least a part of the physical object.

### [Brief Description of Drawings]

FIG. 1 is a schematic configuration diagram showing a light emitting system according to a first embodiment.
FIG. 2 is a schematic configuration diagram schematically showing a light emitting device according to the first embodiment.
FIG. 3 is a diagram for describing a configuration around a light transmitting/receiving optical element according to the first embodiment.
FIG. 4 is a diagram showing a first example of optical wireless communication according to the first embodiment.
FIG. 5 is a diagram showing a second example of optical wireless communication according to the first embodiment.
FIG. 6 is a diagram showing a third example of optical wireless communication according to the first embodiment.
FIG. 7 is a schematic configuration diagram showing a modified example of the light emitting system according to the first embodiment.
FIG. 8 is a schematic configuration diagram schematically showing a light emitting device according to a second embodiment.
FIG. 9 is a schematic configuration diagram schematically showing a light emitting device according to a third embodiment.
FIG. 10 is a schematic configuration diagram schematically showing a light emitting device according to a fourth embodiment.
FIG. 11 is a schematic diagram for describing a case where a light reflection region is divided by light reception and light transmission according to the fourth embodiment.
FIG. 12 is a schematic diagram for describing a case where a light transmitting/receiving optical element is arranged at a defocus position according to the fourth embodiment.
FIG. 13 is a schematic configuration diagram schematically showing a light emitting device according to a fifth embodiment.
FIG. 14 is a schematic configuration diagram schematically showing a light emitting device according to a sixth embodiment.
FIG. 15 is a view showing an example of a mobile object according to the sixth embodiment.
FIG. 16 is a schematic configuration diagram schematically showing a light emitting device according to a seventh embodiment.
FIG. 17 is a schematic configuration diagram schematically showing a light emitting device according to an eighth embodiment.
FIG. 18 is a schematic configuration diagram schematically showing a light emitting device according to a ninth embodiment.

### [Description of Embodiments]

Hereinafter, a light emitting device and an optical wireless communication system according to embodiments of the present invention will be described with reference to the drawings.

Furthermore, the scope of the present invention is not limited to the following embodiments and can be arbitrarily changed within the scope of the technical idea of the present invention. Moreover, in the following drawings, the scale, the number, and the like in each structure used for easy understanding of each configuration may be different from those in the actual structure.

### [First Embodiment]

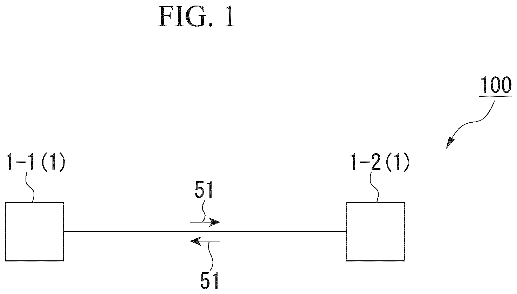

FIG. 1 is a schematic configuration diagram showing a light emitting system according to the first embodiment. A light emitting system 100 will be described with reference to FIG. 1.

As shown in FIG. 1, the light emitting system 100 includes a plurality of light emitting devices 1 configured to emit an emission beam 51 to a physical object. The emission beam 51 is electromagnetic waves and is, for example, light. The emission beam 51 widely includes light such as ultraviolet rays, infrared rays, visible light, and terahertz waves (terahertz light). In the first embodiment, the emission beam 51 is light modulated on the basis of information. That is, the light emitting device 1 transmits information by emitting light.

When the light emitting device 1 emits the emission beam 51 to the physical object, the light emitting device 1 may emit the emission beam 51 to a part of the physical object or the light emitting device 1 may emit the emission beam 51 to a whole of the physical object. In the first embodiment, the physical object may be, for example, another light emitting device 1 different from its device. The light emitting device 1 performs optical wireless communication by emitting the emission beam 51 to another light emitting device 1 different from the light emitting device 1. The light emitting system 100 includes a plurality of light emitting devices 1 and therefore optical wireless communication is performed between the light emitting devices 1.

The light emitting device 1 may be installed on a movable object. The movable object may be, for example, any robot such as a vertically articulated robot, a gimbal, a manned/unmanned vehicle, a manned/unmanned aircraft, a manned/unmanned watercraft, a manned/unmanned submarine, or the like. The unmanned aircraft may be referred to as a drone. The light emitting device 1 may be installed on a surface outside or inside of the movable object. Here, the movable object includes one whose position can be changed or one whose position can be changed with respect to its device. For example, in the case of a robot, it may be referred to as a movable object because a position of a portion on an end effector side can be changed even if a base portion is fixed. The movable object may be referred to as a mobile object.

Moreover, the light emitting device 1 may be fixed and installed on the surface of anything such as the surface of an artificial structure such as land or a building. Land includes the bottom of water such as an ocean bottom or lake bottom, regardless of the topography of a flat surface or slope. Artificial structures such as buildings include civil engineering structures. The surface of the artificial structure includes the floor, walls, and ceiling of a building and the outer surface of a building. Buildings are not limited to those traded as real property, and also include those traded as movable property. Moreover, fixation is not limited to continuous fixation, and also includes temporary fixation.

In an example shown in FIG. 1, the light emitting system 100 includes a light emitting device 1-1 and a light emitting device 1-2 as the light emitting device 1. The light emitting device 1-1 transmits information by outputting the emission beam 51 to the light emitting device 1-2 and the light emitting device 1-2 receives information by receiving the emission beam 51 output from the light emitting device 1-1. Likewise, the light emitting device 1-2 transmits information by outputting the emission beam 51 to the light emitting device 1-1 and the light emitting device 1-1 receives information by receiving the emission beam 51 output from the light emitting device 1-2. Here, the physical object may be at least a part of a device that is the other party of communication. For example, at least a part of the light emitting device 1-2 may be a physical object for the light emitting device 1-1 and at least a part of the light emitting device 1-1 may be a physical object for the light emitting device 1-2.

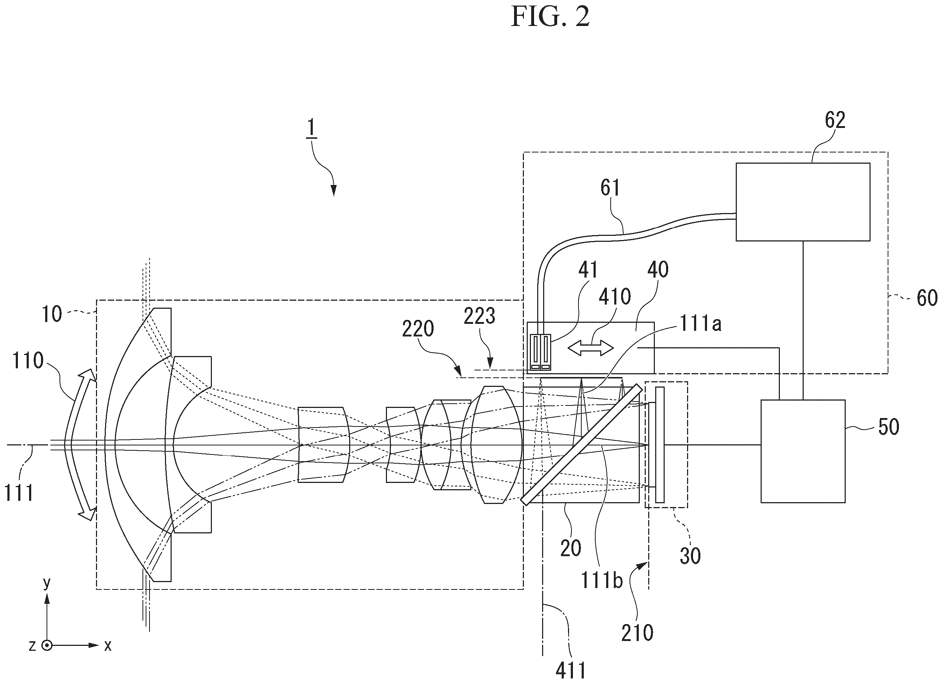

FIG. 2 is a schematic configuration diagram schematically showing a light emitting device according to the first embodiment. A functional configuration of the light emitting device 1 will be described with reference to FIG. 2. Furthermore, this description may be given using a three-dimensional xyz orthogonal coordinate system with an x-axis, a y-axis, and a z-axis.

As shown in FIG. 2, the light emitting device 1 includes an image forming optical system 10, an optical member 20, an imaging device 30, a position changing device 40, a control device 50, and a light generating device 60. The light emitting device 1 may not include the light generating device 60 or the light emitting device 1 and the light generating device 60 may be separate.

Furthermore, when the light emitting device 1 is represented as an example of the above-described light emitting device 1-1, the light emitting device 1 may be referred to as a light emitting device 1A. Moreover, when the image forming optical system 10, the optical member 20, the imaging device 30, the position changing device 40, the control device 50, and the light generating device 60 described above are represented as constituent elements of the light emitting device 1A, these constituent elements may be referred to as an image forming optical system 10A, an optical member 20A, an imaging device 30A, a position changing device 40A, a control device 50A, and a light generating device 60A, respectively. Likewise, when the light emitting device 1 is represented as an example of the above-described light emitting device 1-2, the light emitting device 1 may be referred to as a light emitting device 1B. When the image forming optical system 10, the optical member 20, the imaging device 30, the position changing device 40, the control device 50, and the light generating device 60 described above are represented as constituent elements of the light emitting device 1B, these constituent elements may be referred to as the image forming optical system 10B, an optical member 20B, an imaging device 30B, a position changing device 40B, a control device 50B, and a light generating device 60B, respectively.

Furthermore, in the three-dimensional xyz orthogonal coordinate system, the x-axis indicates a direction of an optical axis 111 of the image forming optical system 10 and a plane formed by the y-axis and the z-axis is a plane orthogonal to the optical axis 111 of the image forming optical system 10.

Constituent elements of the light emitting device 1 will be described as an example in which the light emitting device 1A and the light emitting device 1B perform optical wireless communication.

For example, the light emitting device 1A emits (transmits) light for optical wireless communication as the emission beam 51 to the light emitting device 1B serving as the physical object. Moreover, the light emitting device 1A receives light (an emission beam 51) for optical wireless communication output from the light emitting device 1B.

The light generating device 60A generates the light (the emission beam 51) emitted to the light emitting device 1B. The light (the emission beam 51) generated by the light generating device 60A is output toward the light emitting device 1B via the optical member 20A and the image forming optical system 10A. Furthermore, details of the optical member 20 and the image forming optical system 10 will be described below. Moreover, the light generating device 60A receives the light (the emission beam) output from the light emitting device 1B via the image forming optical system 10A and the optical member 20A.

The light generating device 60 includes a communication board 62, an optical fiber 61, and a light transmitting/receiving optical element 41 including at least a part of the optical fiber 61 as an example. Furthermore, the light transmitting/receiving optical element 41 may be referred to as a light transmitting/receiving optical member.

Furthermore, when the communication board 62, the optical fiber 61, and the light transmitting/receiving optical element 41 described above are represented as constituent elements of the light generating device 60A, these constituent elements may be referred to as a communication board 62A, an optical fiber 61A, and a light transmitting/receiving optical element 41A, respectively. Likewise, when the communication board 62, the optical fiber 61, and the light transmitting/receiving optical element 41 described above are represented as constituent elements of the light generating device 60B, these constituent elements may be referred to as a communication board 62B, an optical fiber 61B, and a light transmitting/receiving optical element 41B, respectively.

The communication board 62 converts one of an electrical signal for information communication and the light (the emission beam 51) for optical wireless communication into the other. For example, the communication board 62 generates the light (the emission beam 51) for performing optical wireless communication with the light emitting device 1B. The communication board 62A generates the light (the emission beam 51) for performing optical wireless communication by converting an electrical signal for information communication into the light (the emission beam 51). Moreover, for example, the communication board 62A receives the emission beam 51 output from the light emitting device 1B. The communication board 62A converts the emission beam 51 from the light emitting device 1B into an electrical signal. Furthermore, the communication board 62 may be referred to as an optical communication board.

The optical fiber 61 transmits the light (the emission beam 51) for performing optical wireless communication between the communication board 62 and the light transmitting/receiving optical element 41. For example, the optical fiber 61A transmits the light (the emission beam 51) generated by the communication board 62A from the communication board 62A to the light transmitting/receiving optical element 41A. Moreover, for example, the optical fiber 61A transmits the light (the emission beam 51) received by the light transmitting/receiving optical element 41A from the light emitting device 1B to the communication board 62A via the image forming optical system 10A and the optical member 20A.

The light transmitting/receiving optical element 41 outputs the light (the emission beam 51) input via the optical fiber 61 toward the optical member 20. Moreover, the light transmitting/receiving optical element 41 outputs the light (the emission beam 51) input via the image forming optical system 10 and the optical member 20 to the optical fiber 61. For example, the light transmitting/receiving optical element 41 includes at least an output end of the optical fiber 61 from which the light (the emission beam 51) from the communication board 62 is output.

For example, the light transmitting/receiving optical element 41A outputs the light (the emission beam 51) input from the communication board 62A via the optical fiber 61A toward the optical member 20. The light transmitting/receiving optical element 41A outputs the light (the emission beam 51) input from the light emitting device 1B via the image forming optical system 10A and the optical member 20A to the optical fiber 61A. Moreover, the light transmitting/receiving optical element 41 is arranged on the conjugate plane 220 optically conjugate to the image plane 210 of the image forming optical system 10 to be described below or near the conjugate plane 220. For example, as shown in FIG. 2, the light output end 223 on the optical member 20 side of the light transmitting/receiving optical element 41 is arranged slightly away from the conjugate plane 220 in a direction away from the optical member 20. Furthermore, the light output end 223 on the optical member 20 side of the light transmitting/receiving optical element 41 may be arranged on the conjugate plane 220 of the image forming optical system 10 or may be arranged slightly closer to the optical member 20 side of the conjugate plane 220.

For example, the light transmitting/receiving optical element 41 outputs the light (the emission beam 51) from the optical fiber 61 toward the optical member 20 via the conjugate plane 220 of the image forming optical system 10 and outputs the light (the emission beam 51) input via the conjugate plane 220 toward the optical fiber 61 through the image forming optical system 10 and the optical member 20. For example, the light transmitting/receiving optical element 41 is configured to receive the light (the emission beam 51) input through an optical path identical to an optical path until the light (the emission beam 51) output by the image forming optical system 10 is output from the light transmitting/receiving optical element 41 through the conjugate plane 220 and the optical member 20 by the image forming optical system 10 in a stationary state. Furthermore, the light transmitting/receiving optical element 41 may be configured to receive the light (the emission beam 51) input through an optical path different from an optical path until the light (the emission beam 51) output by the image forming optical system 10 is output from the light transmitting/receiving optical element 41 through the conjugate plane 220 and the optical member 20 by the image forming optical system 10. The light transmitting/receiving optical element 41 may include at least one optical member. The configuration of the light transmitting/receiving optical element 41 will be described below.

Furthermore, the light transmitting/receiving optical element 41 may be referred to as a light outputting portion or a light outputting device because the light transmitting/receiving optical element 41 outputs the light (the emission beam 51) to the optical member 20. Moreover, the light transmitting/receiving optical element 41 may be referred to as a light receiving portion or a light receiving device because the light transmitting/receiving optical element 41 receives the light (the emission beam 51) from the optical member 20. Moreover, the light transmitting/receiving optical element 41 may be referred to as a light transmitting/receiving portion or a light transmitting/receiving device because the light transmitting/receiving optical element 41 outputs the light (the emission beam 51) to the optical member 20 and receives the light (the emission beam 51) from the optical member 20.

Furthermore, the present invention is not limited to the light transmitting/receiving optical element 41 and at least one of the communication board 62, the optical fiber 61, the optical member 20, and the image forming optical system 10 may be referred to as a light outputting portion or a light outputting device. That is, it can be said that the light emitting device 1 includes a light outputting portion or a light outputting device that outputs the emission beam 51. Furthermore, the light generating device 60 may be referred to as a light outputting portion or a light outputting device. Furthermore, the light emitting device 1 may be referred to as a light outputting portion or a light outputting device.

Furthermore, the present invention is not limited to the light transmitting/receiving optical element 41 and at least one of the image forming optical system 10, the optical member 20, the optical fiber 61, and the communication board 62 may be referred to as a light receiving portion or a light receiving device. That is, it can be said that the light emitting device 1 includes a light receiving portion or a light receiving device that receives the emission beam 51. Furthermore, the light generating device 60 may be referred to as a light receiving portion or a light receiving device. Furthermore, the light emitting device 1 may be referred to as a light receiving portion or a light receiving device.

Furthermore, the present invention is not limited to the light transmitting/receiving optical element 41, and at least one of the image forming optical system 10, the optical member 20, the optical fiber 61, and the communication board 62 may be referred to as a light transmitting/receiving portion or a light transmitting/receiving device. That is, it can be said that the light emitting device 1 includes a light transmitting/receiving portion or a light transmitting/receiving device that outputs the emission beam 51 and receives the emission beam 51. Furthermore, the light generating device 60 may be referred to as a light transmitting/receiving portion, a light transmitting/receiving device, a photoelectric conversion portion, or a photoelectric conversion device. Furthermore, the light emitting device 1 may be referred to as a light transmitting/receiving portion or a light transmitting/receiving device.

The light emitting device 1 may not include at least one of the communication board 62, the optical fiber 61, and the light transmitting/receiving optical element 41 of the light generating device 60 or the light emitting device 1 may be separate from at least one of the communication board 62, the optical fiber 61, and the light transmitting/receiving optical element 41.

The image forming optical system 10 forms a reduced image of at least a part of the physical object on the image plane 210. In the present embodiment in which the light emitting system 100 performs optical wireless communication, the physical object may be at least a part of a device serving as the other party of the communication, i.e., the light emitting device 1, as described above. The image forming optical system 10 may form a reduced image of at least a part of the light emitting device 1 of the other party for performing the optical wireless communication on the image plane 210. Moreover, the image forming optical system 10 may output the light (the emission beam 51) for performing the optical wireless communication output from the optical member 20 via the light transmitting/receiving optical element 41 toward the light emitting device 1 of the other party. Moreover, the image forming optical system 10 may receive the emission beam 51 from the light emitting device 1 of the other party and output the emission beam 51 toward the optical member 20. For example, the image forming optical system 10A may form a reduced image of at least a part of the light emitting device 1B on the image plane 210. Moreover, the image forming optical system 10A may output the light (the emission beam 51) for performing the optical wireless communication output from the optical member 20A via the light transmitting/receiving optical element 41A toward the light emitting device 1B. Moreover, the image forming optical system 10A may receive the emission beam 51 from the light emitting device 1B and output the emission beam 51 toward the optical member 20A.

The imaging device 30 is arranged near the image plane 210 of the image forming optical system 10. The imaging device 30 captures a reduced image of at least a part of the physical object formed on the image plane 210. The imaging device 30 includes an imaging element 31 having a plurality of pixels arranged on the imaging plane. It can be said that the imaging element 31 captures a reduced image of at least a part of the physical object formed on the image plane 210. For example, the imaging plane of the imaging element 31 may be arranged on the image plane 210 of the image forming optical system 10. Moreover, the imaging plane of the imaging element 31 may not be arranged on the image plane 210 of the image forming optical system 10 or may be arranged near the image plane 210. Furthermore, the imaging element 31 may be an imaging element capable of outputting color image data (e.g., an RGB image sensor) or an imaging element capable of outputting monochrome image data (e.g., a monochrome image sensor).

Furthermore, the image forming optical system 10 may not form a reduced image of at least a part of the physical object on the image plane 210. For example, the image forming optical system 10 may be configured to form a magnified image or an unmagnified image of at least a part of the physical object on the image plane 210.

An angle of view of the image forming optical system 10 is preferably a wide angle. For example, a maximum angle of view of the image forming optical system 10 is preferably 170° or more. Furthermore, a maximum angle of view on the physical object side of the image forming optical system 10 may be less than 170° or may be, for example, 60°.

Furthermore, the angle of view of the image forming optical system 10 may be approximately 180°. When the image forming optical system 10 has an angle of view of approximately 180°, an omnidirectional camera can be configured by arranging two light emitting devices 1 in directions between which there is a difference of 180° and facing opposite to each other.

The image forming optical system 10 may be telecentric on the conjugate plane 220 side.

To make the image forming optical system 10 telecentric on the conjugate plane 220 side, an aperture diaphragm (not shown) may be provided at a predetermined position as an example. This aperture diaphragm may not be provided in the image forming optical system 10. Moreover, the image forming optical system 10 may be made telecentric on the conjugate plane 220 side by limiting a valid diameter of a predetermined lens constituting the image forming optical system 10 to a predetermined size.

Moreover, the image forming optical system 10 may be non-telecentric on the physical object side.

To make the image forming optical system 10 non-telecentric on the physical object side, an aperture diaphragm (not shown) may be provided at a predetermined position as an example. This aperture diaphragm may not be provided in the image forming optical system 10. Moreover, the image forming optical system 10 may be made non-telecentric on the physical object side by limiting a valid diameter of a predetermined lens constituting the image forming optical system 10 to a predetermined size.

Moreover, the image forming optical system 10 may include a plurality of optical members. The plurality of optical members provided in the image forming optical system 10 may include well-known optical members. For example, the image forming optical system 10 may include a plurality of lens members or may include at least one lens member and at least one reflective member.

The optical member 20 is arranged on the image plane 210 side of the image forming optical system 10 and divides an optical path of the image forming optical system 10. Here, the image forming optical system 10 forms the image plane 210 and the conjugate plane 220 on optical paths into which the optical path is divided by the optical member 20, respectively. When the image plane 210 formed by the image forming optical system 10 is designated as a first image plane, the conjugate plane 220 may be referred to as a second image plane formed by the image forming optical system 10. The optical member 20 divides the optical path of the image forming optical system 10 into an optical path on the image plane 210 side of the image forming optical system 10 (an optical path from the optical member 20 to the image plane 210 when viewed from the physical object side) and an optical path on the conjugate plane 220 side of the image forming optical system 10 (an optical path from the optical member 20 to the conjugate plane 220 when viewed from the physical object side). The optical member 20 outputs light from the image forming optical system 10 along the optical path on the image plane 210 side, for example, to form a reduced image of at least a part of the physical object on the image plane 210. Moreover, the optical member 20 receives the light (the emission beam 51) for optical wireless communication output from the light transmitting/receiving optical element 41 along the optical path on the conjugate plane 220 side and outputs the light (the emission beam 51) toward the image forming optical system 10. Here, for example, the light transmitting/receiving optical element 41 is arranged near the conjugate plane 220. That is, it can be said that the optical member 20 outputs the light (the emission beam 51) from the light transmitting/receiving optical element 41 (i.e., the light generating device 60) input via the conjugate plane 220 toward the image forming optical system 10. Even if the light output end 223 of the light transmitting/receiving optical element 41 is arranged on the conjugate plane 220 or the light output end 223 is arranged slightly closer to the optical member 20 side of the conjugate plane 220, a process in which the optical member 20 outputs the light (the emission beam 51) from the light transmitting/receiving optical element 41 (i.e., the light generating device 60) input via the conjugate plane 220 toward the image forming optical system 10 is considered. Moreover, the optical member 20 outputs the light (the emission beam 51) for optical wireless communication input via the image forming optical system 10 along the optical path on the conjugate plane 220 side (toward the light transmitting/receiving optical element 41).

The optical member 20 may be, for example, a half mirror. In this case, the optical member 20 transmits about 50% of the light from the image forming optical system 10 for forming a reduced image of at least a part of the physical object on the image plane 210 and outputs the light along the optical path on the image plane 210 side. Moreover, the optical member 20 reflects about 50% of the light (the emission beam 51) for optical wireless communication output from the light transmitting/receiving optical element 41 along the optical path on the conjugate plane 220 side and outputs the light toward the image forming optical system 10. Moreover, approximately 50% of the light (the emission beam 51) for optical wireless communication input via the image forming optical system 10 is reflected and output along the optical path on the conjugate plane 220 side (toward the light transmitting/receiving optical element 41).

The optical member 20 is not limited to a half mirror. The optical member 20 may be a reflective member having a reflectance other than 50%. Moreover, the optical member 20 may be a dichroic mirror. In this case, the dichroic mirror may determine a wavelength of light so that the light (the emission beam 51) for optical wireless communication is reflected and the light from the image forming optical system 10 is transmitted to form a reduced image of at least a part of the physical object on the image plane 210. Moreover, the optical member 20 may be a polarizing beam splitter. Furthermore, the optical member 20 may be referred to as a beam splitter because the optical member 20 divides the optical path.

Furthermore, the conjugate plane 220 is located on the opposite side (the image plane 210 side) from the physical object side of the image forming optical system 10 and is a plane conjugate to the image plane 210. That is, in the image forming optical system 10, the image plane 210 and the conjugate plane 220 are conjugate. Furthermore, the image plane 210 may be referred to as a first conjugate plane and the conjugate plane 220 may be referred to as a second conjugate plane. Furthermore, a negative x-axis side of the image forming optical system 10 may be referred to as the physical object side and a positive x-axis side thereof may be referred to as the image plane 210 side or the conjugate plane 220 side.

Although the x-axis side of the optical member 20 is described as the image plane 210 and the y-axis side of the optical member 20 is described as the conjugate plane 220 in the present embodiment, a configuration in which the image plane 210 and the conjugate plane 220 are reversed may be adopted. That is, the y-axis side of the optical member 20 may be the image plane 210 and the x-axis side of the optical member 20 may be the conjugate plane 220.

The position changing device 40 changes an emission position of the emission beam 51 output by the image forming optical system 10. Specifically, the position changing device 40 may include a drive portion for changing the position of the emission beam 51 from the light generating device 60 on the conjugate plane 220. The position changing device 40 may be a drive device for changing the position of the emission beam 51 from the light generating device 60 on the conjugate plane 220. The position changing device 40 changes the position of the emission beam 51 from the light generating device 60 on the conjugate plane 220 so that an emission position of the emission beam 51 output by the image forming optical system 10 is changed. Furthermore, if the position of the emission beam 51 from the light generating device 60 on the conjugate plane 220 changes, a position where the emission beam 51 is input to the image forming optical system 10 via the optical member 20 changes. As the input position of the emission beam 51 from the optical member 20 side to the image forming optical system 10 changes, the emission position of the emission beam 51 output by the image forming optical system 10 changes. Furthermore, it can be said that the position changing device 40 changes the position of the emission beam 51 from the light generating device 60 on the conjugate plane 220 so that the emission direction of the emission beam 51 output by the image forming optical system 10 is changed.

The position changing device 40 may be a drive device configured to move at least one of the light transmitting/receiving optical element 41, the optical member 20, the image forming optical system 10, and the imaging device 30. The position changing device 40 may be a drive device configured to move the light transmitting/receiving optical element 41 with respect to the optical member 20, the image forming optical system 10, and the imaging device 30. In this case, the position changing device 40 may be a well-known drive device such as a linear motor or a stepping motor capable of moving the light transmitting/receiving optical element 41. Furthermore, the position changing device 40 may be a drive device configured to move the optical member 20, the image forming optical system 10, and the imaging device 30 with respect to the light transmitting/receiving optical element 41.

For example, the position changing device 40 may move the light transmitting/receiving optical element 41 in a direction intersecting the optical axis 111 of the image forming optical system 10 (e.g., in a direction of an arrow 410 shown in FIG. 2, the x-axis direction, or the z-axis direction). For example, when the image forming optical system 10 is configured to be telecentric on the image side, it is possible to represent that the position changing device 40 moves the light transmitting/receiving optical element 41 in a direction intersecting the optical axis 111 on the light transmitting/receiving optical element 41 side of the image forming optical system 10. "Moving the light transmitting/receiving optical element 41 in a direction intersecting the optical axis 111 of the image forming optical system 10" may be in a direction orthogonal to the optical axis 411 or may be in an intersection direction at an angle other than a right angle. Moreover, it is possible to represent that the position changing device 40 moves the light transmitting/receiving optical element 41 in a direction parallel to the conjugate plane 220. Here, an optical axis from the optical member 20 to the conjugate plane 220 within optical axes 111 of the image forming optical system 10 can be referred to as an optical axis 111a and an optical axis from the optical member 20 to the image plane 210 can be referred to as an optical axis 111b. Furthermore, the optical axis 111a may be referred to as an optical axis on the conjugate plane 220 side of the image forming optical system 10. Moreover, the optical axis 111b may be referred to as an optical axis on the image plane 210 side of the image forming optical system 10. In this case, it can be said that the position changing device 40 moves the light transmitting/receiving optical element 41 in a direction intersecting the optical axis 111a. Moreover, it can be said that the position changing device 40 moves the light transmitting/receiving optical element 41 in a direction orthogonal to the optical axis 111a. Moreover, it can be said that the position changing device 40 changes the position of the light transmitting/receiving optical element 41 on a plane intersecting the optical axis 111a. Moreover, it can be said that the position changing device 40 changes the position of the light transmitting/receiving optical element 41 on a plane orthogonal to the optical axis 111a. The position changing device 40 may move the light transmitting/receiving optical element 41 as described above so that a position of the emission beam 51 from the light generating device 60 (the light transmitting/receiving optical element 41) on the conjugate plane 220 is changed. The position changing device 40 is not limited to the light transmitting/receiving optical element 41 and the position of the emission beam 51 from the light generating device 60 on the conjugate plane 220 may be changed by moving the whole of the light generating device 60 as described above. Furthermore, because the light transmitting/receiving optical element 41 can be considered as the light outputting portion as described above, the optical axis 111a may be referred to as an optical axis on the light outputting portion side of the image forming optical system 10. Moreover, because the light transmitting/receiving optical element 41 can be considered as the light receiving portion as described above, the optical axis 111a may be referred to as an optical axis on the light receiving portion side of the image forming optical system 10. Furthermore, because the light transmitting/receiving optical element 41 can be considered as the light transmitting/receiving portion as described above, the optical axis 111a may be referred to as an optical axis on the light transmitting/receiving portion side of the image forming optical system 10.

The position changing device 40 moves the emission position of the emission beam 51 in a direction of an arrow 110, for example, by moving the light transmitting/receiving optical element 41 in the direction of the arrow 410.

Moreover, the position changing device 40 changes a light reception position of the light (the emission beam 51) for optical wireless communication output from the light emitting device 1 of the other party for performing the optical wireless communication. Furthermore, the light reception position may be referred to as a position where the light (the emission beam 51) from the light emitting device 1 of the other party for performing optical wireless communication is input to the image forming optical system 10. Moreover, the light reception position may be referred to as the position of the light transmitting/receiving optical element 41 in a direction orthogonal to the optical axis 111a. For example, the position changing device 40 changes the light reception position of the light (the emission beam 51) for optical wireless communication by moving the light transmitting/receiving optical element 41 in the direction intersecting the optical axis 111a as described above. When the position changing device 40 moves the light transmitting/receiving optical element 41 in a direction intersecting the optical axis 111a, an optical path from the image forming optical system 10 to the light transmitting/receiving optical element 41 changes. By changing an optical path from the image forming optical system 10 to the light transmitting/receiving optical element 41, the light reception position of the light (the emission beam 51) for optical wireless communication changes. Furthermore, the position changing device 40 may move the light transmitting/receiving optical element 41 in a direction orthogonal to the optical axis 111a. Moreover, the position changing device 40 may change the position of the light transmitting/receiving optical element 41 on a plane intersecting the optical axis 111a. Moreover, the position changing device 40 may change the position of the light transmitting/receiving optical element 41 in a plane orthogonal to the optical axis 111a. The position changing device 40 may change the light reception position of the light (the emission beam 51) for optical wireless communication by moving the light transmitting/receiving optical element 41 as described above. Furthermore, the position changing device 40 may change the light reception position of the light (the emission beam 51) for optical wireless communication by moving the whole of the light generating device 60 as described above. Furthermore, it can be said that the position changing device 40 changes the light reception direction of the light (the emission beam 51) for optical wireless communication by moving the light transmitting/receiving optical element 41 as described above.

Furthermore, the position changing device 40 may move the optical member 20 in a direction intersecting the optical axis 111a of the image forming optical system 10 with respect to the light transmitting/receiving optical element 41. Even in this case, it can be said that the position changing device 40 changes the position of the emission beam 51 from the light generating device 60 on the conjugate plane 220. The position changing device 40 may move the optical member 20, the image forming optical system 10, and the imaging device 30 integrally in the direction intersecting the optical axis 111a of the image forming optical system 10 with respect to the light transmitting/receiving optical element 41. Moreover, the position changing device 40 may move the light transmitting/receiving optical element 41 and the optical member 20 separately in the direction intersecting the optical axis 11 1a of the image forming optical system 10. Even in this case, it can be said that the position changing device 40 changes the position of the emission beam 51 from the light generating device 60 on the conjugate plane 220. The position changing device 40 may move the optical member 20, the image forming optical system 10, and the imaging device 30 in an integrated manner in a direction intersecting the optical axis 111a of the image forming optical system 10.

The control device 50 controls the imaging device 30 so that the imaging device 30 captures at least a part of the image of the physical object. Moreover, the control device 50 controls the position changing device 40 on the basis of imaging results of the imaging device 30. It can be said that the control device 50 causes the light transmitting/receiving optical element 41 to be moved by the position changing device 40 on the basis of the imaging results of the imaging device 30. On the basis of a position of at least a part of the physical object on the image acquired in an imaging process of the imaging device 30, the control device 50 controls the position changing device 40 so that the emission beam 51 output by the image forming optical system 10 is input to the image forming optical system 10 of the light emitting device 1 of the other party for performing optical wireless communication (i.e., the image forming optical system 10 of the light emitting device 1 of the other party is at the emission position of the emission beam 51).

Here, a position of the light transmitting/receiving optical element 41 in a direction intersecting the optical axis 111a (i.e., a position of the emission beam 51 on the conjugate plane 220) and a position on the image acquired by the imaging device 30 may be associated in advance. For example, the position on the image acquired by the imaging device 30 is associated with the emission position of the emission beam 51, such that the position of the light transmitting/receiving optical element 41 in the direction intersecting the optical axis 111a may be associated with the position on the image acquired by the imaging device 30. As described above, the emission position of the emission beam 51 is determined by the position of the emission beam 51 from the light generating device 60 on the conjugate plane 220, i.e., the position of the light transmitting/receiving optical element 41 in the direction intersecting the optical axis 111a. Therefore, the position on the image acquired by the imaging device 30 is associated with the emission position of the emission beam 51, such that the position of the light transmitting/receiving optical element 41 in the direction intersecting the optical axis 111a can be associated with the position on the image acquired by the imaging device 30. Furthermore, an association method will be described below.

The position of the light transmitting/receiving optical element 41 in the direction intersecting the optical axis 111a is associated with the position on the image acquired by the imaging device 30, such that the emission beam 51 can be more accurately emitted to a target position within physical objects recognized on the image acquired by the imaging device 30. Therefore, the control device 50 controls the position changing device 40 on the basis of the position of at least a part of the physical object on the image acquired by the imaging device 30, such that the emission beam 51 output by the image forming optical system 10 can be more accurately input to the image forming optical system 10 of the light emitting device 1 of the other party for performing optical wireless communication.

A position on the image acquired by the imaging device 30 may be referred to as a position on the imaging plane of the imaging element 31 of the imaging device 30 or may be referred to as a pixel position of the imaging element 31.

For example, the control device 50A may control the position changing device 40A (or may move the light transmitting/receiving optical element 41A) so that the emission beam 51 output by the image forming optical system 10A is input to the image forming optical system 10B (i.e., so that the image forming optical system 10B is at the emission position of the emission beam 51 output by the image forming optical system 10A) on the basis of a position of at least a part of the light emitting device 1B serving as a physical object on an image acquired in an imaging process of the imaging device 30A.

The control device 50 may control the position changing device 40 on the basis of a feature location of the physical object detected on the basis of imaging results of the imaging device 30. The feature location of the physical object may be at least a part of the physical object. The feature location of the physical object may be a marker arranged in the light emitting device 1 of the other party for performing optical wireless communication serving as the physical object. In this case, a positional relationship between the marker arranged in the light emitting device 1 of the other party for performing optical wireless communication and the target position where the emission beam 51 in the light emitting device 1 of the other party is emitted (e.g., the image forming optical system 10 of the light emitting device 1 of the other party) may be known.

Furthermore, the marker serving as the feature location of the physical object may be a well-known marker such as a one-dimensional barcode, a QR code (registered trademark), or an AR marker provided in the light emitting device 1 of the other party for performing optical wireless communication.

Moreover, the marker serving as the feature location of the physical object may be a location of light emission by a light emitting portion such as an LED provided in the light emitting device 1 of the other party for optical wireless communication or may be a flashing pattern of the light emitting portion. Furthermore, the light emitting portion is not limited to the LED and may be another existing light emitting element or may be a light emitting device including a plurality of light emitting elements.

Furthermore, the flashing pattern of the light emitting portion may be a pattern based on a specific rule like a Morse code.

Furthermore, the flashing pattern of the light emitting portion may change with a position of the light transmitting/receiving optical element 41 in the direction intersecting the optical axis 11 1a in the light emitting device 1 of the other party in which the light emitting portion is provided. For example, in accordance with a change in the position of the light transmitting/receiving optical element 41 in the direction intersecting the optical axis 11 1a in the light emitting device 1 of the other party in which the light emitting portion is provided, at least one of a flashing interval of the light emitting portion, a light emission intensity when the light emitting portion is turned on, and the like may be changed (i.e., a flashing pattern may be changed). Furthermore, a predetermined flashing pattern (e.g., at least one of a predetermined flashing interval and a predetermined light emission intensity) of the light emitting portion may be referred to as a state of the marker. A change in the flashing pattern of the light emitting portion may be referred to as a change in the state of the marker.

Moreover, the marker serving as the feature location of the physical object may be a marker displayed on a display portion provided in the light emitting device 1 of the other party for performing optical wireless communication. The marker displayed on the display portion may be a well-known marker such as a one-dimensional barcode, a QR code (registered trademark), or an AR marker. The marker displayed on the display portion may change with the position of the light transmitting/receiving optical element 41 in the direction intersecting the optical axis 11 1a in the light emitting device 1 of the other party including the display portion. For example, in accordance with a change in the position of the light transmitting/receiving optical element 41 in the direction intersecting the optical axis 11 1a in the light emitting device 1 of the other party in which the display portion is provided, at least one of the shape and color of the marker displayed in the display portion may be changed (i.e., the marker displayed in the display portion may be changed). Furthermore, the display portion may be an existing display such as a liquid crystal display. Furthermore, the state of the display of the display portion (e.g., at least one of the shape of the predetermined marker and the color of the predetermined marker) may be referred to as the state of the marker. A change in the display state of the display portion (e.g., a change in at least one of the shape of the marker and the color of the marker) may be referred to as a change in the state of the marker.

Furthermore, the marker serving as a feature location of the physical object may be any well-known marker capable of being recognized on the image acquired by the imaging device 30.

Moreover, the feature location of the physical object may be at least one of edges, contours, and textures of at least a part of the light emitting device 1 of the other party for performing optical wireless communication. In this case, a positional relationship between at least one of the edges, contours, and textures of at least the part of the light emitting device 1 of the other party for performing optical wireless communication and the target position where the emission beam 51 of the light emitting device 1 of the other party is emitted may be known.

Furthermore, the feature location of the physical object may be at least a part of the image forming optical system 10 of the light emitting device 1 of the other party for performing optical wireless communication. In this case, at least a part of the image forming optical system 10 may be at least a part of the optical member closest to the physical object side of the plurality of optical members constituting the image forming optical system 10 (i.e., at least a part of the optical member arranged at the farthest position from the imaging device 30 among the plurality of optical members constituting the image forming optical system 10).

Furthermore, the feature location of the physical object may be at least a part of a protective member covering the physical object side of the image forming optical system 10 of the light emitting device 1 of the other party for performing optical wireless communication. Furthermore, the protective member covering the physical object side of the image forming optical system 10 can be considered as a part of the image forming optical system 10. This protective member may be a light transmitting member transmitting light (the emission beam 51) for performing optical wireless communication.

The control device 50 may identify a position of at least a part of the physical object on the image acquired by the imaging device 30 according to image processing using a template matching method, an active search method, a mean shift method, a particle filter method, or the like. The position of the feature location is identified. The control device 50 may identify a position of at least a part of the physical object on the image acquired by the imaging device 30 according to image processing using machine learning such as deep learning. In this case, when the acquired image is input, an inference device (referred to as an inference model) that outputs a position on the image of at least a part of the physical object to be identified may be generated in advance using machine learning.

The control device 50 may identify a position of at least a part of the physical object on the image by inputting the image acquired by the imaging device 30 to the inference device and acquiring the position of at least a part of the physical object on the image output from the inference device.

The position of at least the part of the physical object on the image acquired by the imaging device 30 identified by the control device 50 in the above-described image processing may be the position of the feature location of the physical object on the image.

On the basis of the identified position on the image of the feature location, the control device 50 moves the light transmitting/receiving optical element 41 so that the emission beam 51 output by the image forming optical system 10 is input to the light emitting device 1 of the other party for performing optical wireless communication. The light transmitting/receiving optical element 41 emits the emission beam 51 to the light emitting device 1 of the other party for performing optical wireless communication by transmitting the light (the emission beam 51) at the position after movement.

For example, in the above-described image processing, the position of the marker provided in the light emitting device 1 of the other party is identified on the image acquired by the imaging device 30. The control device 50 may control the position changing device 40 (or may move the light transmitting/receiving optical element 41) so that the emission beam 51 output from the light emitting device 1 is input to the image forming optical system 10 of the light emitting device 1 of the other party on the basis of the identified position on the image of the marker and the positional relationship between marker and the image forming optical system 10 of the light emitting device 1 of the other party that is a target to which the emission beam 51 is emitted.

Furthermore, in this case, a position of the light transmitting/receiving optical element 41 in a direction intersecting the optical axis 111a in the light emitting device 1 of the other party may be predetermined so that the emission beam 51 input at a specific position of the image forming optical system 10 of the light emitting device 1 of the other party is input to the light transmitting/receiving optical element 41 of the light emitting device 1 of the other party. Here, the light input at a specific position of the image forming optical system 10 of the light emitting device 1 is moved along a specific optical path and input to a specific position on the conjugate plane 220 via the optical member 20. That is, an input position of light for the conjugate plane 220 is determined by an input position of light for the image forming optical system 10 of the light emitting device 1. Therefore, when the light transmitting/receiving optical element 41 is positioned so that the light input to a specific position of the conjugate plane 220 is input to the light transmitting/receiving optical element 41, the light input to a specific position of the image forming optical system 10 can be received by the light transmitting/receiving optical element 41. The control device 50 may control the position changing device 40 so that the emission beam 51 output from the light emitting device 1 is input to a specific position of the image forming optical system 10 of the light emitting device 1 of the other party (i.e., the light transmitting/receiving optical element 41 of the light emitting device 1 of the other party) on the basis of a position on the image of the marker provided in the light emitting device 1 of the other party, a positional relationship between the image forming optical system 10 of the light emitting device 1 of the other party and the marker, and a specific position of the image forming optical system 10 of the light emitting device 1 of the other party for inputting the emission beam 51. Furthermore, the specific position of the image forming optical system 10 of the light emitting device 1 of the other party may be a center of an optical member closest to the physical object side among the plurality of optical members constituting the image forming optical system 10 or may be a position only a known distance away from the center.

Moreover, the control device 50 may detect the state of the marker of the light emitting device 1 of the other party on the basis of imaging results of the imaging device 30 and identify a position of the light transmitting/receiving optical element 41 in a direction intersecting the optical axis 111a in the light emitting device 1 of the other party on the basis of the detected state of the marker. Here, if the position of the light transmitting/receiving optical element 41 in the direction intersecting the optical axis 11 1a in the light emitting device 1 of the other party can be identified, the input position for the image forming optical system 10 of the light emitting device 1 of the other party for inputting the emission beam 51 to the light transmitting/receiving optical element 41 can be identified. Therefore, the control device 50 may control the position changing device 40 so that the emission beam 51 output from the light emitting device 1 is input to the light transmitting/receiving optical element 41 of the light emitting device 1 of the other party on the basis of a position of the marker of the light emitting device 1 of the other party on the image acquired by the imaging device 30 identified in the above-described image processing, a positional relationship between the marker and the image forming optical system 10 of the light emitting device 1 of the other party, and an input position for the image forming optical system 10 of the light emitting device 1 of the other party identified on the basis of a state of the detected marker. Furthermore, a relationship between the position of the light transmitting/receiving optical element 41 in the direction intersecting the optical axis 111a in the light emitting device 1 of the other party and the input position for the image forming optical system 10 of the light emitting device 1 of the other party for inputting the emission beam 51 to the light transmitting/receiving optical element 41 may be obtained in advance. Furthermore, when a flashing pattern of the light emitting portion (e.g., at least one of a flashing interval and a light emission intensity when the light emitting portion is turned on) is detected as the state of the marker provided in the light emitting device 1 of the other party, the control device 50 may detect the flashing pattern of the light emitting portion on the basis of a plurality of images (i.e., a plurality of images having imaging times different from each other) acquired by the imaging device 30 at a predetermined frame rate. Furthermore, when a display state of the display portion as the state of the marker (e.g., at least one of a shape of the marker and a color of a predetermined marker) is detected, the control device 50 may detect the display state of the display portion on the basis of the image acquired by the imaging device 30.

For example, as described above, the control device 50A of the light emitting device 1A may control the position changing device 40A so that the emission beam 51 output from the light emitting device 1A is input to the image forming optical system 10B on the basis of the position of the marker of the light emitting device 1B on the image acquired by the imaging device 30A identified in the above-described image processing. Here, as described above, the positional relationship between the marker and the image forming optical system 10, which is a target to which the emission beam 51 is emitted, may be known. The control device 50A may control the position changing device 40A so that the emission beam 51 output from the light emitting device 1A is input to the light transmitting/receiving optical element 41B (i.e., the communication board 62B) via the image forming optical system 10B on the basis of the position of the marker of the light emitting device 1B on the image and the positional relationship between the marker and the image forming optical system 10B that is a target to which the emission beam 51 is emitted. Furthermore, the control device 50B of the light emitting device 1B may control the position changing device 40B (or move the light transmitting/receiving optical element 41B) so that the emission beam 51 input from the light emitting device 1A to the image forming optical system 10B is input to the light transmitting/receiving optical element 41B. For example, the control device 50B may control the position changing device 40B so that the emission beam 51 input from the light emitting device 1A to the image forming optical system 10B is input to the light transmitting/receiving optical element 41B on the basis of the position of the marker of the light emitting device 1A on the image acquired by the imaging device 30B identified in the above-described image processing. In this case, the present invention is not limited to the emission of the emission beam 51 from the light emitting device 1A and the control device 50B may emit the emission beam 51 so that the emission beam 51 is input to the light transmitting/receiving optical element 41A (i.e., the communication board 62A) of the light emitting device 1A.

Furthermore, the control device 50B of the light emitting device 1B may control the position changing device 40B so that the emission beam 51 output from the light emitting device 1B is input to the image forming optical system 10A on the basis of the position of the marker of the light emitting device 1A on the image acquired by the imaging device 30B identified in the above-described image processing. Here, a positional relationship between the marker and the image forming optical system 10A, which is a target to which the emission beam 51 is emitted, may be known as described above. The control device 50B may control the position changing device 40B so that the emission beam 51 output from the light emitting device 1B is input to the light transmitting/receiving optical element 41A (i.e., the communication board 62A) through the image forming optical system 10A on the basis of a position of a marker of the light emitting device 1A on the image and a positional relationship between the marker and the image forming optical system 10A, which is a target to which the emission beam 51 is emitted. Furthermore, the control device 50A of the light emitting device 1A may control the position changing device 40A so that the emission beam 51 input from the light emitting device 1B to the image forming optical system 10A is input to the light transmitting/receiving optical element 41A. For example, the control device 50A may control the position changing device 40A so that the emission beam 51 input from the light emitting device 1B to the image forming optical system 10A is input to the light transmitting/receiving optical element 41A on the basis of the position of the marker of the light emitting device 1B on the image acquired by the imaging device 30A identified in the above-described image processing. In this case, the present invention is not limited to the emission of the emission beam 51 from the light emitting device 1B and the control device 50A may emit the emission beam 51 so that the emission beam 51 is input to the light transmitting/receiving optical element 41B (i.e., the communication board 62B) of the light emitting device 1B.

Furthermore, when the light transmitting/receiving optical element 41A is stopped in the direction intersecting the optical axis 11 1a of the light emitting device 1A and the light transmitting/receiving optical element 41B is stopped in the direction intersecting the optical axis 111a of the light emitting device 1B in a state in which the emission beam 51 from the light emitting device 1A is input to the light transmitting/receiving optical element 41B through the image forming optical system 10B, the emission beam 51 from the light transmitting/receiving optical element 41B is output through an optical path similar to an optical path until the emission beam 51 from the light emitting device 1A input from the image forming optical system 10B is received by the light transmitting/receiving optical element 41B through the optical member 20B and the conjugate plane 220. Therefore, when the position changing device 40A is controlled by the control device 50A so that the emission beam 51 output from the light emitting device 1A is input to the light transmitting/receiving optical element 41B through the image forming optical system 10B, the control device 50B does not need to control the position changing device 40B (i.e., the light transmitting/receiving optical element 41B may not be moved in a state in which the emission beam 51 from the light emitting device 1A is input to the light transmitting/receiving optical element 41B) and the emission beam 51 output from the light emitting device 1B is input to the light transmitting/receiving optical element 41A. In contrast, when the position changing device 40B is controlled by the control device 50B so that the emission beam 51 output from the light emitting device 1B is input to the light transmitting/receiving optical element 41A through the image forming optical system 10A, the control device 50A does not need to control the position changing device 40A and the emission beam 51 output from the light emitting device 1A is input to the light transmitting/receiving optical element 41B.

Furthermore, the control device 50B may determine the position of the light transmitting/receiving optical element 41B to which the emission beam 51 input from the light emitting device 1A to the image forming optical system 10B is input without using imaging results of the imaging device 30B. For example, the control device 50B may determine the position of the light transmitting/receiving optical element 41B by controlling the position changing device 40B and detecting the reception state of the emission beam 51 in the communication board 62B while moving the light transmitting/receiving optical element 41B. In this case, the position of the light transmitting/receiving optical element 41B in the direction intersecting the optical axis 111a of the light emitting device 1B may be designated as the position when the control device 50B detects that the emission beam 51 from the light emitting device 1A has been received by the communication board 62B. In this case, in a state in which the control device 50A has emitted the emission beam 51 to the light transmitting/receiving optical element 41B, the control device 50B may emit the emission beam 51 to the light transmitting/receiving optical element 41A. Furthermore, the control device 50A may determine a position where the emission beam 51 input from the light emitting device 1B to the image forming optical system 10A is input to the light transmitting/receiving optical element 41A without using imaging results of the imaging device 30A. For example, the control device 50A may determine the position of the light transmitting/receiving optical element 41A by controlling the position changing device 40A and detecting the reception state of the emission beam 51 in the communication board 62A while moving the light transmitting/receiving optical element 41A. In this case, the position of the light transmitting/receiving optical element 41A in the direction intersecting the optical axis 111a of the light emitting device 1A may be designated as a position when the control device 50A detects that the emission beam 51 from the light emitting device 1B has been received by the communication board 62A. In this case, the control device 50B may emit the emission beam 51 to the light transmitting/receiving optical element 41A and the control device 50A may emit the emission beam 51 to the light transmitting/receiving optical element 41B.

As described above, the control device 50A may control the position changing device 40A so that the emission beam 51 from the light emitting device 1A is input to a specific position of the image forming optical system 10B in a state in which a position of the light transmitting/receiving optical element 41B in a direction intersecting the optical axis 111a of the light emitting device 1B is positioned at the specific position so that the emission beam 51 input to the specific position of the image forming optical system 10B of the light emitting device 1B is input to the light transmitting/receiving optical element 41B. In this case, the control device 50A may control the position changing device 40A so that the emission beam 51 output from the light emitting device 1A is input to the specific position of the image forming optical system 10B (i.e., the light transmitting/receiving optical element 41B) on the basis of a position on the image of the marker provided in the light emitting device 1B, a positional relationship between the image forming optical system 10B and the marker, and a specific position of the image forming optical system 10B to which the emission beam 51 is input. Furthermore, the control device 50B may control the position changing device 40B so that the light transmitting/receiving optical element 41B is arranged at a specific position in the direction intersecting the optical axis 11 1a of the light emitting device 1B. In this case, the control device 50B may emit the emission beam 51. The emission beam 51 output from the light emitting device 1B is input to the light transmitting/receiving optical element 41A of the light emitting device 1A.

Furthermore, likewise, the control device 50B may control the position changing device 40B so that the emission beam 51 from the light emitting device 1B is input to a specific position of the image forming optical system 10A in a state in which a position of the light transmitting/receiving optical element 41A in a direction intersecting the optical axis 111a of the light emitting device 1A is positioned at the specific position so that the emission beam 51 input to the specific position of the image forming optical system 10A is input to the light transmitting/receiving optical element 41A. In this case, the control device 50A may emit the emission beam 51. The emission beam 51 output from the light emitting device 1A is input to the light transmitting/receiving optical element 41B.

Furthermore, the control device 50A may identify a position of the light transmitting/receiving optical element 41B in the direction intersecting the optical axis 111a in the light emitting device 1B on the basis of the flashing pattern of the light emitting portion serving as a marker provided in the light emitting device 1B detected in the above-described image processing. For example, the control device 50A may control the position changing device 40A so that the emission beam 51 output from the light emitting device 1A is input to the light transmitting/receiving optical element 41B of the light emitting device 1B on the basis of the position of the light emitting portion of the light emitting device 1B on the image acquired by the imaging device 30A identified in the above-described image processing, the positional relationship between the image forming optical system 10B of the light emitting device 1B and the light emitting portion, and the input position for the image forming optical system 10B identified on the basis of the detected flashing pattern of the light emitting portion. In this case, the control device 50B may emit the emission beam 51. The emission beam 51 output from the light emitting device 1B is input to the light transmitting/receiving optical element 41A of the light emitting device 1A. Furthermore, a relationship between the position of the light transmitting/receiving optical element 41B in the direction intersecting the optical axis 111a in the light emitting device 1B and the input position for the image forming optical system 10B for inputting the emission beam 51 to the light transmitting/receiving optical element 41B may be obtained in advance.

Furthermore, the control device 50A may control the position changing device 40A so that the emission beam 51 output from the light emitting device 1A is input to the light transmitting/receiving optical element 41B on the basis of a position of at least one of an edge, contour, and texture of at least a part of the light emitting device 1B on the image acquired by the imaging device 30A identified in the above-described image processing. In this case, the control device 50A may control the position changing device 40A so that the emission beam 51 output from the light emitting device 1A is input to the light transmitting/receiving optical element 41B on the basis of a position of at least one of the edge, contour, and texture of at least the part of the light emitting device 1B on the image acquired by the imaging device 30A and a positional relationship between a position of at least one of an edge, contour, and texture of at least a part of the light emitting device 1B and the image forming optical system 10B.

At this time, the control device 50B may move the light transmitting/receiving optical element 41B so that the emission beam 51 input from the light emitting device 1A to the image forming optical system 10B is input to the light transmitting/receiving optical element 41B.

In this case, the control device 50B may control the position changing device 40B so that the emission beam 51 input from the light emitting device 1A to the image forming optical system 10B is input to the light transmitting/receiving optical element 41B on the basis of a position of at least one of an edge, contour, and texture of at least a part of the light emitting device 1A on the image acquired by the imaging device 30B identified in the above-described image processing and a positional relationship between a position of at least one of an edge, contour, and texture of at least a part of the light emitting device 1A and the image forming optical system 10A. Furthermore, the control device 50B may emit the emission beam 51 in a state in which the emission beam 51 from the light emitting device 1A is input to the light transmitting/receiving optical element 41B. The emission beam 51 output from the light emitting device 1B is input to the light transmitting/receiving optical element 41A.

As described above, at least a part of the physical object on an image in which a position is identified in the above-described image processing of the control device 50 may be different from at least a part of the physical object emitted by the light emitting device 1.

Furthermore, the control device 50A may control the position changing device 40A so that the emission beam 51 output from the light emitting device 1A is input to the image forming optical system 10B (the optical member closest to the physical object side) on the basis of the position of the optical member closest to the physical object side of the image forming optical system 10B on the image acquired by the imaging device 30A identified in the above-described image processing. At this time, the control device 50B may control the position changing device 40B so that the emission beam 51 input from the light emitting device 1A to the image forming optical system 10B is input to the light transmitting/receiving optical element 41B. Furthermore, the control device 50B may emit the emission beam 51 in a state in which the emission beam 51 from the light emitting device 1A is input to the light transmitting/receiving optical element 41B. The emission beam 51 output from the light emitting device 1B is input to the light transmitting/receiving optical element 41A.

Furthermore, the control device 50 is not limited to the position of the feature location of the physical object on the image acquired by the imaging device 30. The control device 150 may identify at least one of a position and a posture of the feature location of the physical object in a real space on the basis of a luminance distribution of an image acquired by the imaging device 30 according to the above-described image processing and control the position changing device 40 so that the emission beam 51 output by the image forming optical system 10 is input to the light transmitting/receiving optical element 41 of the light emitting device 1 of the other party for performing optical wireless communication on the basis of the at least one of the position and the posture of the physical object identified in the real space.

Here, an action of the emission beam 51 on each element provided in the light emitting device 1 during light transmission will be described as follows.

First, the emission beam 51 is generated by the light generating device 60. The emission beam 51 output from the light transmitting/receiving optical element 41 is input from the conjugate plane 220 to the optical member 20. The optical member 20 changes a movement direction of the input emission beam 51 (e.g., reflects the emission beam 51 when the optical member 20 is a half mirror) and outputs the emission beam 51 toward the image forming optical system 10. The image forming optical system 10 outputs the input emission beam 51 toward the light emitting device 1 of the other party as an example of a physical object.

Next, an action of the emission beam 51 on each element provided in the light emitting device 1 during light reception will be described as follows.

First, the emission beam 51 emitted from the light emitting device 1 of the other party as an example of a physical object is input to the image forming optical system 10. The image forming optical system 10 outputs the input emission beam 51 toward the optical member 20. The optical member 20 changes a movement direction of the input emission beam 51 (e.g., reflects the emission beam 51 when the optical member 20 is a half mirror) and outputs the emission beam 51 toward the light transmitting/receiving optical element 41 via the conjugate plane 220. The emission beam 51 input to the light transmitting/receiving optical element 41 is received by the communication board 62 via the optical fiber 61.

Next, an action of light for forming a reduced image of at least a part of the physical object on the image plane 210 on each element provided in the light emitting device 1 will be described.

Light for forming a reduced image of at least a part of the light emitting device 1 of the other party as an example of a physical object on the image plane 210 is input to the image forming optical system 10. The image forming optical system 10 forms a reduced image of at least a part of the light emitting device 1 of the other party side (e.g., the above-described feature location) on the image plane 210 via the optical member 20. The reduced image formed on the image plane 210 is captured by the imaging device 30.

Although the optical member 20 is arranged on the light generating device 60 side of the image forming optical system 10 in the present embodiment, the position of the optical member 20 is not limited to this example. The optical member 20 may be arranged, for example, within the image forming optical system 10, in other words, between two or more optical members constituting the image forming optical system 10 (two or more optical members different from the optical member 20). Specifically, the optical member 20 may be arranged between at least one optical member arranged on the physical object side of the image forming optical system 10 with respect to the optical member 20 and at least one optical member arranged on the image plane 210 side of the image forming optical system 10 with respect to the optical member 20.

The optical member 20 may output light passing through at least a part of the image forming optical system 10 toward the image plane of the image forming optical system 10. Furthermore, the optical member 20 may output light input via at least one optical member arranged on the physical object side of the image forming optical system 10 with respect to the optical member 20 toward at least one optical member arranged on the image plane 210 side of the image forming optical system 10 with respect to the optical member 20. Also, the light output toward at least one optical member arranged on the image plane 210 side of the image forming optical system 10 with respect to the optical member 20 may be output toward the image plane 210. Therefore, it can be said that the optical member 20 outputs light passing through at least a part of the image forming optical system 10 toward the image plane of the image forming optical system 10. Moreover, the optical member 20 may output light input via at least one optical member arranged on the physical object side of the image forming optical system 10 with respect to the optical member 20 toward the light generating device 60 (the light transmitting/receiving optical element 41). Moreover, the optical member 20 may output the emission beam 51 from the light generating device 60 toward at least a part of the image forming optical system 10. The optical member 20 may output the emission beam 51 input from the light generating device 60 to the optical member 20 toward at least one optical member arranged on the physical object side of the image forming optical system 10 with respect to the optical member 20. Also, the emission beam 51 output toward at least one optical member arranged on the physical object side of the image forming optical system 10 with respect to the optical member 20 may be output toward the physical object. Therefore, it can be said that the optical member 20 outputs the emission beam 51 from the light generating device 60 toward at least a part of the image forming optical system 10. Furthermore, the optical member 20 may be arranged on the physical object side of the image forming optical system 10. In this case, the imaging device 30 captures at least a part of the image of the physical object formed on the image plane 210 by the image forming optical system 10. Moreover, the position changing device 40 changes the input position of the emission beam 51 from the light generating device 60 to the optical member 20 and changes the emission position of the emission beam 51 output by the image forming optical system 10. The light emitting device 1 emits the emission beam 51 output by the image forming optical system 10 to at least a part of the physical object on the basis of imaging results of the imaging device 30.

Furthermore, because the optical member 20 may affect a formation state of the image formed on the image plane 210, the optical member 20 can also be considered as a part of the image forming optical system 10. Furthermore, the optical member 20 included in the image forming optical system 10 can be considered. Furthermore, in the light emitting device 1, the optical member 20 provided in the image forming optical system 10 can be considered. In this case, the light emitting device 1 including the image forming optical system 10, the imaging device 30, and the position changing device 40 can also be considered. The optical member 20 of the image forming optical system 10 may output the input light toward the image plane 210. Furthermore, the optical member 20 may output light input via at least one optical member arranged on the physical object side of the image forming optical system 10 with respect to the optical member 20 toward at least one optical member arranged on the image plane 210 side of the image forming optical system 10 with respect to the optical member 20. Also, the light output toward at least one optical member arranged on the image plane 210 side of the image forming optical system 10 with respect to the optical member 20 may be output toward the image plane 210. Therefore, it can be said that the optical member 20 of the image forming optical system 10 outputs light input to the optical member 20 toward the image plane 210. Moreover, the optical member 20 may output light input via at least one optical member arranged on the physical object side of the image forming optical system 10 with respect to the optical member 20 toward the light generating device 60 (the light transmitting/receiving optical element 41). Moreover, the optical member 20 of the image forming optical system 10 may output the emission beam 51 from the light generating device 60 toward the physical object. Here, the optical member 20 outputs the emission beam 51 input from the light generating device 60 to the optical member 20 toward at least one optical member arranged on the physical object side of the image forming optical system 10 with respect to the optical member 20. Also, the emission beam 51 output toward at least one optical member arranged on the physical object side of the image forming optical system 10 with respect to the optical member 20 is output toward the physical object. Therefore, it can be said that the optical member 20 of the image forming optical system 10 outputs the emission beam 51 from the light generating device 60 toward the physical object. Furthermore, a position where the optical member 20 is arranged is not limited to the above-described position. The optical member 20 may be arranged closest to the image plane 210 side of the image forming optical system 10. Even in this case, the optical member 20 can be considered as a part of the image forming optical system 10. The imaging device 30 captures at least a part of the image of the physical object formed on the image plane 210 by the image forming optical system 10. The position changing device 40 changes the input position of the emission beam 51 from the light generating device 60 to the image forming optical system 10 and changes the emission position of the emission beam 51 output by the image forming optical system 10.

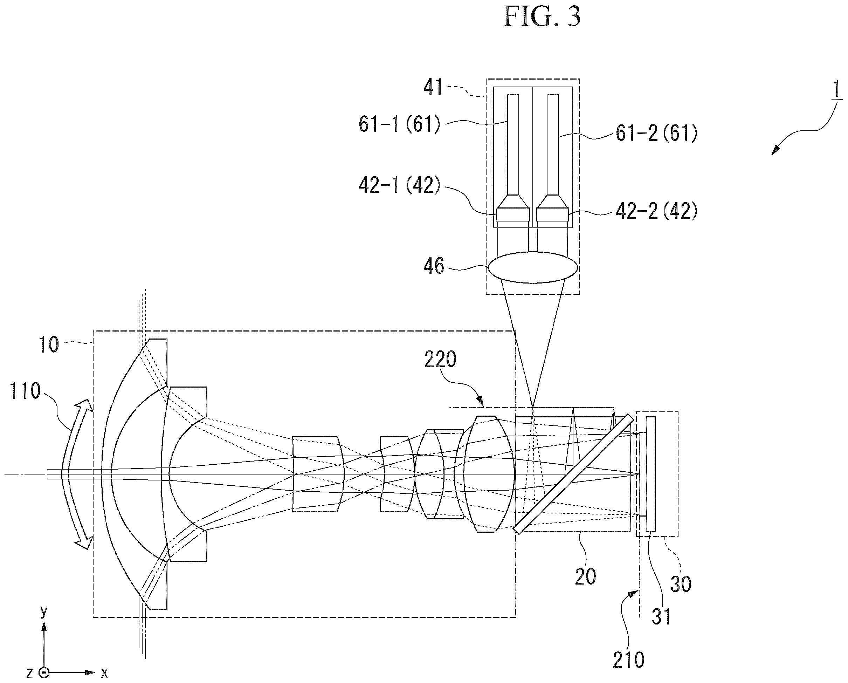

FIG. 3 is a diagram for describing an example of the configuration of the light transmitting/receiving optical element according to the first embodiment. An example of the configuration of the light transmitting/receiving optical element 41 will be described with reference to FIG. 3.

The light transmitting/receiving optical element 41 includes at least a part of the optical fiber 61, a Fresnel lens 42, and a collimating lens 46.

The end of the optical fiber 61 is arranged near the Fresnel lens 42. For example, the light transmitting/receiving optical element 41 may include the end of the optical fiber 61 arranged near the Fresnel lens 42. Furthermore, a diffractive optical element may be used instead of using a Fresnel lens.

The optical wireless communication light (the emission beam 51) generated by the communication board 62 passes through the optical fiber 61 and enters the Fresnel lens 42. The emission beam 51 output from the Fresnel lens 42 is input to the collimating lens 46. Here, the collimating lens 46 condenses the input emission beam 51 on the conjugate plane 220. The emission beam 51 output from the collimating lens 46 is condensed on the conjugate plane 220 and then diverges and enters the optical member 20. The optical member 20 outputs the emission beam 51 input via the conjugate plane 220 toward the image forming optical system 10. Moreover, the emission beam 51 input from the light emitting device 1 of the other party for performing optical wireless communication to the image forming optical system 10 is condensed on the conjugate plane 220 by the image forming optical system 10 and the optical member 20. The light (the emission beam 51) diverging through the conjugate plane 220 is collimated by the collimating lens 46 and input to the Fresnel lens 42. The light (the emission beam 51) output from the Fresnel lens 42 converges and enters the optical fiber 61.

As an example, the optical fiber 61 includes an optical fiber 61-1 configured to transmit light (the emission beam 51) generated by the communication board 62 from the communication board 62 to the light transmitting/receiving optical element 41 and an optical fiber 61-2 configured to transmit the emission beam 51 input from the light emitting device 1 of the other party for performing the optical wireless communication to the image forming optical system 10 from the light transmitting/receiving optical element 41 to the communication board 62. Moreover, as an example, the Fresnel lens 42 includes a Fresnel lens 42-1 configured to collimate the diverging light (the emission beam 51) output from the end of the optical fiber 61-1 and output the collimated light to the collimating lens 46 and a Fresnel lens 42-2 configured to cause parallel light (the emission beam 51) from the collimating lens 46 to converge so that the light is input to the end of the optical fiber 61-2.

According to the above-described configuration, the light transmitting/receiving optical element 41 can receive light (the emission beam 51) input through an optical path identical to an optical path along which the light (the emission beam 51) output by the image forming optical system 10 is output from the light transmitting/receiving optical element 41 through the conjugate plane 220 and the optical member 20 by the image forming optical system 10 in a stationary state. Therefore, as an example, in a state in which the positional relationship with the light emitting device 1 of the other party for performing optical wireless communication does not change, the light emitting device 1 can receive the emission beam 51 output from the light emitting device 1 of the other party with the light transmitting/receiving optical element 41 while inputting the emission beam 51 to the light transmitting/receiving optical element 41 of the light emitting device 1 of the other party.

Furthermore, the position changing device 40 may integrally move the collimating lens 46, the Fresnel lens 42-1, the Fresnel lens 42-2, the end of the optical fiber 61-1, and the end of the optical fiber 61-2. In this case, the collimating lens 46, the Fresnel lens 42-1, the Fresnel lens 42-2, the end of the optical fiber 61-1, and the end of the optical fiber 61-2 may be fixed by a structure in which the positional relationship therebetween is not shown.

Furthermore, at least one of the communication board 62, the optical fiber 61-1, the Fresnel lens 42-1, the collimating lens 46, the optical member 20, and the image forming optical system 10 may be referred to as a light outputting portion or a light outputting device that outputs the light (the emission beam 51) via the image forming optical system 10. Moreover, at least one of the image forming optical system 10, the optical member 20, the collimating lens 46, the Fresnel lens 42-2, the optical fiber 61-2, and the communication board 62 may be referred to as a light receiving portion or a light receiving device configured to receive the light (the emission beam 51) input from the light emitting device 1 of the other party for performing the optical wireless communication via the image forming optical system 10. Furthermore, the light transmitting/receiving portion including the light receiving portion and the light outputting portion described above can be considered. Furthermore, the light transmitting/receiving device including the light receiving device and the light outputting device described above can be considered.

Furthermore, the collimating lens 46 may be divided into a lens for condensing the light (the emission beam 51) from the Fresnel lens 42-1 toward the conjugate plane 220 and a lens for collimating the light (the emission beam 51) diverging from the conjugate plane 220 toward the Fresnel lens 42-2. In this case, at least a part of the optical fiber 61-1 (e.g., the end of the optical fiber 61-1 on the Fresnel lens 42-1 side), the Fresnel lens 42-1, and a lens for condensing the light (the emission beam 51) from the Fresnel lens 42-1 toward the conjugate plane 220 may be referred to as a light transmitting optical element or a light transmitting optical system. Furthermore, the light transmitting optical element (the light transmitting optical system) is not limited to the above-described configuration. The light transmitting optical element (the light transmitting optical system) may include at least another existing optical member if the light (the emission beam 51) from the optical fiber 61-1 can be output toward the optical member 20A. Moreover, at least one of the lens for collimating the light (the emission beam 51) diverging from the conjugate plane 220 toward the Fresnel lens 42-2, the Fresnel lens 42-2, and at least a part of the optical fiber 61-2 (e.g., the end of the optical fiber 61-2 on the Fresnel lens 42-2 side) may be referred to as a light receiving optical element or a light receiving optical system. Furthermore, the light receiving optical element (the light receiving optical system) is not limited to the above-described configuration. The light receiving optical element (the light receiving optical system) may include at least another existing optical member if the light (the emission beam 51) from the optical member 20A can be output toward the optical fiber 61-2. Furthermore, at least one of the communication board 62, the optical fiber 61-1, the Fresnel lens 42-1, the lens for condensing the light (the emission beam 51) from the Fresnel lens 42-1 toward the conjugate plane 220, the optical member 20, and the image forming optical system 10 may be referred to as a light outputting portion or a light outputting device configured to output the light (the emission beam 51) via the image forming optical system 10. That is, the light transmitting optical element (the light transmitting optical system) may be referred to as a light outputting portion. Moreover, at least one of the image forming optical system 10, the optical member 20, the lens for collimating the light (the emission beam 51) diverging from the conjugate plane 220 toward the Fresnel lens 42-2, the Fresnel lens 42-2, the optical fiber 61-2, and the communication board 62 may be referred to as a light receiving portion or a light receiving device configured to receive the light (the emission beam 51) input from the light emitting device 1 of the other party for performing optical wireless communication via the image forming optical system 10. That is, the light receiving optical element (the light receiving optical system) can be considered as a light receiving portion. Furthermore, a light transmitting/receiving portion (a light transmitting/receiving device) including the above-described light receiving portion (light receiving device) and the above-described light outputting portion (light outputting device) may be considered.

According to the above-described configuration, the optical path of the light (the emission beam 51) until the light (the emission beam 51) is output from the light transmitting optical element through the conjugate plane 220 and the optical member 20 by the image forming optical system 10 is different from the optical path of the light (the emission beam 51) until the light (the emission beam 51) is input to the light receiving optical element through the optical member 20 and the conjugate plane 220 by the image forming optical system 10. Therefore, the light transmitting/receiving optical element 41 can receive the light (the emission beam 51) input through an optical path different from the optical path until the light (the emission beam 51) output by the image forming optical system 10 is output from the light transmitting/receiving optical element 41 through the conjugate plane 220 and the optical member 20 by the image forming optical system 10. Therefore, the light emitting device 1 can receive the emission beam 51 output from a position different from an emission position of the emission beam 51 for the light emitting device 1 of the other party for performing optical wireless communication (e.g., a predetermined position of the optical member closest to the physical object side of the image forming optical system 10B) (e.g., a position different from the predetermined position of the optical member closest to the physical object side of the image forming optical system 10B, i.e., a position different from a position where the emission beam 51 from the light emitting device 1A is input).

In this case, the position changing device 40 may separately move each of a light transmitting optical element (the end of the optical fiber 61-1, the Fresnel lens 42-1, and the lens for condensing the light (the emission beam 51) from the Fresnel lens 42-1 toward the conjugate plane 220) and a light receiving optical element (the lens for collimating the light (the emission beam 51) diverging from the conjugate plane 220 toward the Fresnel lens 42-2, the Fresnel lens 42-2 and the end of the optical fiber 61-2).

For example, the position changing device 40 may include a drive device for integrally moving the end of the optical fiber 61-1, the Fresnel lens 42-1, and the lens for condensing the light (the emission beam 51) from the Fresnel lens 42-1 toward the conjugate plane 220 and a drive device for integrally moving the lens for collimating the light (the emission beam 51) diverging from the conjugate plane 220 toward the Fresnel lens 42-2, the Fresnel lens 42-2 and the end of the optical fiber 61-2. Furthermore, the end of the optical fiber 61-1, the Fresnel lens 42-1, and the lens for condensing the light (the emission beam 51) from the Fresnel lens 42-1 toward the conjugate plane 220 may be referred to as a light outputting portion. Moreover, at least one of the lens for collimating the light (the emission beam 51) diverging from the conjugate plane 220 toward the Fresnel lens 42-2, the Fresnel lens 42-2 and the end of the optical fiber 61-2 may be referred to as a light receiving portion. In this case, the position changing device 40 including a drive device for moving the light outputting portion and a drive device for moving the light receiving portion can be considered.

Furthermore, the end of the optical fiber 61-1, the Fresnel lens 42-1, and the lens for condensing the light (the emission beam 51) from the Fresnel lens 42-1 toward the conjugate plane 220 may be fixed by a structure in which the positional relationship therebetween is not shown. Moreover, the lens for collimating the light (the emission beam 51) diverging from the conjugate plane 220 toward the Fresnel lens 42-2, the Fresnel lens 42-2 and the end of the optical fiber 61-2 may be fixed by a structure in which the positional relationship therebetween is not shown.

As described above, the position changing device 40 may change the emission position of the emission beam 51 output by the image forming optical system 10 by moving the light transmitting/receiving optical element 41 in the x-axis direction and the z-axis direction (e.g., in the direction orthogonal to the optical axis 111a of the image forming optical system 10) with respect to the optical member 20. The control device 50 may change the emission position of the emission beam 51 output by the image forming optical system 10 on the basis of imaging results of the imaging device 30. Specifically, the control device 50 may identify a position of a feature location of the physical object on the image acquired by the imaging device 30 in the above-described image processing. The control device 50 may control the position changing device 40 (or may move the light transmitting/receiving optical element 41) so that the emission beam 51 output by the image forming optical system 10 is input to the light emitting device 1 of the other party for performing optical wireless communication on the basis of the position of the feature location on the identified image.

At least one of a calibration process for the imaging device 30 and a calibration process for the light transmitting/receiving optical element 41 may be performed so that the emission beam 51 is more accurately emitted to a target position of the light emitting device 1 of the other party for performing optical wireless communication (e.g., a specific position on the optical member closest to the physical object side of the image forming optical system 10B) and so that the emission beam 51 output from the light emitting device 1 of the other party for performing optical wireless communication is more accurately received at a target position (e.g., the light transmitting/receiving optical system 41 positioned at a specific position in a direction intersecting the optical axis 111a).

Here, an example of a calibration will be described. First, a distortion correction process for the imaging results of the imaging device 30 may be performed as a calibration of the imaging device 30 and then the position of the light transmitting/receiving optical element 41 in the direction intersecting the optical axis 111a (i.e., the position of the emission beam 51 on the conjugate plane 220) and the position on the image acquired by the imaging device 30 may be associated as a calibration of the light transmitting/receiving optical element 41.

As an example of the distortion correction process for the imaging results of the imaging device 30, the imaging device 30 images a board on which a mark such as a checkerboard pattern having a known shape is formed (hereinafter referred to as a calibration board), such that a distortion correction process for an image acquired by the imaging device 30 may be performed. The light emitting device 1 may perform the distortion correction process for the image acquired by the imaging device 30 using a well-known method on the basis of checkerboard imaging results of the imaging device 30. For example, the light emitting device 1 may perform the distortion correction of the imaging device 30 by adjusting the well-known image processing conditions of the imaging device 30 on the basis of a result of comparison between a calibration board imaging result of the imaging device 30 and a shape of a known mark formed on the calibration board. Furthermore, because the calibration of the imaging device 30 is performed when the imaging device 30 captures an image formed by light via the image forming optical system 10 and the optical member 20, the calibration of the imaging device 30 may be referred to as a calibration of the image forming optical system 10 or a calibration of the optical member 20.

Next, the light emitting device 1 may associate a position of the light transmitting/receiving optical element 41 in the direction intersecting the optical axis 111a with a position on the image acquired by the imaging device 30. The association between the position of the light transmitting/receiving optical element 41 in the direction intersecting the optical axis 111a and the position on the image acquired by the imaging device 30 may be performed using, for example, a screen or a retroreflective surface (hereinafter simply referred to as a reflective surface).

The light emitting device 1 emits light from the light transmitting/receiving optical element 41 toward the reflective surface via the image forming optical system 10, and the imaging device 30 receives the light reflected on the reflective surface through the light emitted from the image forming optical system 10 toward the reflective surface, such that the association between the position of the light transmitting/receiving optical element 41 in the direction intersecting the optical axis 111a and the position on the image acquired by the imaging device 30 may be performed. As described above, if the position of the light transmitting/receiving optical element 41 in the direction intersecting the optical axis 111a changes, the emission position (an emission orientation) of the light output by the image forming optical system 10 changes. Therefore, if the position of the light transmitting/receiving optical element 41 in the direction intersecting the optical axis 111a changes, because the reflection position on the reflective surface also changes, the input position of the reflected light for the imaging device 30 (the imaging plane of the imaging element 31) also changes (i.e., the position of the reflected light on the image acquired by the imaging device 30 also changes). It can be said that the light emitting device 1 calibrates the light transmitting/receiving optical element 41 on the basis of the position of the light transmitting/receiving optical element 41 in the direction intersecting the optical axis 111a and the position of the reflected light on the image acquired by the imaging device 30. Furthermore, the calibration of the light transmitting/receiving optical element 41 may be referred to as a calibration of the light transmitting/receiving optical element 41 and the imaging device 30, a calibration of the position changing device 40, or a calibration of the position changing device 40 and the imaging device 30. Furthermore, a method of associating the position of the light transmitting/receiving optical element 41 in the direction intersecting the optical axis 111a with the position on the image acquired by the imaging device 30 is not limited to the above-described method using the reflective surface.

Furthermore, the light emitting device 1 may perform the calibration of the imaging device 30 and the calibration of the light transmitting/receiving optical element 41 using a calibration board (hereinafter referred to as a dual-use calibration board) in which both the known mark of the shape of the above-described distortion correction and the reflective surface for the above-described calibration of the light transmitting/receiving optical element 41 are formed. For example, the light emitting device 1 may be arranged so that the known mark and the reflective surface are included in a visual field of the image forming optical system 1, the reflected light from the reflective surface due to the emission of light from the image forming optical system 10 may be received, and the known mark may be imaged. By using the dual-use calibration board, the calibrations of the imaging device 30 and the light transmitting/receiving optical element 41 can be performed at the same time.

By performing the above-described calibration, it is possible to further improve the accuracy of the emission position of the emission beam 51 for a target position of the light emitting device 1 of the other party for performing optical wireless communication (e.g., a specific position on the optical member closest to the physical object side of the image forming optical system 10B). Moreover, it is possible to further improve the accuracy of the light reception position of the emission beam 51 output from the light emitting device 1 of the other party for performing optical wireless communication (e.g., the accuracy of positioning of the light transmitting/receiving optical element 41 in the direction intersecting the optical axis 111a).

Furthermore, a positional relationship between the imaging device 30 and the light transmitting/receiving optical element 41 may be ensured by increasing the mechanical accuracy of a holding mechanism (not shown) that holds the wide-angle sensor 31 and the light transmitting/receiving optical element 41.

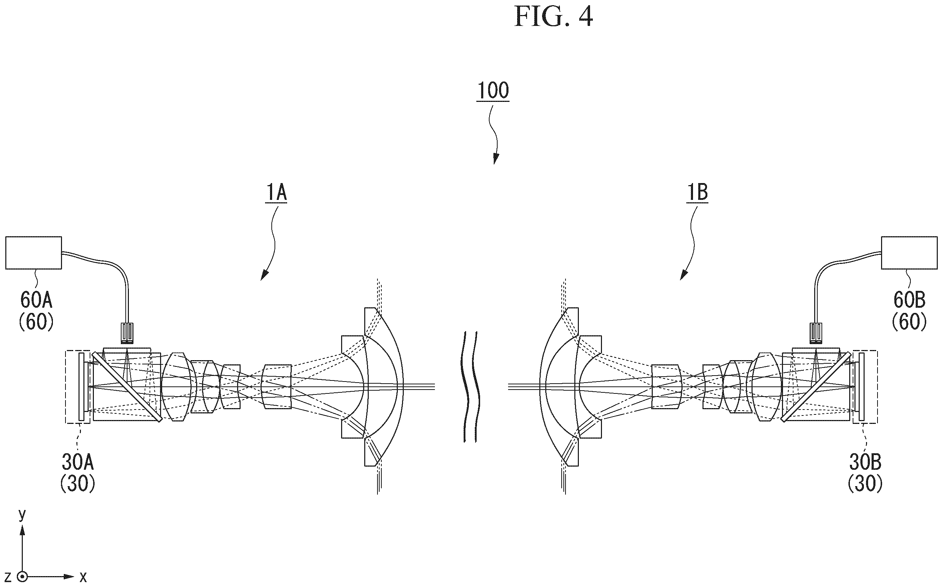

Next, an example of optical wireless communication performed by the light emitting device 1 will be described with reference to FIGS. 4 to 6. In this example, the case where the light emitting system 100 is configured to include a plurality of light emitting devices 1 (e.g., the light emitting device 1A and the light emitting device 1B) and the light emitting device 1A and the light emitting device 1B perform one-to-one optical wireless communication will be described. However, the present embodiment is not limited to one example of one-to-one wireless communication and one-to-N and N-to-M wireless communication (N and M are natural numbers equal to or greater than 1) may be performed.

Optical wireless communication is not limited to an example of bidirectional communication and includes unidirectional communication of only transmission or only reception.

FIG. 4 is a diagram showing a first example of optical wireless communication according to the first embodiment. In an example shown in FIG. 4, the light emitting device 1A and the light emitting device 1B are arranged at substantially opposite positions in the x-y plane. The light emitting device 1A emits the emission beam 51 in the positive x-axis direction. Moreover, the light emitting device 1A receives the emission beam 51 emitted from the light emitting device 1B in the negative x-axis direction. The light emitting device 1B emits the emission beam 51 in the negative x-axis direction. Moreover, the light emitting device 1B receives the emission beam 51 emitted from the light emitting device 1A in the positive x-axis direction.

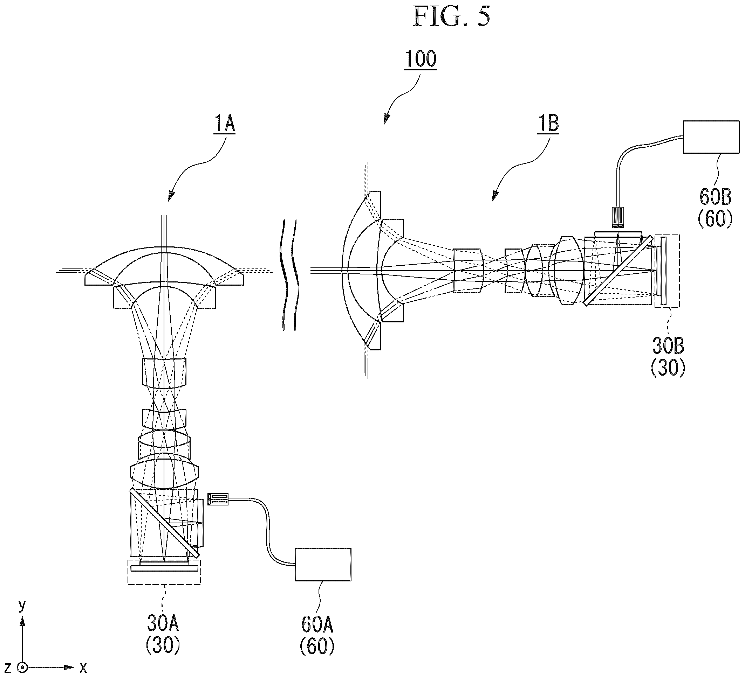

FIG. 5 is a diagram showing a second example of optical wireless communication according to the first embodiment. In an example shown in FIG. 5, the light emitting device 1A and the light emitting device 1B are installed at a position tilted by approximately 90° in the x-y plane. The light emitting device 1A emits the emission beam 51 in the positive x-axis direction. Moreover, the light emitting device 1A receives the emission beam 51 from the light emitting device 1B in the negative x-axis direction. The light emitting device 1B emits the emission beam 51 in the negative x-axis direction. Moreover, the light emitting device 1B receives the emission beam 51 emitted from the light emitting device 1A in the positive x-axis direction.

Here, a process of a case where there is a change from a positional relationship between the light emitting device 1A and the light emitting device 1B for performing optical wireless communication in FIG. 4 (hereinafter referred to as the positional relationship of FIG. 4) to a positional relationship between the light emitting device 1A and the light emitting device 1B in FIG. 5 (hereinafter referred to as the positional relationship of FIG. 5) will be described. In the following description, the process of the light emitting device 1A will be described as an example. Furthermore, in this case, the light emitting device 1A may be installed on the above-described movable object. As the movable object moves, the positional relationship between the light emitting device 1A and the light emitting device 1B may change. Furthermore, the position of the light emitting device 1B as well as the position of the light emitting device 1A may change. For example, the light emitting device 1B may be installed on the above-described movable object. As the movable object moves, the positional relationship between the light emitting device 1A and the light emitting device 1B may change.

When a change from the positional relationship of FIG. 4 to the positional relationship of FIG. 5 is made, the light emitting device 1A rotates approximately -90° in the x-y plane. That is, the position of the light emitting device 1B changes when viewed from the light emitting device 1A. When the position of the light emitting device 1B changes when viewed from the light emitting device 1A, a position of a feature location of the light emitting device 1B (a marker arranged on the light emitting device 1B as an example) on the image acquired by the imaging device 30A also changes. Here, the control device 50A may control the position changing device 40A so that the position of the feature location of the light emitting device 1B on an acquired image is identified in the above-described image processing every time the imaging device 30A performs an imaging process at a predetermined frame rate to acquire the image and the emission beam 51 from the light emitting device 1A is input to the communication board 62B via the image forming optical system 10B. Moreover, the control device 50A may detect the displacement of the position of the feature location of the light emitting device 1B on the image acquired by the imaging device 30A at the time of the positional relationship of FIG. 4 of the optical wireless communication state and the position of the feature location of the light emitting device 1B on the image acquired by the imaging device 30A after a positional relationship between the light emitting device 1A and the light emitting device 1B is changed and control the position changing device 40A on the basis of the detected displacement. In this case, the control device 50A may control the position changing device 40A so that the displacement in the direction intersecting the optical axis 111a corresponding to the displacement on the detected image is applied to the light transmitting/receiving optical element 41A. That is, the control device 50A may control the position changing device 40A on the basis of the displacement of the feature location of the light emitting device 1B on the image detected from a plurality of images acquired at a predetermined frame rate.

According to the above-described process and control of the control device 50A, even if the positional relationship between the light emitting device 1A and the light emitting device 1B changes due to a change in the position of the light emitting device 1A, the emission beam 51 can continuously emitted from the light emitting device 1A to the light emitting device 1B (the communication board 60B). That is, even if the positional relationship between the light emitting device 1A and the light emitting device 1B changes, the light emitting device 1A and the light emitting device 1B can continue optical wireless communication.

Furthermore, the above-described process and control due to the change in the positional relationship between the light emitting device 1A and the light emitting device 1B may be executed by the control device 50B instead of the control device 50A or each of the control device 50A and the control device 50B may be executed.

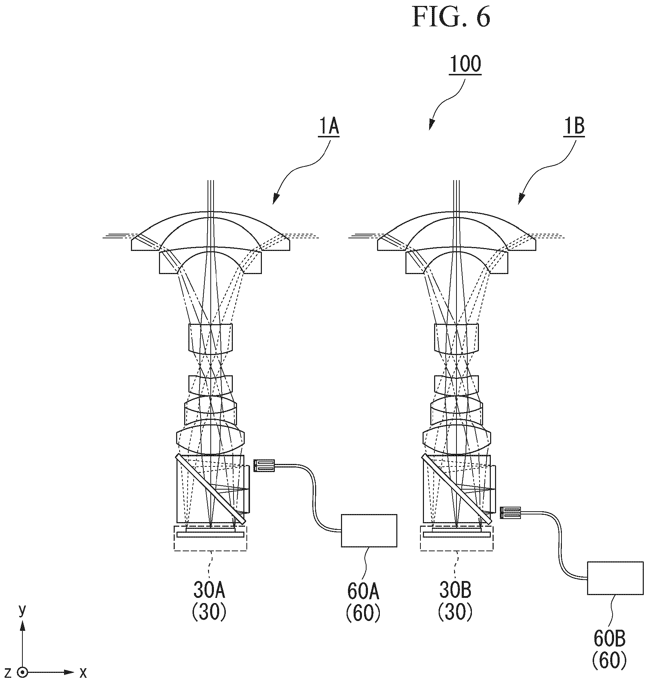

FIG. 6 is a diagram showing a third example of optical wireless communication according to the first embodiment. In an example shown in FIG. 6, the light emitting device 1A and the light emitting device 1B are installed on substantially the same y-z plane and are installed at positions on the x-y plane in substantially the same direction. The light emitting device 1A emits the emission beam 51 in the positive x-axis direction. Moreover, the light emitting device 1A receives the emission beam 51 emitted from the light emitting device 1B in the negative x-axis direction. The light emitting device 1B emits the emission beam 51 in the negative x-axis direction. Moreover, the light emitting device 1B receives the emission beam 51 emitted from the light emitting device 1A in the positive x-axis direction.

Furthermore, a process of a case where a change from a positional relationship in which the optical wireless communication of FIG. 5 is performed to a positional relationship between the light emitting device 1A and the light emitting device 1B in FIG. 6 (hereinafter referred to as the positional relationship of FIG. 6) has been made will be described. In the following description, the process of the light emitting device 1A will be described as an example.

When the change from the positional relationship of FIG. 5 to the positional relationship of FIG. 6 is made, the light emitting device 1B rotates substantially 90° in the x-y plane. That is, the position of the light emitting device 1B changes when viewed from the light emitting device 1A. As described above, the control device 50A may control the position changing device 40A so that the position of the feature location of the light emitting device 1B on an acquired image is identified in the above-described image processing every time the imaging device 30A performs an imaging process at a predetermined frame rate to acquire the image and the emission beam 51 from the light emitting device 1A is input to the communication board 62B. Moreover, the control device 50A may detect the displacement of the position of the feature location of the light emitting device 1B on the image acquired by the imaging device 30A at the time of the positional relationship of FIG. 5 of the optical wireless communication state and the feature location of the light emitting device 1B on the image acquired by the imaging device 30A after a positional relationship between the light emitting device 1A and the light emitting device 1B is changed and control the position changing device 40A on the basis of the detected displacement. In this case, the control device 50A may control the position changing device 40A so that the displacement in the direction intersecting the optical axis 111a corresponding to the displacement on the detected image is applied to the light transmitting/receiving optical element 41A.

According to the above-described process of the control device 50A, even if the positional relationship between the light emitting device 1A and the light emitting device 1B changes due to a change in the position of the light emitting device 1B, the light emitting device 1A and the light emitting device 1B can continue optical wireless communication.

Furthermore, the above-described process and control due to the change in the positional relationship between the light emitting device 1A and the light emitting device 1B may be executed by the control device 50B instead of the control device 50A or each of the control device 50A and the control device 50B may be executed.

Although the case where the positional relationship between the light emitting device 1A and the light emitting device 1B changes in the x-y plane has been described with reference to FIGS. 4 to 6, it is possible to maintain the optical wireless communication state between the light emitting device 1A and the light emitting device 1B according to a process and control similar to those described above even if the positional relationship changes in the y-z plane or the x-z plane.

Moreover, in a process of making a change from the positional relationship of FIG. 4 to the positional relationship of FIG. 5 and the positional relationship of FIG. 6, the light emitting device 1A may differentiate a frame rate of an imaging process of the imaging device 30A. For example, the light emitting device 1A may make a frame rate of a case where the displacement of the light emitting device 1B (e.g., a marker arranged in the image forming optical system 10B or the light emitting device 1B) on the image acquired by the imaging device 30A is present higher than a frame rate of a case where the displacement is absent.

Furthermore, a target (a physical object) with which the light emitting device 1A performs optical wireless communication is not limited to the light emitting device 1B. For example, a target with which the light emitting device 1A performs the optical wireless communication may be a light receiving device to be described below capable of optical wireless communication with the light emitting device 1A by receiving the emission beam 51 (light for performing optical wireless communication) from the light emitting device 1A. For example, the target (the physical object) with which the light emitting device 1A performs optical wireless communication may be a light transmitting device to be described below that can perform optical wireless communication with the light emitting device 1A by emitting the emission beam 51 toward the light emitting device 1A. For example, the target (physical object) with which the light emitting device 1A may be a light transmitting/receiving device to be described below different from the light emitting device 1B capable of optical wireless communication with the light emitting device 1A by receiving the emission beam 51 (light for performing optical wireless communication) from the light emitting device 1A and emitting the emission beam 51 toward the light emitting device 1A.

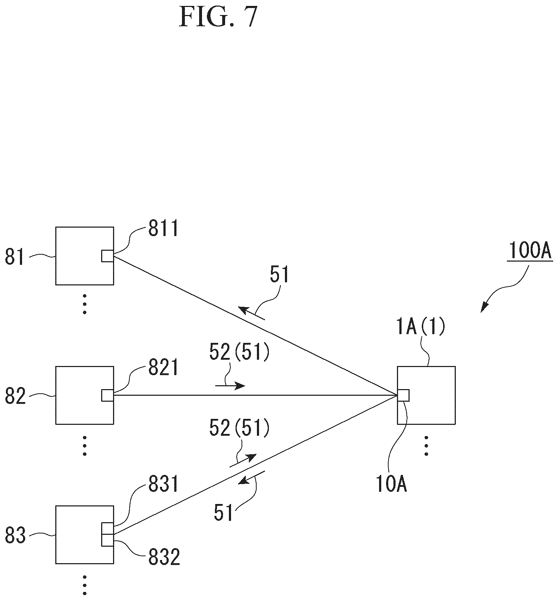

FIG. 7 is a schematic configuration diagram showing a modified example of the light emitting system according to the first embodiment. An optical wireless communication system 100A, which is a modified example of the light emitting system 100, will be described with reference to FIG. 7.

As shown in FIG. 7, the optical wireless communication system 100A includes a light emitting device 1, a plurality of light receiving devices 81, a plurality of light transmitting devices 82, and a plurality of light transmitting/receiving devices 83. The present embodiment is not limited to this example. The optical wireless communication system 100A may include one or more light emitting devices 1, 0 or more light receiving devices 81, a light transmitting device 82, and a light transmitting/receiving device 83.

The light receiving device 81 may be a partner device for performing optical wireless communication with the light emitting device 1A. The light receiving device 81 may include a light receiving portion 811. The light emitting device 1A can perform optical wireless communication with the light receiving device 81 by inputting the emission beam 51 serving as light for performing optical wireless communication output from the light emitting device 1A to the light receiving portion 811. Furthermore, the light receiving device 81 may not have a configuration for emitting the emission beam 51. Furthermore, the light receiving portion 811 may include a communication board 62. Furthermore, the communication board 62 provided in the light receiving portion 811 may not include a configuration for generating the emission beam 51. In addition to the communication board 62, the light receiving portion 811 may include at least one of a lens for collimating the light (the emission beam 51) diverging from the image forming optical system 10, the optical member 20, and the conjugate plane 220 toward the Fresnel lens 42-2, the Fresnel lens 42-2, and the optical fiber 61-2. Furthermore, the light receiving portion 811 may have a configuration in which a configuration for outputting the emission beam 51 from the light emitting device 1 is omitted. Furthermore, the light receiving device 81 is not limited to the above-described configuration and may include an existing configuration in which optical wireless communication with the light emitting device 1A is possible by receiving the emission beam 51 from the light emitting device 1A (e.g., a light receiving element that converts the received emission beam 51 into an electrical signal). Furthermore, the above-described feature locations may be provided in the light receiving device 81. Furthermore, the positional relationship between the feature location of the light receiving device 81 and the light receiving portion 811 of the light receiving device 81 may be known.

The light receiving portion 811 of the light receiving device 81 is an example of a physical object to which the light emitting device 1A emits the emission beam 51. That is, the emission beam 51 is emitted to the light receiving portion 811. In this example, the emission beam 51 may be referred to as a light beam for performing optical wireless communication with the light receiving device 81. Furthermore, the emission beam 51 (the light beam) may be referred to as highly directional light.

The light transmitting device 82 may be a partner device for performing optical wireless communication with the light emitting device 1A.

The light transmitting device 82 may include a light transmitting portion 821. The light transmitting portion 821 may emit the emission beam 51 as light for performing optical wireless communication with the light emitting device 1A. The light emitting device 1A can perform optical wireless communication with the light transmitting device 82 by receiving the emission beam 51 from the light transmitting portion 821 with the light transmitting/receiving optical element 41A (the communication board 62A). Furthermore, the light transmitting device 82 may not include a configuration for receiving the emission beam 51.

Furthermore, the light transmitting portion 821 may include a communication board 62. Furthermore, the communication board 62 provided in the light transmitting portion 821 may not include a constituent element configured to receive the emission beam 51. Furthermore, in addition to the communication board 62, the light transmitting portion 821 may include at least one of the optical fiber 61-1, the Fresnel lens 42-1, the lens for condensing the light (the emission beam 51) from the Fresnel lens 42-1 toward the conjugate plane 220, the optical member 20, and the image forming optical system 10. Furthermore, the light transmitting portion 821 may have a configuration in which a constituent element configured to receive the emission beam 51 output from the light emitting device 1 is omitted. Furthermore, the light transmitting device 82 is not limited to the above-described configuration and may include an existing configuration in which optical wireless communication with the light emitting device 1A is possible by emitting the emission beam 51 to the light emitting device 1A (e.g., a light emitting element configured to convert an electrical signal into the emission beam 51). Furthermore, the above-described feature location may be provided in the light transmitting device 82. A positional relationship between the feature location of the light transmitting device 82 and the light transmitting portion 821 may be known. Furthermore, the light transmitting device 82 may be referred to as a light outputting device or a light outputting portion. Furthermore, the light transmitting portion 821 may be referred to as a light outputting device or a light outputting portion.

In the following description, the emission beam 51 output from the light transmitting device 82 (the light transmitting portion 821) as light input to the light emitting device 1 will be referred to as an input beam 52. The input beam 52 may be referred to as the emission beam 51 output from the light transmitting device 82 so that optical wireless communication with the light emitting device 1A is performed. Furthermore, the input beam 52 may be referred to as a light beam for performing optical wireless communication between the light emitting device 1A and the light transmitting device 82. Furthermore, the input beam 52 (the light beam) may be referred to as highly directional light.

The light transmitting/receiving device 83 may include a light receiving portion 831 and a light transmitting portion 832. The light receiving portion 831 may receive the emission beam 51 from the light emitting device 1A. The light transmitting portion 832 may emit the emission beam 51 to the light emitting device 1A. Furthermore, the light receiving portion 831 may have the same configuration as the above-described light receiving portion 811. Moreover, the light transmitting portion 832 may have the same configuration as the light transmitting portion 821 described above. Furthermore, as shown in FIG. 7, the light receiving portion 831 and the light transmitting portion 832 may be arranged adjacent to each other in the light transmitting/receiving device 83 or may be arranged at a distance from each other. Furthermore, the light transmitting/receiving device 83 may have the same configuration as the light emitting device 1 described above. That is, at least one light transmitting/receiving device 83 may be at least one light emitting device 1 of the other party that performs optical wireless communication with the light emitting device 1A. Furthermore, one of the at least one light transmitting/receiving device 83 may be the above-described light emitting device 1B. Furthermore, the above-described feature location may be provided in the light transmitting/receiving device 83. Furthermore, a positional relationship between the feature location of the light transmitting/receiving device 83 and at least one of the light receiving portion 831 and the light transmitting portion 832 of the light transmitting/receiving device 83 may be known.

Furthermore, the emission beam 51 output from the light transmitting portion 832 of the light transmitting/receiving device 83 as light input to the light emitting device 1 is referred to as the input beam 52. Furthermore, the input beam 52 may be referred to as the emission beam 51 output from the light transmitting portion 832 of the light transmitting/receiving device 83 so that optical wireless communication with the light emitting device 1 is performed. Furthermore, the emission beam 51 and the input beam 52 may be referred to as a light beam for optical wireless communication between the light emitting device 1A and the light transmitting/receiving device 83. Furthermore, the emission beam 51 (the light beam) and the input beam 52 (the light beam) may be referred to as highly directional light.

Furthermore, the light transmitting device 82 may be an example of the light transmitting/receiving device 83 including the light receiving portion 831.

In this case, the input beam 52 is output from the light transmitting/receiving device 83 and the emission beam 51 is emitted to the light receiving portion 831. The input beam 52 and the emission beam 51 may be referred to as light beams for performing optical wireless communication between the light emitting device 1A and the light transmitting/receiving device 83. Furthermore, the light receiving device 81 may be an example of the light transmitting/receiving device 83 including the light transmitting portion 821.

Hereinafter, the case where the light emitting system 100A includes various combinations of devices will be described.

First, an example in which the optical wireless communication system 100A includes the light emitting device 1A and the light receiving device 81 will be described.

In the optical wireless communication system 100A, the light receiving portion 811 of the light receiving device 81 receives the emission beam 51 from the light emitting device 1A, and therefore the light emitting device 1A and the light receiving device 81 may perform optical wireless communication. That is, in this example, the optical wireless communication system 100A may transmit information from the light emitting device 1A to the light receiving device 81.

Furthermore, when optical wireless communication is performed between the light emitting device 1A and the light receiving device 81, the light emitting device 1A may have a configuration in which a constituent element configured to receive the emission beam 51 is omitted. For example, the light emitting device 1A may not include the lens for collimating the light (the emission beam 51) diverging from the conjugate plane 220 toward the Fresnel lens 42-2, the Fresnel lens 42-2, and the optical fiber 61-2. For example, the light emitting device 1A may include the above-described light transmitting optical element (the light outputting portion) instead of the light transmitting/receiving optical element 41.

The control device 50A of the light emitting device 1A may control the position changing device 40A so that the emission beam 51 from the light emitting device 1A is input to the light receiving portion 811 on the basis of a position of a feature location of the light receiving device 81 serving as a physical object on the image acquired by the imaging device 30A (a marker arranged in the light receiving device 81 as an example) identified in the above-described image processing and a positional relationship between the feature location of the light receiving device 81 and the light receiving portion 811 of the light receiving device 81.

Moreover, when the positional relationship between the light emitting device 1A and the light receiving device 81 changes, the control device 50A may control the position changing device 40A so that the position of the feature location of the light receiving device 81 on an acquired image is identified in the above-described image processing every time the imaging device 30A performs an imaging process at a predetermined frame rate to acquire the image and the emission beam 51 from the light emitting device 1A is input to the light receiving portion 811.

Furthermore, the control device 50A may detect the displacement of the feature location of the light receiving device 81 on the image by identifying the position of the feature location of the light receiving device 81 in the above-described image processing with respect to each image acquired at the predetermined frame rate. The control device 50A may control the position changing device 40A so that the emission beam 51 from the light emitting device 1A is input to the light receiving portion 811 on the basis of the displacement of the feature location on the image.

Even if the positional relationship between the light emitting device 1A and the light receiving device 81 changes due to the above process and control of the control device 50A, optical wireless communication from the light emitting device 1A to the light receiving device 81 can be continued.

Furthermore, at least one of the light emitting device 1A and the light receiving device 81 may be installed on the above-described movable object and the positional relationship between the light emitting device 1A and the light receiving device 81 may be changed due to the movement of the movable object.

Next, an example in which the optical wireless communication system 100A includes the light emitting device 1A and the light transmitting device 82 will be described.

In the optical wireless communication system 100A, the image forming optical system 10A (the communication board 62A) of the light emitting device 1A receives the input beam 52 from the light transmitting device 82, and therefore the light transmitting device 82 and the light emitting device 1A may perform optical wireless communication. That is, in this example, in the optical wireless communication system 100A, information may be transmitted from the light transmitting device 82 to the light emitting device 1A. Furthermore, when optical wireless communication is performed between the light emitting device 1A and the light transmitting device 82, the light emitting device 1A may have a configuration in which a constituent element configured to output the emission beam 51 is omitted. For example, the light emitting device 1A may not include the optical fiber 61-1, the Fresnel lens 42-1, and the lens for condensing the light (the emission beam 51) from the Fresnel lens 42-1 toward the conjugate plane 220. For example, the light emitting device 1A may include the above-described light receiving optical element (light receiving portion) instead of the light transmitting/receiving optical element 41.

The control device 50A may control the position changing device 40A so that the input beam 52 from the light transmitting portion 821 is input to the image forming optical system 10A (the communication board 62A) on the basis of a position of a feature location of the light transmitting device 82 serving as a physical object on the image acquired by the imaging device 30A (a marker arranged in the light transmitting device 82 as an example) identified in the above-described image processing and a positional relationship between the feature location of the light transmitting device 82 and the light transmitting portion 821 of the light transmitting device 82.

Moreover, when the positional relationship between the light emitting device 1A and the light transmitting device 82 changes, the control device 50A may control the position changing device 40A so that the position of the feature location of the light transmitting device 82 on an acquired image is identified in the above-described image processing every time the imaging device 30A performs an imaging process at a predetermined frame rate to acquire the image and the input beam 52 from the light transmitting device 82 is input to the light transmitting/receiving optical element 41A.

Furthermore, the control device 50A may detect the displacement of the feature location of the light transmitting device 82 on the image by identifying the position of the feature location of the light transmitting device 82 in the image processing for each image acquired at the predetermined frame rate. Also, the control device 50A may control the position changing device 40A so that the input beam 52 from the light transmitting device 82 is input to the image forming optical system 10A (the communication board 62A) on the basis of the displacement of the feature location on the image. Even if the positional relationship between the light emitting device 1A and the light transmitting device 82 changes due to the above process and control of the control device 50A, optical wireless communication from the light transmitting device 82 to the light emitting device 1A can be continued.

Furthermore, at least one of the light emitting device 1A and the light transmitting device 82 is installed on the above-described movable object and the positional relationship between the light emitting device 1A and the light transmitting device 82 changes due to the movement of the movable object.

Next, an example in which the optical wireless communication system 100A includes the light emitting device 1A and the light transmitting/receiving device 83 will be described.

In the optical wireless communication system 100A, the emission beam 51 is emitted from the light emitting device 1A to the light receiving portion 831 of the light transmitting/receiving device 83 and the input beam 52 from the light transmitting portion 832 of the light transmitting/receiving device 83 is received by the image forming optical system 10A of the light emitting device 1A (the communication board 62A), and therefore the light emitting device 1A and the light transmitting/receiving device 83 may perform optical wireless communication. That is, in this example, in the optical wireless communication system 100A, information may be mutually transmitted and received between the light emitting device 1A and the light transmitting/receiving device 83.

For example, when the light receiving portion 831 and the light transmitting portion 832 are arranged adjacent or close to each other on the light transmitting/receiving device 83, the control device 50A of the light emitting device 1A may control the position changing device 40A so that the emission beam 51 is input to the light receiving portion 831 on the basis of a position of a feature location of the light transmitting/receiving device 83 serving as a physical object on the image acquired by the imaging device 30A (a marker arranged in the light transmitting/receiving device 83 as an example) identified in the above-described image processing and a positional relationship between the feature location of the light transmitting/receiving device 83 and the light receiving portion 831 of the light transmitting/receiving device 83. Here, the emission beam 51 from the light transmitting portion 832 becomes light with a spreading property because it diffuses to some extent in accordance with a distance from the light transmitting portion 832. Therefore, even if the control device 50A moves the light transmitting/receiving optical element 41A so that the emission beam 51 is input to the light receiving portion 831 on the basis of the position of the feature location on the image acquired by the imaging device 30A, the input beam 52 from the light transmitting portion 832 is input to the image forming optical system 10A and input to the light transmitting/receiving optical element 41A after the movement (i.e., input to the communication board 62A) through the optical member 20A. Furthermore, the control device 50A may control the position changing device 40A so that the input beam 52 from the light transmitting portion 832 is input to the light transmitting/receiving optical element 41A on the basis of the position of the feature location of the light transmitting/receiving device 83 serving as the physical object on the image acquired by the imaging device 30A identified in the above-described image processing and the positional relationship between the feature location of the light transmitting/receiving device 83 and the light transmitting portion 832 of the light transmitting/receiving device 83.

Furthermore, when the positional relationship between the light emitting device 1A and the light transmitting/receiving device 83 changes, the control device 50A may control the position changing device 40A so that the position of the feature location of the light transmitting/receiving device 83 on an acquired image is identified in the above-described image processing every time the imaging device 30A performs an imaging process at a predetermined frame rate to acquire the image and the emission beam 51 from the light emitting device 1A is input to the light receiving portion 831 (or the input beam 52 from the light transmitting portion 832 is input to the light transmitting/receiving optical element 41A) as in the above-described process and control.

Furthermore, the control device 50A may detect the displacement of the feature location of the light transmitting/receiving device 83 on the image by identifying the position of the feature location of the light transmitting/receiving device 83 in the above-described image processing with respect to each image acquired at the predetermined frame rate. Also, the control device 50A may control the position changing device 40A so that the emission beam 51 from the light emitting device 1A is input to the light receiving portion 831 (or the input beam 52 from the light transmitting portion 832 is input to the light transmitting/receiving optical element 41A) on the basis of the displacement of the feature location on the image. Even if the positional relationship between the light emitting device 1A and the light transmitting/receiving device 83 changes due to the above process and control of the control device 50A, the light emitting device 1A and the light transmitting/receiving device 83 can continue two-way optical wireless communication.

Furthermore, as described above, the light transmitting/receiving optical element 41A may be divided into a light transmitting optical element and a light receiving optical element. As described above, the position changing device 40A may include a drive device configured to move the light transmitting optical element and a drive device configured to move the light receiving optical element. In this case, the control device 50A may move the light transmitting optical element (i.e., may control the position changing device 40A) so that the emission beam 51 output by the image forming optical system 10A is input from the light transmitting optical element to the light receiving portion 831 via the optical member 20A on the basis of the position of the feature location of the light transmitting/receiving device 83 on the image acquired by the imaging device 30A identified in the above-described image processing and the positional relationship between the feature location of the light transmitting/receiving device 83 and the light receiving portion 831. Furthermore, the control device 50A may move the light receiving optical element (i.e., may control the position changing device 40A) so that the input beam 52 from the light transmitting portion 832 is input to the light receiving optical element via the image forming optical system 10A and the optical member 20A on the basis of the position of the feature location of the light transmitting/receiving device 83 on the image acquired by the imaging device 30A identified in the above-described image processing and the positional relationship between the feature location of the light transmitting/receiving device 83 and the light transmitting portion 832. According to the above process and control of the control device 50A, even if the light receiving portion 831 and the light transmitting portion 832 of the light transmitting/receiving device 83 are not arranged adjacent or close to each other, the light emitting device 1A and the light transmitting/receiving device 83 can perform two-way optical wireless communication.

Furthermore, when the positional relationship between the light emitting device 1A and the light transmitting/receiving device 83 changes, the control device 50A may detect the displacement of the feature location on the image when the imaging device 30A performs an imaging process at a predetermined frame rate and the position of the feature location of the light transmitting/receiving device 83 is identified in the above-described image processing with respect to each acquired image. Also, the control device 50A may move the light transmitting optical element so that the emission beam output by the image forming optical system 10A is input to the light receiving portion 832 on the basis of the displacement of the feature location on the image or may move the light receiving optical system so that the input beam 52 from the light transmitting portion 832 may be input to the image forming optical system 10A (the communication board 62A). Even if the positional relationship between the light emitting device 1A and the light transmitting/receiving device 83 changes due to the above process and control of the control device 50A, the light emitting device 1A and the light transmitting/receiving device 83 can continue two-way optical wireless communication.

Furthermore, at least one of the light emitting device 1A and the light transmitting/receiving device 83 may be installed in the above-described movable object and a positional relationship between the light emitting device 1A and the light transmitting/receiving device 83 may be changed by moving the movable object.

Next, an example in which the optical wireless communication system 100A includes the light emitting device 1A and a plurality of light receiving devices 81 will be described. As an example, a case where the light emitting system 100A includes the light emitting device 1A, a first light receiving device 81-1 serving as a physical object (a first physical object), and a second light receiving device 81-2 serving as a physical object (a second physical object) will be described. When the optical wireless communication system 100A includes the light emitting device 1A and the plurality of light receiving devices 81, the light emitting device 1A may have a plurality of light generating devices 60A in accordance with the number of light receiving devices 81 serving as a physical object serving as an emission target. That is, the light emitting device 1A may include a plurality of communication boards 62A, a plurality of optical fibers 61A, and a plurality of light transmitting/receiving optical elements 41. In this case, the light emitting device 1A having a plurality of light outputting portions can also be considered.

For example, when the optical wireless communication system 100A includes two light receiving devices 81 (the first light receiving device 81-1 and the second light receiving device 81-2), the light emitting device 1A may include two light generating devices 60A (referred to as a first light generating device 60A-1 and a second light generating device 60A-2). That is, the light emitting device 1A may include two communication boards 62A (referred to as the first communication board 62A-1 and the second communication board 62A-2), two optical fibers 61 (referred to as the first optical fiber 61-1 and the second optical fiber 61-2), and two light transmitting/receiving optical elements 41A (referred to as a first light transmitting/receiving optical element 41A-1 and a second light transmitting/receiving optical elements 41A-2).

The light emitting device 1A may output light (referred to as a first emission beam 51-1) for performing optical wireless communication with the first light receiving device 81-1 generated by the first communication board 62A-1 via the first optical fiber 61-1, the first light transmitting/receiving optical element 41A-1, the optical member 20A, and the image forming optical system 10A. Moreover, the light emitting device 1A may output light (referred to as a second emission beam 51-2) for performing optical wireless communication with the second light receiving device 81-2 generated by the second communication board 62A-2 via the second optical fiber 61-2, the second light transmitting/receiving optical element 41A-2, the optical member 20A, and the image forming optical system 10A.

Furthermore, the first emission beam 51-1 and the second emission beam 51-2 may have different optical conditions. For example, the optical conditions include at least one of a wavelength, frequency, phase, and polarization state.

Furthermore, the light emitting device 1A may generate the first emission beam 51-1 and the second emission beam 51-2 with the common communication board 62A.

Furthermore, the light emitting device 1A may have a configuration in which a constituent element configured to receive the emission beam 51 (the input beam 52) is omitted. For example, at least one of the light transmitting/receiving optical elements 41-1 and 41-2 may be the above-described light transmitting optical element (i.e., the light outputting portion).

Furthermore, the position changing device 40A separately moves each of the first light transmitting/receiving optical elements 41-1 and the second light transmitting/receiving optical elements 41-2 in the direction intersecting the optical axis 111a described above. For example, the position changing device 40A may include a drive device configured to move the first light transmitting/receiving optical element 41-1 in a direction intersecting the optical axis 111a and a drive device configured to move the second light transmitting/receiving optical element 41-2 in a direction intersecting the optical axis 111a.

Furthermore, the position changing device 40A may integrally move the first light transmitting/receiving optical element 41-1 and the second light transmitting/receiving optical element 41-2 in the direction intersecting the optical axis 111a described above.

The first light receiving device 81-1 may include a first light receiving portion 811-1 and the second light receiving device 81-2 may include a second light receiving portion 811-2.

Furthermore, the above-described feature location may be provided in each of the first light receiving device 81-1 and the second light receiving device 81-2. Furthermore, the feature location provided in the first light receiving device 81-1 and the feature location provided in the second light receiving device 81-2 may be able to be identified. For example, the feature location installed in the first light receiving device 81-1 and the feature location installed in the second light receiving device 81-2 may be markers having different shapes. In this case, the control device 50A may distinguish and identify the position of the feature location provided in the first light receiving device 81-1 and the position of the feature location provided in the second light receiving device 81-2 on the basis of a result of recognizing each feature location provided in the two light receiving devices 81 on the image acquired by the imaging device 30A. Furthermore, a positional relationship between the feature location of the first light receiving device 81-1 and the first light receiving portion 811-1 of the first light receiving device 81-1 may be known. Furthermore, the positional relationship between the feature location of the second light receiving device 81-2 and the second light receiving portion 811-2 of the second light receiving device 81-2 may be known.

In the optical wireless communication system 100A, the first emission beam 51-1 output from the first light transmitting/receiving optical element 41-1 provided in the light emitting device 1A via the optical member 20A and the image forming optical system 10A is received by the light receiving portion 811-1 of the first light receiving device 81-1, and therefore optical wireless communication from the light emitting device 1A to the first light receiving device 81-1 may be performed. Moreover, in the optical wireless communication system 100A, the second emission beam 51-2 output from the second light transmitting/receiving optical element 41-2 provided in the light emitting device 1A via the optical member 20A and the image forming optical system 10A is received by the light receiving portion 811-2 of the second light receiving device 81-2, and therefore optical wireless communication from the light emitting device 1A to the second light receiving device 81-2 may be performed. That is, in this example, in the optical wireless communication system 100A, information may be transmitted from the light emitting device 1A to the first light receiving device 81-1 and the second light receiving device 81-2.

The control device 50A of the light emitting device 1A may move the first light transmitting/receiving optical element 41-1 (i.e., control the position changing device 40A) so that the emission beam 51 output from the first light transmitting/receiving optical element 41-1 via the optical member 20a by the image forming optical system 10a is input to the first light receiving portion 811-1 on the basis of a position of the feature location of the first light receiving device 81-1 serving as a first physical object (a marker arranged in the first light receiving device 81-1 as an example) on the image acquired by the imaging device 30A identified in the above-described image processing and the positional relationship between the feature location of the first light receiving device 81-1 and the first light receiving portion 811-1. The control device 50A may move the second light transmitting/receiving optical element 41-2 (i.e., control the position changing device 40A) so that the emission beam 51 output from the second light transmitting/receiving optical element 41-2 via the optical member 20a by the image forming optical system 10a is input to the second light receiving portion 811-2 on the basis of a position of the feature location of the second light receiving device 81-2 serving as a second physical object (a marker arranged in the second light receiving device 81-2 as an example) on the image acquired by the imaging device 30A identified in the above-described image processing and the positional relationship between the feature location of the second light receiving device 81-2 and the second light receiving portion 811-2. Furthermore, the control device 50A may move the first light transmitting/receiving optical element 41-1 so that the emission beam 51 output by the image forming optical system 10a is input from the first light transmitting/receiving optical element 41-1 to the first light receiving portion 811-1 via the optical member 20a and move the second light transmitting/receiving optical element 41-2 so that the emission beam 51 output by the image forming optical system 10a is input from the second light transmitting/receiving optical element 41-2 to the second light receiving portion 811-2 via the optical member 20a on the basis of the feature location of the first light receiving device 81-1 and the feature location of the second light receiving device 81-2 on the image acquired by the imaging device 30A identified in the above-described image processing.

Furthermore, even if at least one of the positional relationship between the light emitting device 1A and the first light receiving device 81-1 and the positional relationship between the light emitting device 1A and the second light receiving device 81-2 changes, the control device 1A can continue optical wireless communication from the light emitting device 1A to the first light receiving device 81-1 and optical wireless communication from the light emitting device 1A to the second light receiving device 81-2 according to the above-described process and control. Furthermore, redundant description of the process and control of the control device 1A is omitted.

Furthermore, the, at least one of the light emitting device 1A, the first light receiving device 81-1, and the second light receiving device 81-2 are installed in the above-described movable object and at least one of the positional relationship between the light emitting device 1A and the first light receiving device 81-1 and the positional relationship between the light emitting device 1A and the second light receiving device 81-2 may be changed due to the movement of the movable object.

Furthermore, the optical wireless communication system 100A may include two or more light emitting devices 1. For example, when two light emitting devices 1 (referred to as the first light emitting device 1A-1 and the second light emitting device 1A-2) are provided, optical wireless communication from the first light emitting device 1A-1 to the first light receiving device 81-1 may be performed and optical wireless communication from the second light emitting device 1A-2 to the second light receiving device 81-2 may be performed. Furthermore, the optical wireless communication system 100A may include three or more light receiving devices 81. In this case, optical wireless communication from the light emitting device 1A to each of the three or more light receiving devices 81 may be performed. Furthermore, the light emitting device 1A may have three or more light generating devices 60A. Furthermore, the optical wireless communication system 100A may include three or more light emitting devices 1.

Next, an example in which the optical wireless communication system 100A includes the light emitting device 1 and the plurality of light transmitting devices 82 will be described. An example in which the light emitting system 100A includes the light emitting device 1A, the first light transmitting device 82-1 serving as the physical object (the first physical object), and the second light transmitting device 82-2 serving as the physical object (the second physical object) will be described. When the optical wireless communication system 100A includes the light emitting device 1A and the plurality of light transmitting devices 82, the light emitting device 1A may have a plurality of light generating devices 60A similar to those as described above in accordance with the number of light transmitting devices 82 serving as a physical object that is a light receiving target. In this case, the light emitting device 1A having a plurality of light receiving portions can be considered.

For example, when the optical wireless communication system 100A includes two light transmitting devices 82 (the first light transmitting device 82-1 and the second light transmitting device 82-2), the light emitting device 1A may receive light (referred to as the first input beam 52-1) for performing optical wireless communication with the light emitting device 1A output from the first light transmitting device 82-1 via the image forming optical system 10A, the optical member 20A, the first light transmitting/receiving optical element 41A-1, and the first optical fiber 61-1 with the first communication board 62A-1. Moreover, the light emitting device 1A may receive light (referred to as the second input beam 52-2) for performing optical wireless communication with the light emitting device 1A output from the second light transmitting device 82-2 via the image forming optical system 10A, the optical member 20A, the second light transmitting/receiving optical element 41A-2, and the second optical fiber 61-2 with the second communication board 62A-2.

Furthermore, the first input beam 52-1 and the second input beam 52-2 may have different optical conditions. For example, optical conditions include at least one of a wavelength, frequency, phase, and polarization state.

Furthermore, the light emitting device 1A may receive the first input beam 52-1 and the second input beam 52-2 with the common communication board 62A.

Furthermore, the light emitting device 1A may have a configuration in which a constituent element configured to emit the emission beam 51 is omitted. For example, at least one of the light transmitting/receiving optical elements 41-1 and 41-2 may be the above-described light receiving optical element (i.e., the light receiving portion).

Furthermore, the position changing device 40A separately moves each of the first light transmitting/receiving optical elements 41-1 and the second light transmitting/receiving optical elements 41-2 in the direction intersecting the optical axis 111a described above. For example, the position changing device 40A may include a drive device configured to move the first light transmitting/receiving optical element 41-1 in a direction intersecting the optical axis 111a and a drive device configured to move the second light transmitting/receiving optical element 41-2 in a direction intersecting the optical axis 111a. Furthermore, the position changing device 40A may integrally move the first light transmitting/receiving optical element 41-1 and the second light transmitting/receiving optical element 41-2 in the direction intersecting the optical axis 111a described above.

The first light transmitting device 82-1 may include a first light transmitting portion 821-1 or the second light transmitting device 82-2 may include a second light transmitting portion 821-2.

Furthermore, the above-described feature location may be provided in each of the first light transmitting device 82-1 and the second light transmitting device 82-2. Furthermore, the feature location provided in the first light transmitting device 82-1 and the feature location provided in the second light transmitting device 82-2 may be able to be identified. For example, the feature location installed in the first light transmission device 82-1 and the feature location installed in the second light transmission device 82-2 may be markers having different shapes. In this case, the control device 50A may distinguish and identify the position of the feature location provided in the first light transmitting device 82-1 and the position of the feature location provided in the second light transmitting device 82-2 on the basis of results of recognizing feature locations provided in the two light transmitting devices 82 on the image acquired by the imaging device 30A. Furthermore, a positional relationship between the feature location of the first light transmitting device 82-1 and the first light transmitting portion 821-1 of the first light transmitting device 82-1 may be known. Furthermore, a positional relationship between the feature location of the second light transmitting device 82-2 and the second light transmitting portion 821-2 of the second light transmitting device 82-2 may be known.

In the optical wireless communication system 100A, the first input beam 52-1 output from the first light transmitting portion 821-1 of the first light transmitting device 82-1 is received by the first communication board 62A-1 via the image forming optical system 10A, the optical member 20A, and the first light transmitting/receiving optical element 41-1 provided in the light emitting device 1A, and therefore optical wireless communication from the first light transmitting device 82-1 to the light emitting device 1A may be performed. Moreover, in the optical wireless communication system 100A, the second input beam 52-2 output from the second light transmitting portion 821-2 of the second light transmitting device 82-2 is received by the second communication board 62A-2 via the image forming optical system 10A, the optical member 20A, and the second light transmitting/receiving optical element 41-2 provided in the light emitting device 1A, and therefore optical wireless communication from the second light transmitting device 82-2 to the light emitting device 1A may be performed. That is, in this example, in the optical wireless communication system 100A, information may be transmitted from the first light transmitting device 82-1 and the second light transmitting device 82-2 to the light emitting device 1A.

The control device 50A may move the first light transmitting/receiving optical element 41-1 so that the first input beam 52-1 output from the first light transmitting portion 821-1 is input to the first light transmitting/receiving optical element 41-1 (the first communication board 62A-1) on the basis of a position of a feature location of the first light transmitting device 82-1 serving as a first physical object (a marker arranged in the first light transmitting device 82-1 as an example) on the image acquired by the imaging device 30A identified in the above-described image processing and a positional relationship between the feature location of the first light transmitting device 82-1 and the first light transmitting portion 821-1 of the first light transmitting device 82-1. The control device 50A may move the second light transmitting/receiving optical element 41-2 so that the second input beam 52-2 output from the second light transmitting portion 821-2 is input to the second light transmitting/receiving optical element 41-2 (the second communication board 62A-2) on the basis of a position of a feature location of the second light transmitting device 82-2 serving as a second physical object (a marker arranged in the second light transmitting device 82-2 as an example) on the image acquired by the imaging device 30A identified in the above-described image processing and a positional relationship between the feature location of the second light transmitting device 82-2 and the second light transmitting portion 821-2 of the second light transmitting device 82-2. Furthermore, the control device 50A may move the first light transmitting/receiving optical element 41-1 so that the input beam 52-1 output from the first light transmitting device 82-1 is input to the first light transmitting/receiving optical element 41-1 (the first communication board 62A-1) and move the second light transmitting/receiving optical element 41-2 so that the input beam 52-2 output from the second light transmitting device 82-2 is input to the second light transmitting/receiving optical element 41-2 (the second communication board 62A-2) on the basis of the feature location of the first light transmitting device 82-1 and the feature location of the second light transmitting device 82-2 on the image acquired by the imaging device 30A identified in the above-described image processing.

Furthermore, even if at least one of the positional relationship between the light emitting device 1A and the first light transmitting device 82-1 and the positional relationship between the light emitting device 1A and the second light transmitting device 82-2 changes, the control device 1A can continue optical wireless communication from the first light transmitting device 82-1 to the light emitting device 1A and optical wireless communication from the second light transmitting device 82-2 to the light emitting device 1A according to the above-described process and control. Furthermore, redundant description of the process and control of the control device 1A is omitted.

Furthermore, at least one of the light emitting device 1A, the first light transmitting device 82-1, and the second light transmitting device 82-2 may be installed in the above-described movable object and at least one of a positional relationship between the light emitting device 1A and the first light transmitting device 82-1 and a positional relationship between the light emitting device 1A and the second light transmitting device 82-2 may be changed due to the movement of the movable object.

Furthermore, the optical wireless communication system 100A may include two or more light emitting devices 1. For example, when the two light emitting devices 1 are provided, optical wireless communication from the first light transmitting device 82-1 to the first light emitting device 1A-1 may be performed and optical wireless communication from the second light transmitting device 82-2 to the second light emitting device 1A-2 may be performed. Furthermore, the optical wireless communication system 100A may include three or more light transmitting devices 82. In this case, optical wireless communication from each of the three or more light transmitting devices 82 to the light emitting device 1 may be performed. Furthermore, the light emitting device 1A may have three or more light generating devices 60A. Furthermore, the optical wireless communication system 100A may include three or more light emitting devices 1.

Next, an example in which the optical wireless communication system 100A includes the light emitting device 1 and a plurality of light transmitting/receiving devices 82 will be described.

As an example, a case where the light emitting system 100A includes the light emitting device 1A, a first light transmitting/receiving device 83-1 serving as a physical object (a first physical object), and a second light transmitting/receiving device 83-2 serving as a physical object (a second physical object) will be described. When the optical wireless communication system 100A includes the light emitting device 1A and the plurality of light transmitting/receiving devices 83, the light emitting device 1A may have a plurality of light generating devices 60A similar to those as described above in accordance with the number of light transmitting/receiving devices 83 serving as physical objects that are emission and light receiving targets. In this case, the light emitting device 1A having a plurality of light outputting portions and a plurality of light receiving portions can be considered.

For example, when the optical wireless communication system 100A includes two light transmitting/receiving devices 83 (the first light transmitting/receiving device 83-1 and the second light transmitting/receiving device 83-2), the light emitting device 1A may output the first emission beam 51-1 generated by the first communication board 62A-1 from the image forming optical system 10A and the first input beam 52-1 for optical wireless communication with the light emitting device 1A output from the first light transmitting/receiving device 83-1 may be received by the first light transmitting/receiving optical element 41A-1 (the first communication board 62A-1) via the image forming optical system 10A. Moreover, the light emitting device 1A may output the second emission beam 51-2 generated by the second communication board 62A-2 from the image forming optical system 10A and the second input beam 52-2 for performing optical wireless communication with the light emitting device 1A output from the second light transmitting/receiving device 83-2 may be received by the second light transmitting/receiving optical element 41A-2 (the second communication board 62A-2) via the image forming optical system 10A.

Furthermore, the first emission beam 51-1 and the second emission beam 51-2 may have different optical conditions. Moreover, the second input beam 52-1 and the second input beam 52-2 may have different optical conditions. Moreover, the first emission beam 51-1 and the first input beam 52-1 may have the same optical condition. Moreover, the second emission beam 51-2 and the second input beam 52-2 may have the same optical condition. For example, optical conditions include at least one of a wavelength, frequency, phase, and polarization state. Furthermore, the light emitting device 1A may generate the first emission beam 51-1 and the second emission beam 51-2 with the common communication board 62A. Moreover, the light emitting device 1A may receive the first input beam 52-1 and the second input beam 52-2 with the common communication board 62A.

Furthermore, the position changing device 40A separately moves each of the first light transmitting/receiving optical element 41A-1 and the second light transmitting/receiving optical element 41A-2 in a direction intersecting the optical axis 111a described above. For example, the position changing device 40A may include a drive device configured to move the first light transmitting/receiving optical element 41A-1 in a direction intersecting the optical axis 111a and a drive device configured to move the second light transmitting/receiving optical element 41A-2 in a direction intersecting the optical axis 111a. Furthermore, the position changing device 40A may integrally move the first light transmitting/receiving optical element 41A-1 and the second light transmitting/receiving optical element 41A-2 in the direction intersecting the optical axis 111a described above.

Furthermore, the first light transmitting/receiving device 83-1 may include at least one of the first light receiving portion 831-1 and the first light transmitting portion 832-1 and the second light transmitting/receiving device 83-2 may include at least one of the second light receiving portion 831-2 and the second light transmitting portion 832-2.

Furthermore, the above-described feature location may be provided in each of the first light transmitting/receiving device 83-1 and the second light transmitting/receiving device 83-2. Furthermore, the feature location provided in the first light transmitting/receiving device 83-1 and the feature location provided in the second light transmitting/receiving device 83-2 may be able to be identified. For example, the feature location installed in the first light transmitting/receiving device 83-1 and the feature location installed in the second light transmitting/receiving device 83-2 may be markers having shapes different from each other. In this case, the control device 50A may distinguish and identify the position of the feature location provided in the first light transmitting/receiving device 83-1 and the position of the feature location provided in the second light transmitting/receiving device 83-2 on the basis of results of recognizing feature locations provided in the two light transmitting/receiving devices 83 on the image acquired by the imaging device 30A.

Furthermore, a positional relationship between the feature location of the first light transmitting/receiving device 83-1 and at least one of the first light receiving portion 831-1 and the first light transmitting portion 832-1 of the first light transmitting/receiving device 83-1 may be known. Furthermore, a positional relationship between the feature location of the second light transmitting/receiving device 83-2 and at least one of the second light receiving portion 831-2 and the second light transmitting portion 832-2 of the second light transmitting/receiving device 83-2 may be known.

In the light emitting system 100A, the first emission beam 51-1 output from the first light transmitting/receiving optical element 41A-1 provided in the light emitting device 1A via the optical member 20A and the image forming optical system 10A is emitted to the first light receiving portion 831-1 of the first light transmitting/receiving device 83-1 and the first input beam 52-1 from the first light transmitting portion 832-1 of the first light transmitting/receiving device 83-1 is received by the first communication board 62A-1 via the image forming optical system 10A, the optical member 20A, and the first light transmitting/receiving optical element 41A-1 provided in the light emitting device 1A, such that the light emitting device 1A and the first light transmitting/receiving device 83-1 may perform optical wireless communication.

Moreover, in the light emitting system 100A, the second emission beam 51-2 output from the second light transmitting/receiving optical element 41A-2 provided in the light emitting device 1A via the optical member 20A and the image forming optical system 10A is emitted to the second light receiving portion 831-2 of the second light transmitting/receiving device 83-2 and the second input beam 52-2 from the second light transmitting portion 832-2 of the second light transmitting/receiving device 83-2 is received by the second communication board 62A-2 via the image forming optical system 10A, the optical member 20A, and the second light transmitting/receiving optical element 41A-2 provided in the light emitting device 1A, such that the light emitting device 1A and the second light transmitting/receiving device 83-2 may perform optical wireless communication. That is, in this example, in the optical wireless communication system 100A, information may be mutually transmitted and received between the light emitting device 1A and the first light transmitting/receiving device 83-1 or information may be mutually transmitted and received between the light emitting device 1A and the second light transmitting/receiving device 83-2.

For example, when the first light receiving portion 831-1 and the first light transmitting portion 832-1 of the first light transmitting/receiving device 83-1 are arranged adjacent or close to each other, the control device 50A may move the first light transmitting/receiving optical element 41A-1 so that the first emission beam 51-1 output by the image forming optical system 10A is input from the first light transmitting/receiving optical element 41A-1 to the first light receiving portion 831-1 via the optical member 20A on the basis of a position of the feature location of the first light transmitting/receiving device 83-1 (a marker arranged in the first light transmitting/receiving device 83-1 in an example) on the image acquired by the imaging device 30A identified in the above-described image processing and a positional relationship between the feature location of the first light transmitting/receiving device 83-1 and the first light receiving portion 831-1. Here, the first emission beam 51-1 from the first light transmitting portion 832-1 becomes light with a spreading property because it diffuses to some extent in accordance with a distance from the first light transmitting portion 832-1. Therefore, even if the control device 50A moves the first light transmitting/receiving optical element 41A-1 so that the first emission beam 51-1 is input to the first light receiving portion 831-1, the first input beam 52-1 from the first light transmitting portion 832-1 is input to the image forming optical system 10A and input to the first light transmitting/receiving optical element 41A-1 after movement (i.e., input to the first communication board 62A-1) through the optical member 20A.

Furthermore, the control device 50A may control the position changing device 40A so that the first input beam 52-1 from the first light transmitting portion 832-1 is input to the first light transmitting/receiving optical element 41A-1 on the basis of the position of the feature location of the first light transmitting/receiving device 83-1 serving as a physical object on the image acquired by the imaging device 30A identified in the above-described image processing and a positional relationship between the feature location of the first light transmitting/receiving device 83-1 and the first light transmitting portion 832-1 of the first light transmitting/receiving device 83-1.

Furthermore, when the positional relationship between the light emitting device 1A and the first light transmitting/receiving device 83-1 changes, the control device 50A may control the position changing device 40A so that the position of the feature location of the first light transmitting/receiving device 83-1 on an acquired image is identified in the above-described image processing every time the imaging device 30A performs an imaging process at a predetermined frame rate to acquire the image and the first emission beam 51-1 from the light emitting device 1A is input to the first light receiving portion 831-1 (or so that the first input beam 52-1 from the first light transmitting portion 832-1 is input to the first light transmitting/receiving optical element 41A-1) as in the above-described process and control.

Furthermore, the control device 50A may detect the displacement of the feature location of the first light transmitting/receiving device 83-1 on the image by identifying the position of the feature location of the first light transmitting/receiving device 83-1 in the above-described image processing with respect to each image acquired at the predetermined frame rate. Also, the control device 50A may control the position changing device 40A so that the first emission beam 51-1 from the light emitting device 1A is input to the first light receiving portion 831-1 (or the first input beam 52-1 from the first light transmitting portion 832-1 is input to the first light transmitting/receiving optical element 41A-1) on the basis of the displacement of the feature location on the image. Even if the positional relationship between the light emitting device 1A and the first light transmitting/receiving device 83-1 changes due to the above-described process and control of the control device 50A, the light emitting device 1A and the first light transmitting/receiving device 83-1 can continue two-way optical wireless communication.

As described above, the first light transmitting/receiving optical element 41A-1 may be divided into a light transmitting optical element (that may be referred to as a first light transmitting optical element in this case) and a light receiving optical element (that may be referred to as a first light receiving optical element in this case). As described above, the position changing device 40A may include a drive device configured to move a light transmitting optical element and a drive device configured to move a light receiving optical element. In this case, the control device 50A may move the light transmitting optical element so that the first emission beam 51-1 output by the image forming optical system 10A is input from the light transmitting optical element to the first light receiving portion 831-1 via the optical member 20A on the basis of a position of the feature location of the first light transmitting/receiving device 83-1 on the image acquired by the imaging device 30A identified in the above-described image processing and a positional relationship between the feature location of the first light transmitting/receiving device 83-1 and the first light receiving portion 831-1. The control device 50A may control the light receiving optical element so that the first input beam 52-1 from the first light transmitting portion 832-1 is input to the light receiving optical element via the image forming optical system 10A and the optical member 20A on the basis of a position of the feature location of the first light transmitting/receiving device 83-1 on the image acquired by the imaging device 30A identified in the above-described image processing and a positional relationship between the position of the feature location of the first light transmitting/receiving device 83-1 and the first light transmitting portion 832-1. Even if the first light receiving portion 831-1 and the first light transmitting portion 832-1 of the first light transmitting/receiving device 83-1 are not arranged adjacent or close to each other according to the above-described process and control of the control device 50A, the light emitting device 1A and the first light transmitting/receiving device 83-1 can perform two-way optical wireless communication.

Furthermore, when a positional relationship between the light emitting device 1A and the first light transmitting/receiving device 83-1 changes, the control device 50A may detect the displacement of the feature location on the image by identifying the position of the feature location of the first light transmitting/receiving device 83-1 in the above-described image processing with respect to each image acquired in an imaging process performed by the imaging device 30A at the predetermined frame rate. Also, the control device 50A may move the light transmitting optical element so that the first emission beam 51-1 output by the image forming optical system 10A is input to the first light receiving portion 832-1 or may move the light receiving optical element so that the first input beam 52-1 from the first light transmitting portion 832-1 is input to the light receiving optical element via the image forming optical system 10A on the basis of the displacement of the feature location on the image. Even if the positional relationship between the light emitting device 1A and the first light transmitting/receiving device 83-1 changes due to the above process and control of the control device 50A, the light emitting device 1A and the first light transmitting/receiving device 83-1 can continue two-way optical wireless communication.

Furthermore, at least one of the light emitting device 1A and the first light transmitting/receiving device 83-1 may be installed in the above-described movable object and a positional relationship between the light emitting device 1A and the first light transmitting/receiving device 83-1 may be changed by moving the movable object.

Furthermore, description of the process and control of the control device 50A when the light emitting device 1A and the second light transmitting/receiving device 83-2 perform optical wireless communication similar to the above-described process and control of the control device 50A when the light emitting device 1A and the first light transmitting/receiving device 83-1 perform optical wireless communication (i.e., a process and control when the control target of the control device 50A in the above description is switched from the first light transmitting/receiving optical element 41A-1 to the second light transmitting/receiving optical element 41A-2 and switched from the first light transmitting/receiving device 83-1 to the second light transmitting/receiving device 83-2) is omitted.

Furthermore, the optical wireless communication system 100A may include two or more light emitting devices 1. For example, when the two light emitting devices 1 are provided, optical wireless communication may be performed between the first light emitting device 1A-1 serving as the first light emitting device and the first light transmitting/receiving device 83-1 and optical wireless communication may be performed between the second light emitting device 1A-2 serving as the second light emitting device and the second light transmitting/receiving device 83-2. Furthermore, the optical wireless communication system 100A may include three or more light transmitting/receiving devices 83. In this case, optical wireless communication may be performed between each of the three or more light transmitting/receiving devices 83 and the light emitting device 1A. Furthermore, the light emitting device 1A may have three or more light generating devices 60A. Furthermore, the optical wireless communication system 100A may include three or more light emitting devices 1.

As described above, according to the present embodiment, the light emitting device 1 includes the image forming optical system 10, the optical member 20, the imaging device 30, the position changing device 40, and the control device 50, and therefore the emission beam 51 is emitted from the light generating device 60 to the physical object. The light emitting device 1 includes the optical member 20 to output light input via the image forming optical system 10 toward the image plane 210 of the image forming optical system 10 and output the emission beam 51 from the light generating device 60 input via the conjugate plane 220 conjugate to the image plane 210 toward the image forming optical system 10. The light emitting device 1 includes the imaging device 30 to capture at least a part of an image of the physical object formed on the image plane 210 by the image forming optical system 10. The light emitting device 1 includes the position changing device 40 to change the position of the emission beam 51 from the light generating device 60 on the conjugate plane 220 and change the emission position of the emission beam 51 output by the image forming optical system 10. The light emitting device 1 includes the control device 50 to control the position changing device 40 on the basis of imaging results of the imaging device 30 and emit the emission beam 51 output by the image forming optical system 10 to at least a part of the physical object.

Therefore, according to the present embodiment, the emission beam 51 can be emitted to a position corresponding to the position of the physical object.

Moreover, according to the above-described embodiment, the image forming optical system 10 is telecentric on the conjugate plane 220 side. Therefore, according to the present embodiment, it is not necessary to adjust an angle of the emission beam 51 output from the light transmitting/receiving optical element 41 and the light transmitting/receiving optical element 41 can be easily controlled.

Moreover, according to the above-described embodiment, a maximum angle of view of the image forming optical system 10 is 170° or more. Therefore, the light emitting device 1 can emit the emission beam 51 to a wide range.

Moreover, according to the above-described embodiment, the image forming optical system 10 forms a reduced image of the physical object on the image plane 210. That is, the light emitting device 1 can transmit and receive light at an angle of view corresponding to the magnification of the image forming optical system 10 in a range where the light transmitting/receiving optical element 41 can move. Therefore, the light emitting device 1 can receive light at a wide angle of view and transmit light at a wide angle of view. Moreover, it is possible to increase an amount of change in a direction in which light is transmitted with respect to the movement distance of the light transmitting/receiving optical element 41. Therefore, it is possible to change a direction in which light is transmitted at high speed. Even if an input direction of light input to the light emitting device 1 is greatly changed, a movement distance of the light transmitting/receiving optical element 41 can be reduced. Therefore, even if the input direction changes significantly in a short period, it is easy to track the change.

Moreover, according to the above-described embodiment, the control device 50 controls the position changing device 40 on the basis of a feature location of the physical object detected on the basis of imaging results obtained in the imaging process of the imaging device 30. Therefore, the light emitting device 1 can easily track the physical object even if the physical object moves.

Moreover, according to the above-described embodiment, the imaging device 30 has a plurality of pixels. The imaging device 30 has the plurality of pixels, such that it is possible to accurately ascertain the position of the physical object.

Moreover, according to the above-described embodiment, the light emitting device 1 includes the light outputting portion (the light transmitting/receiving optical element 41) to output the emission beam 51 to the optical member 20 and includes the position changing device 40 to move the light outputting portion in a direction intersecting the optical axis 111 on the light outputting portion side of the image forming optical system 10. That is, the light emitting device 1 changes the emission position of the emission beam 51 by moving the position of the light transmitting/receiving optical element 41. Therefore, according to the present embodiment, the light emitting device 1 can easily change the emission position of the emission beam 51 and can easily track the physical object.

Moreover, according to the above-described embodiment, the light receiving portion 831 of the light receiving device 81 is an example of the physical object to which the light emitting device 1 emits the emission beam 51. That is, the emission beam 51 is emitted to the light receiving portion 831. Therefore, the light emitting device 1 can perform optical wireless communication with the light receiving device 81.

Moreover, according to the above-described embodiment, the light emitting device 1 includes the light receiving portion 120 to receive the input beam 52 output from a light outputting portion (a light transmitting portion) of the light transmitting device 82 serving as the physical object and input to the image forming optical system 10 via the optical member 20. Therefore, the light emitting device 1 can easily perform optical wireless communication with the light transmitting device 82.

Moreover, according to the above-described embodiment, the light receiving portion 120 receives the input beam 52 via the conjugate plane 220. Therefore, according to the present embodiment, it is possible to adjust a position of the light receiving portion 120 to a position where the input beam 52 is input by moving the light receiving portion 120 to a position where the imaging device 30 has performed an imaging process.

Moreover, according to the above-described embodiment, the input beam 52 is a light beam for performing optical wireless communication between the light emitting device 1 and the light transmitting device 82. Therefore, according to the present embodiment, the light emitting device 1 can perform optical wireless communication with the light transmitting device 82.

Moreover, according to the above-described embodiment, the light transmitting device 82 is an example of the light transmitting/receiving device 83 including the light receiving portion 831 and the input beam 52 is output from the light transmitting/receiving device 83 and the emission beam 51 is emitted to the light receiving portion 831. Each of the input beam 52 and the emission beam 51 is a light beam for performing optical wireless communication with the light transmitting/receiving device 83. Therefore, according to the present embodiment, the light emitting device 1 can perform optical wireless communication with the light transmitting device 82.

Moreover, according to the above-described embodiment, an image of at least a part of a second physical object different from the first physical object is formed on the image plane 210 by the image forming optical system 10 and the imaging device 30 captures an image of at least a part of the first physical object and an image of at least a part of the second physical object. That is, the imaging device 30 captures images of the two physical objects.

The light emitting device 1 outputs a first emission beam to the first physical object on the basis of the position of the imaged first physical object and outputs a second emission beam to the second physical object on the basis of a position of the imaged second physical object. Therefore, the light emitting device 1 can simultaneously emit the emission beam 51 to a plurality of light receiving devices 81.

Moreover, according to the above-described embodiment, the first physical object is at least a part of the first light receiving device 81-1 and the second physical object is at least a part of the second light receiving device 81-2. The first emission beam 51-1 is emitted to the light receiving portion (the first light receiving portion 811-1) of the first light receiving device 81-1 and the second emission beam 51-2 is emitted to the light receiving portion (the second light receiving portion 811-2) of the second light receiving device 81-2. Therefore, the light emitting device 1 can simultaneously emit the emission beam 51 to the plurality of light receiving devices 81.

Moreover, according to the above-described embodiment, the light emitting device 1 further includes the light receiving portion to receive the first input beam 52-1 and the second input beam 52-2 via the optical member 20. Therefore, the light emitting device 1 can simultaneously receive input beams 52 emitted from the plurality of light transmitting devices 82.

Moreover, according to the above-described embodiment, the first light transmitting device 82-1 may be the first light transmitting/receiving device 83-1 including the light receiving portion 831-1 and the second light transmitting device 82-2 may be the second light transmitting/receiving device 83-2 including the light receiving portion 831-2. Therefore, according to the present embodiment, the light emitting device 1 can perform optical wireless communication with a plurality of light transmitting/receiving devices 83.

Moreover, according to the above-described embodiment, in the optical wireless communication system 100A, the emission beam 51 from the light emitting device 1 is received by the light receiving portion 811 of the light receiving device 81, and therefore the light emitting device 1 and the light receiving device 81 perform optical wireless communication. Therefore, according to the present embodiment, in the optical wireless communication system 100A, the light emitting device 1 can transmit information to the light receiving device 81.

Moreover, according to the above-described embodiment, in the optical wireless communication system 100A, the input beam 52 from the light transmitting device 82 is received by the light receiving portion of the light emitting device 1, and therefore the light transmitting device 82 and the light emitting device 1 perform optical wireless communication. Therefore, according to the present embodiment, in the optical wireless communication system 100A, the light emitting device 1 can receive information from the light transmitting device 82.

Moreover, according to the above-described embodiment, in the optical wireless communication system 100A, the emission beam 51 is emitted from the light emitting device 1 to the light receiving portion 831 of the light transmitting/receiving device 83 and the input beam 52 from the light transmitting/receiving device 83 is received by the light receiving portion of the light emitting device 1, and therefore the light emitting device 1 and the light transmitting/receiving device 83 perform optical wireless communication. Therefore, according to the present embodiment, in the optical wireless communication system 100A, the light emitting device 1 can transmit and receive information to and from the light transmitting/receiving device 83.

Moreover, according to the above-described embodiment, in the optical wireless communication system 100A, the light receiving portion (the first light receiving portion 811-1) of the first light receiving device 81-1 receives the first emission beam 51-1 from the light emitting device 1 and the light receiving portion (the second light receiving portion 811-2) of the second light receiving device 81-2 receives the second emission beam 51-2. Therefore, according to the present embodiment, in the optical wireless communication system 100A, information can be transmitted from the light emitting device 1 to the plurality of light receiving devices 81.

Moreover, according to the above-described embodiment, the light receiving portion of the light emitting device 1 receives the first input beam 52-1 from the first light transmitting device 82-1 and the second input beam 52-2 from the second light transmitting device 82-2 and performs optical wireless communication with the first light transmitting device 82-1 and the second light transmitting device 82-2. Therefore, according to the present embodiment, the light emitting device 1 can simultaneously receive information transmitted from the plurality of light transmitting devices 82.

Moreover, according to the above-described embodiment, the light emitting device 1 emits the first emission beam 51-1 to the light receiving portion (the first light receiving portion 831-1) of the first light transmitting/receiving device 83-1 and emits the second emission beam 51-2 to the light receiving portion (the second light receiving portion 831-2) of the second light transmitting/receiving device 83-2. Therefore, according to the present embodiment, the light emitting device 1 can simultaneously transmit information to the plurality of light transmitting/receiving devices 83.

Furthermore, in the present embodiment, light of at least one of the emission beam 51 and the input beam 52 is not limited to light for performing optical wireless communication. For example, light of at least one of the emission beam 51 and the input beam 52 may be light for optical wireless power supply. A wavelength of light for performing optical wireless power supply may be an infrared wavelength band, an ultraviolet wavelength band, or a wavelength band of visible light. An output of the light for optical wireless power supply may be several watts (W), several tens of watts (W), or several kilowatts (kW).

As an example, when the emission beam 51 is used as light for performing optical wireless power supply, the light emitting device 1A may emit the emission beam 51 to a target device for performing optical wireless power supply (e.g., at least one device of the light emitting device 1B, the light receiving device 82, and the light transmitting/receiving device 83) according to the above-described process and control of the control device 50 and therefore may supply electric power to the device. Furthermore, the light emitting device 1A may be referred to as a power supply device.

### [Second Embodiment]

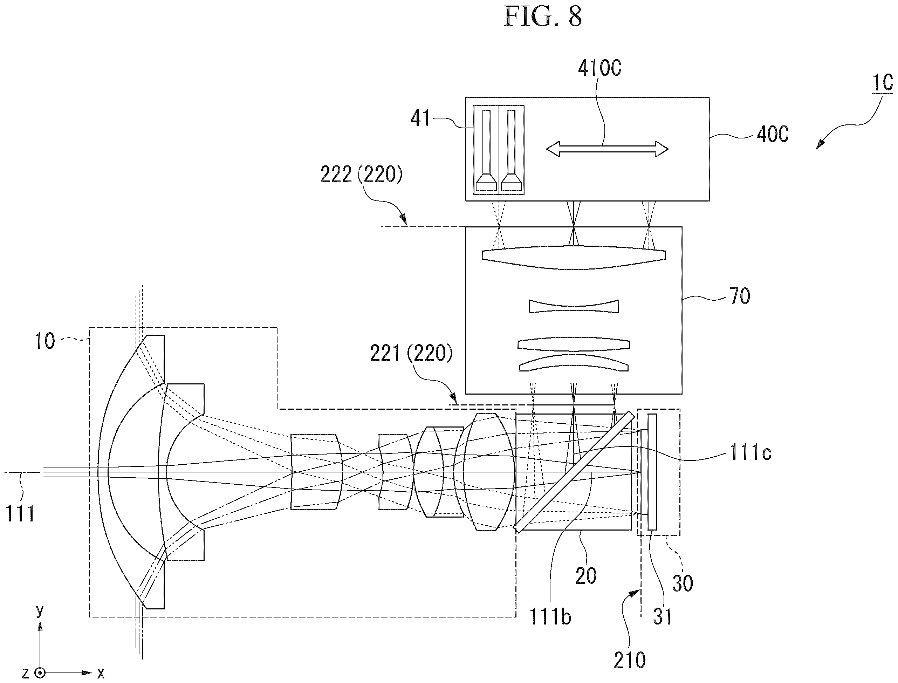

FIG. 8 is a schematic configuration diagram schematically showing a light emitting device according to a second embodiment. A light emitting device 1C according to the second embodiment will be described with reference to FIG. 8. Unlike the light emitting device 1, the light emitting device 1C includes an optical system 70. Moreover, unlike the light emitting device 1, the light emitting device 1C includes a position changing device 40C instead of the position changing device 40. Furthermore, the above-described feature location may be provided in the light emitting device 1C. Furthermore, the light emitting device 1C may be installed on the above-described movable object. Furthermore, constituent elements similar to those of the light emitting device 1 are denoted by similar reference signs and description thereof may be omitted in the description of the light emitting device 1C. Furthermore, the illustration of the control device 50 and parts of the light generating device 6 (the optical fiber 61 and the communication board 62) is omitted in FIG. 8.

The light emitting system 100 may perform optical wireless communication in the present embodiment.

The optical system 70 may be installed between the light transmitting/receiving optical element 41 and the optical member 20. When the optical system 70 is installed, a first conjugate plane 221 and a second conjugate plane 222 are formed as the conjugate plane 220 as shown in FIG. 8.

As an example, the first conjugate plane 221 may be formed at a position similar to that of the conjugate plane 220 described above or may be formed at a position different from that of the conjugate plane 220. The second conjugate plane 222 is formed between the light transmitting/receiving optical element 41 and the optical system 70 and is a plane conjugate to the first conjugate plane 221. The position changing device 40C changes the position of the emission beam 51 from the light generating device 60 on the second conjugate plane 222 by moving the light transmitting/receiving optical element 41. Furthermore, it can be said that the second conjugate plane 222 is formed between the position changing device 40C and the optical system 70.

The emission beam 51 from the light transmitting/receiving optical element 41 (the light generating device 60) is input to the optical system 70 via the second conjugate plane 222. Also, the emission beam 51 output from the optical system 70 is input to the optical member 20 via the first conjugate plane 221. Furthermore, it can be said that the emission beam 51 from the light transmitting/receiving optical element 41 is input to the optical member 20 via the conjugate plane 220.

The position changing device 40C may change the position of the light transmitting/receiving optical element 41 on the x-z plane so that the position of the emission beam 51 on the second conjugate plane 222 is changed. It can be said that the position changing device 40C changes the position of the emission beam 51 on the conjugate plane 220 because the second conjugate plane 222 is the conjugate plane 220. The position changing device 40C may change the emission position of the emission beam 51 output by the image forming optical system 10. Specifically, the position changing device 40C may be a drive device for changing the position of the emission beam 51 from the light transmitting/receiving optical element 41 on the second conjugate plane 222. The position changing device 40 may change the position of the emission beam 51 from the light transmitting/receiving optical element 41 on the second conjugate plane 222 so that the emission position of the emission beam 51 output by the image forming optical system 10 is changed.

Furthermore, when the position of the emission beam 51 from the light transmitting/receiving optical element 41 on the second conjugate plane 222 changes, the position where the emission beam 51 is input to the image forming optical system 10 via the optical system 70 and the optical member 20 changes. As the input position of the emission beam 51 from the optical member 20 side to the image forming optical system 10 changes, the emission position of the emission beam 51 output by the image forming optical system 10 changes. Furthermore, it can be said that the position changing device 40C changes the position on the second conjugate plane 222 of the emission beam 51 from the light transmitting/receiving optical element 41 so that the emission direction of the emission beam 51 output by the image forming optical system 10 is changed.

Like the position changing device 40, the position changing device 40C may be a drive device for moving the light transmitting/receiving optical element 41 of the light emitting device 1C. The position changing device 40C may be a drive device configured to move the light generating device 60. The position changing device 40C may be a drive device configured to move the light transmitting/receiving optical element 41 with respect to the optical system 70, the optical member 20, the image forming optical system 10, and the imaging device 30. The position changing device 40C may be a well-known drive device such as a linear motor or a stepping motor that can move the light transmitting/receiving optical element 41. Furthermore, the position changing device 40 may be a drive device configured to move the optical system 70, the optical member 20, the image forming optical system 10, and the imaging device 30 with respect to the light transmitting/receiving optical element 41.

Here, among the optical axes 111 of the image forming optical system 10, an optical axis from the optical member 20 to the second conjugate plane 222 (the conjugate plane 220) can be referred to as an optical axis 111c and an optical axis from the optical member 20 to the image plane 210 can be referred to as an optical axis 111b. Furthermore, the optical axis 111c may be referred to as the optical axis of the second conjugate plane 222 side of the image forming optical system 10 (i.e., the conjugate plane 220 side). Moreover, the optical axis 111b may be referred to as the optical axis on the image plane 210 side of the image forming optical system 10. In this case, it can be said that the position changing device 40C moves the light transmitting/receiving optical element 41 in a direction intersecting the optical axis 111c. Moreover, it can be said that the position changing device 40C moves the light transmitting/receiving optical element 41 in a direction orthogonal to the optical axis 11 1c. It can be said that the position changing device 40C moves the light transmitting/receiving optical element 41 in a plane intersecting the optical axis 111c. The position changing device 40C may change the position of the emission beam 51 from the light transmitting/receiving optical element 41 on the second conjugate plane 222 by moving the light transmitting/receiving optical element 41 as described above. Furthermore, as described above, because the light transmitting/receiving optical element 41 can be considered as a light outputting portion, the optical axis 111c may be referred to as an optical axis on the light outputting portion side of the image forming optical system 10. Moreover, as described above, because the light transmitting/receiving optical element 41 can be considered as a light receiving portion, the optical axis 111c may be referred to as the optical axis on the light receiving portion side of the image forming optical system 10. Furthermore, as described above, because the light transmitting/receiving optical element 41 can be considered as a light transmitting/receiving portion, the optical axis 111c may be referred to as the optical axis on the light transmitting/receiving portion side of the image forming optical system 10.

The position changing device 40C may move the emission position of the emission beam 51 in a direction of an arrow 410C, for example, by moving the light transmitting/receiving optical element 41 in a direction of an arrow 410.

Moreover, the position changing device 40C changes a light reception position of the input beam 51 output from the light emitting device 1C of the other party for performing optical wireless communication and the above-described light transmitting device 82. Furthermore, it can be said that the light reception position is a position where the input beam 52 from the light emitting device 1C of the other party for performing optical wireless communication or the light transmitting device 82 is input to the image forming optical system 10. Moreover, it can be said that the light reception position is a position of the light transmitting/receiving optical element 41 in a direction orthogonal to the optical axis 111c. For example, the position changing device 40C changes the light reception position of the emission beam 51 by moving the light transmitting/receiving optical element 41 in the direction intersecting the optical axis 111c as described above. When the position changing device 40C moves the light transmitting/receiving optical element 41 in a direction intersecting the optical axis 111c, the optical path of the input beam 52 from the image forming optical system 10 to the light transmitting/receiving optical element 41 changes. The optical path from the image forming optical system 10 to the light transmitting/receiving optical element 41 changes, and therefore the light reception position of the input beam 52 changes. The position changing device 40 may change the light reception position of the input beam 52 by moving the light transmitting/receiving optical element 41 as described above. Furthermore, the position changing device 40C may change the light reception position of the input beam 52 by moving the whole of the light generating device 60 as described above. Furthermore, it can be said that the position changing device 40C changes the light reception direction of the input beam 52 by moving the light transmitting/receiving optical element 41 as described above.

The optical system 70 may be telecentric with respect to at least one of the light transmitting/receiving optical element 41 side and the optical member 20 side. For example, when the optical system 70 is telecentric on either the light transmitting/receiving optical element 41 side or the optical member 20 side, it is possible to easily align the position of the light transmitting/receiving optical element 41 on the x-z plane and at least a part of the physical object that is an emission target. Furthermore, the light transmitting/receiving optical element 41 side of the optical system 70 may be referred to as the position changing device 40C side of the optical system 70. Furthermore, the light transmitting/receiving optical element 41 side of the optical system 70 may be referred to as the second conjugate plane 222 side of the optical system 70. Furthermore, the optical member 20 side of the optical system 70 may be referred to as the first conjugate plane 221 side of the optical system 70.

As shown in FIG. 8, the optical system 70 installed between the first conjugate plane 221 and the second conjugate plane 222 may be a magnification optical system. When the optical system 70 is a magnification optical system, the optical system 70 forms the second conjugate plane 222 in which the first conjugate plane 221 is magnified at a predetermined magnification.

When the optical system 70 is a magnification optical system, it is only necessary for the control device 50 of the light emitting device 1C to position the light transmitting/receiving optical element 41 so that the input position of the emission beam 51 is a desired input position (i.e., the emission position of the emission beam 51 output by the image forming optical system 10 for the physical object is a desired emission position where optical communication is possible) on the second conjugate plane 222 magnified at a predetermined magnification. Therefore, the control device 50 (the position changing device 40C) of the light emitting device 40C can more precisely control the emission position for the physical object. In other words, the position changing device 40C can be changed to an inexpensive drive device having a larger positioning error. In other words, the control device 50 can be changed to an inexpensive control device having a larger control error.

Moreover, when the optical system 70 is a magnification optical system, because a wider space can be secured on the x-z plane (e.g., on a plane intersecting the optical axis 111c of the image forming optical system 10), an installation space for installing the light transmitting/receiving optical element 41 and the position changing device 40C can be secured on a plane orthogonal to the y-axis direction.

Moreover, the optical system 70 is not limited to the magnification optical system and may be a reduction optical system or an equal-magnification optical system.

Here, when the light emitting device 1 does not include an optical system 70, the position changing device 40 may not be able to secure a space for providing a mechanism used for moving the light transmitting/receiving optical element 41 near the conjugate plane 220 of the optical member 20.

As described above, according to the present embodiment, it is possible to separate the arrangement position of the light transmitting/receiving optical element 41 and the position changing device 40C from the optical member 20 by further providing the optical system 70. Therefore, a space for installing the light receiving optical element 41 and the position changing device 40C can be secured.

Furthermore, like the control device 50 of the light emitting device 1 of the first embodiment, the control device 50 of the light emitting device 1C may control the position changing device 40C (i.e., may move the light transmitting/receiving optical element 41) so that optical wireless communication with the light emitting device 1C of the other party is performed on the basis of a result of imaging at least a part of the physical object in the imaging device 30.

Furthermore, like the control device 50 of the light emitting device 1 of the first embodiment, the control device 50 of the light emitting device 1C may control the position changing device 40C so that optical wireless communication with the light emitting device 1 of the other party according to the first embodiment is performed on the basis of a result of imaging at least a part of the physical object in the imaging device 30.

Furthermore, the light emitting device 1C is not limited to other light emitting devices 1C serving as physical objects, but can perform optical wireless communication with the above-described light receiving device 81, the above-described light transmitting device 82, or the above-described light transmitting/receiving device 83 serving as a physical object. Even in this case, the control device 50 of the light emitting device 1C may perform optical wireless communication with the light receiving device 81, the light transmitting device 82, or the light transmitting/receiving device 83 by executing a process and control similar to those of the control device 50 of the light emitting device 1 of the first embodiment. As an example, when optical wireless communication with the light receiving device 83 is performed, the control device 50 of the light emitting device 1C may control the position changing device 40C (i.e., move the light transmitting/receiving optical element 41) so that the emission beam 51 from the light emitting device 1C is input to the light receiving portion 811 on the basis of a position of a feature location of the light receiving device 81 (a marker arranged in the light receiving device 81 as an example) on the image acquired by the imaging device 30 identified in the above-described image processing and a positional relationship between the feature location of the light receiving device 81 and the light receiving portion 811 of the light receiving device 81. Furthermore, description of the process and control of the control device 50 of the light emitting device 1C is omitted because it overlaps the description of the first embodiment.

Furthermore, optical wireless communication may be performed by the light emitting device 1C, 0 or more light receiving devices 81, the light transmitting device 82, and the light transmitting/receiving device 83 using the light emitting device 1C instead of the light emitting device 1A of the optical wireless communication system 100A of the first embodiment. Furthermore, description of the process and control of the control device 50 of the light emitting device 1C in this case is omitted because it overlaps the description of the first embodiment.

Furthermore, as in the first embodiment, at least one of the calibration of the imaging device 30 and the calibration of the light transmitting/receiving optical element 41 may be performed.

Furthermore, in the present embodiment, the light of at least one of the emission beam 51 and the input beam 52 is not limited to light for performing optical wireless communication. For example, light of at least one of the emission beam 51 and the input beam 52 may be light for optical wireless power supply. A wavelength of light for performing optical wireless power supply may be an infrared wavelength band, an ultraviolet wavelength band, or a wavelength band of visible light. An output of the light for optical wireless power supply may be several watts (W), several tens of watts (W), or several kilowatts (kW).

As an example, when the emission beam 51 is used as light for optical wireless power supply, the light emitting device 1C emits the emission beam 51 to a target device to which optical wireless power is supplied (e.g., at least one device of the light emitting device 1C, the light receiving device 82, and the light transmitting/receiving device 83) according to the above-described process and control of the control device 50, and therefore electric power may be supplied to the device. Furthermore, the light emitting device 1C may be referred to as a power supply device.

### [Third Embodiment]

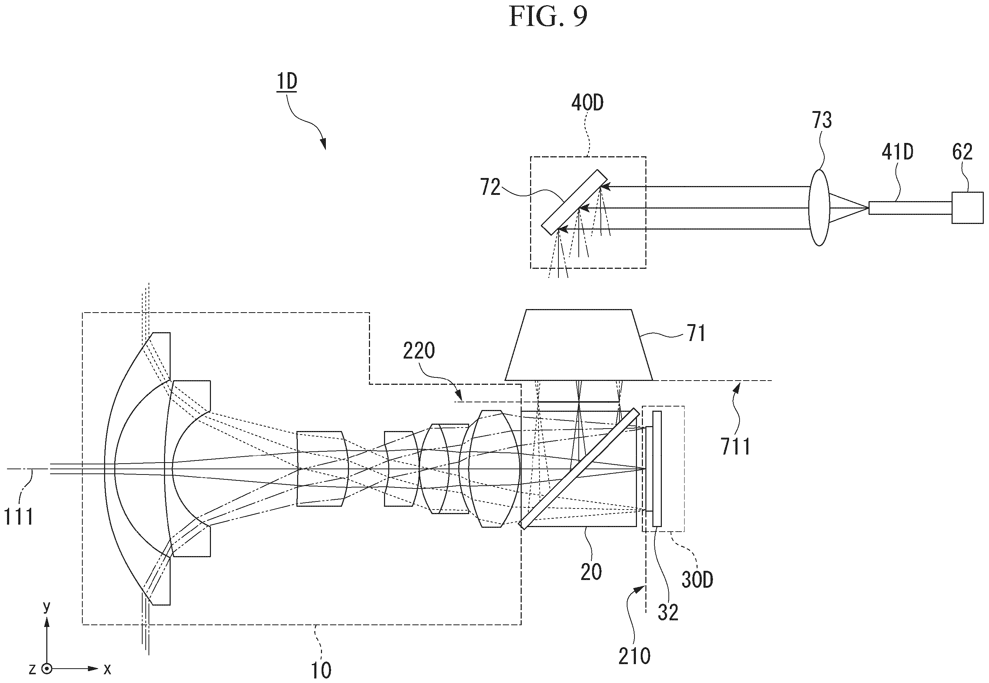

FIG. 9 is a schematic configuration diagram schematically showing a light emitting device according to a third embodiment. A light emitting device 1D according to the third embodiment will be described with reference to FIG. 9. Unlike the light emitting device 1, the light emitting device 1D includes a position changing device 40D instead of the position changing device 40. Moreover, unlike the light emitting device 1, the light emitting device 1D includes a light transmitting optical element 41D instead of the light transmitting/receiving optical element 41. Moreover, unlike the light emitting device 1, the light emitting device 1D includes an imaging device 30D instead of the imaging device 30. Moreover, unlike the light emitting device 1, the light emitting device 1D includes a condensing optical system 71 and a collimating lens 73. Furthermore, the above-described feature location may be provided in the light emitting device 1D. Furthermore, the light emitting device 1D may be installed on the above-described movable object. Furthermore, constituent elements similar to those of the light emitting device 1 are denoted by similar reference signs and description thereof may be omitted in the description of the light emitting device 1D. Furthermore, in FIG. 9, the illustration of the control device 50 is omitted.

The light emitting device 1D may perform optical wireless communication in the present embodiment.

In the above-described embodiment, the position changing device 40 or 40C moves the light transmitting/receiving optical element 41 on the x-z plane (e.g., on a plane intersecting the optical axis 111a or 111c on the conjugate plane side of the image forming optical system 10) so that an emission position of the emission beam 51 output by the image forming optical system 10 is changed. However, because a mechanism for moving on the plane leads to a large increase in the size of the device, an objective of the present embodiment is to reduce the size by eliminating the mechanism for moving on the plane.

The light transmitting optical element 41D may include an optical fiber configured to output the emission beam 51 generated by the communication board 62 toward the collimating lens 73 to be described below. The light transmitting optical element 41D may include an existing optical member in addition to the optical fiber. Furthermore, if the emission beam 51 from the communication board 62 can be output toward the collimating lens 73, the light transmitting optical element 41D may include at least one existing optical member. Furthermore, the light transmitting optical element 41D may include, for example, the above-described optical fiber 61-1 and the Fresnel lens 42-1.

The position changing device 40D includes at least an input angle changing member 72. The position changing device 40D changes a position of the emission beam 51 from the light transmitting optical element 41D (the collimating lens 73) on the conjugate plane 220. Furthermore, the position changing device 40D may include at least one existing optical member in addition to the input angle changing member 72. Furthermore, the position changing device 40D may be another existing device capable of changing the position of the emission beam 51 from the light transmitting optical element 41D on the conjugate plane 220.

The condensing optical system 71 is arranged on an optical path between the light transmitting optical element 41D and the optical member 20. The condensing optical system 71 condenses the emission beam 51 output from the light transmitting optical element 41D. Specifically, the emission beam 51 is condensed on the conjugate plane 220. Condensing light on the conjugate plane 220 broadly includes condensing light near the conjugate plane.

Furthermore, the condensing optical system 71 may be arranged on the conjugate plane 220 of the image forming optical system 10 or near the conjugate plane 220. For example, as shown in FIG. 9, a light output end 711 on the optical member 20 side of the condensing optical system 71 may be arranged slightly away from the conjugate plane 220 in a direction away from the optical member 20 (a positive y-axis direction).

Furthermore, the condensing optical system 71 may be, for example, an fθ lens. In this case, the fθ lens may be an optical system including at least one optical member. Furthermore, the condensing optical system 71 may not be an fθ lens and may have other projection properties. For example, the condensing optical system 71 may be an optical system having an equal solid angle projection property or an orthographic projection property.

The collimating lens 73 converts the emission beam 51 (diffused light) output from the light transmitting/receiving optical element 41D into parallel light. The collimating lens 73 may be a single lens or may include a plurality of lenses. Furthermore, the collimating lens 73 may include at least one lens and another optical member.

The input angle changing member 72 inputs the emission beam 51 output from the collimating lens 73 (i.e., the emission beam 51 from the light transmitting/receiving optical element 41D) at any input angle by reflecting the emission beam 51 at any angle. The input angle changing member 72 can change a reflection angle of the input emission beam 51 (i.e., an output angle from the input angle changing member 72). The input angle changing member 72 includes a reflective element and the reflection angle of the input emission beam 51 (the output angle from the input angle changing member 72) may be changed by changing an inclination angle of the reflective element. The input angle changing member 72 may be, for example, a spatial light modulator such as a mirror array which has a plurality of reflective elements arranged two-dimensionally and in which the inclination angle of each reflective element can be changed. In this case, the input angle changing member 72 may be a digital mirror device (DMD) as a spatial light modulator. The input angle changing member 72 is not limited to the reflection type, and may be an existing transmissive spatial light modulator. Furthermore, the input angle changing member 72 is not limited to a spatial light modulator and may be a galvanometer mirror (that may be referred to as a galvanometer scanner) or a polygon mirror (that may be referred to as a polygon scanner).

The input angle of the emission beam 51 for the condensing optical system 71 is changed by changing the reflection angle of the emission beam 51 (e.g., the inclination angle of the reflective element of the input angle changing member 72) with the input angle changing member 72. The condensing optical system 71 condenses the input emission beam 51 toward the conjugate plane 220. Here, for example, when the condensing optical system 71 is an fθ lens, the light condensing position on the conjugate plane 220 changes with the input angle of the input emission beam 51. Therefore, the input angle changing member 72 changes the input angle of the emission beam 51 for the condensing optical system 71 so that the position of the emission beam 51 on the conjugate plane 220 is changed. Furthermore, as described above, it is possible to change the position of the emission beam 51 on the conjugate plane 220 so that the emission position of the emission beam 51 output via the optical member 20 by the image forming optical system 10 is changed. That is, the position changing device 40D can change the reflection angle of the emission beam 51 in the input angle changing member 72 (e.g., the inclination angle of the reflective element of the input angle changing member 72) so that the emission position of the emission beam 51 output by the image forming optical system 10 is changed. Therefore, the position changing device 40D can change the position of the emission beam 51 from the light transmitting optical element 41D (the light generating device 6) on the conjugate plane 220 so that the emission position of the emission beam 51 output by the image forming optical system 10 is changed.

Furthermore, as described above, the condensing optical system 71 can be considered as a part of the position changing device 40D because it contributes to a change in the position of the emission beam 51 on the conjugate plane 220. Moreover, the collimating lens 73 can be considered as a part of the position changing device 40D because it contributes to a change in the position of the emission beam 51 on the conjugate plane 220. Therefore, the position changing device 40D including at least one of the condensing optical system 71 and the collimating lens 73 in addition to the input angle changing member 72 can be considered.

Furthermore, the collimating lens 73 can be considered as a part of the input angle changing member 72 because it contributes to a change in the input angle of the emission beam 51 for the condensing optical system 73. Therefore, the input angle changing member 72 including the collimating lens 73 can be considered.

Furthermore, the light output end 711 of the condensing optical system 71 may be arranged on the conjugate plane 220 or may be arranged slightly close to the optical member 20 side (a negative y-axis side) of the conjugate plane 220. Even if the light output end 711 of the condensing optical system 71 is arranged on the conjugate plane 220 or the light output end 711 is arranged slightly close to the optical member 20 side of the conjugate plane 220, the emission beam 51 output from the condensing optical system 71 and input to the optical member 20 via the conjugate plane 220 can be considered. Therefore, even if the light output end 711 of the condensing optical system 71 is arranged on the conjugate plane 220 or the light output end 711 is arranged slightly close to the optical member 20 side of the conjugate plane 220, the input angle changing member 72 that changes the position of the emission beam 51 on the conjugate plane 220 by changing an input angle of the emission beam 51 for the condensing optical system 71 can be considered.

The imaging device 30D is arranged near the image plane 210. The imaging device 30D can image at least a part of a physical object (e.g., the light transmitting/receiving device 83 of the other party) formed on the image plane 210 or perform a reception process (a photoelectric conversion process) for the input beam 52 from the physical object (e.g., the light transmitting/receiving device 83 of the other party). The imaging device 30D may include an imaging element 32 having a plurality of pixels arranged on the imaging plane. Each of at least some pixels among the plurality of pixels provided in the imaging element 32 can receive light for forming an image of at least a part of the physical object and may be a light receiving element capable of receiving the input beam 52 from the physical object. In this case, among the plurality of pixels provided in the imaging element 32, a pixel capable of receiving light for forming an image of at least a part of the physical object and an input beam 52 from the physical object (a light receiving element) may be referred to as an imaging pixel because it is possible to receive light for forming an image of at least a part of the physical object or may be referred to as an a light receiving pixel because it is possible to receive the input beam 52 from the physical object. Furthermore, in this case, a pixel capable of receiving the input beam 52 from the physical object (a light receiving pixel) receives the input beam 51 input via the image plane 210. Furthermore, in this case, the imaging device 30D may be referred to as a light receiving portion because it receives the input beam 52. Furthermore, a pixel capable of receiving the input beam 52 from a physical object of the imaging element 32 of the imaging device 30D (a light receiving pixel) may be referred to as a light receiving portion.

For example, the imaging element 32 may be an RGB sensor. In this case, the imaging device 30D may capture an image of at least a part of the physical object formed on the image plane 210 and receive the input beam 52 input from the physical object via the image plane 210 using a protocol and algorithm for identifying light for forming an image of at least a part of the physical object received by the RGB sensor serving as the imaging element 32 and the input beam 52 from the physical object. In this case, at least one type of pixel of R pixels capable of receiving light in the red wavelength band, G pixels capable of receiving light in the green wavelength band, and B pixels capable of receiving light in the blue wavelength band may be a light receiving element capable of receiving light for forming an image of at least a part of the physical object and the input beam 52 from the physical object. For example, when the R pixel is a light receiving element capable of receiving light for forming an image of at least a part of the physical object and the input beam 52 from the physical object, the G and B pixels cannot receive the input beam 52 from the physical object and may receive light for forming an image of at least a part of the physical object. In this case, the input beam 52 uses a light beam having a wavelength band that is at least a part of a red wavelength band.

Furthermore, the control device 50 may identify a result of capturing an image of at least a part of the physical object formed on the image plane 210 and a result of receiving the input beam 52 from the physical object using a protocol and algorithm for identifying light for forming an image of at least a part of the physical object and the input beam 52 from the physical object on the basis of a light reception result of the imaging device 30D (the imaging element 32). The imaging element 32 may not be an RGB sensor. Each of the plurality of pixels arranged in the imaging element 32 may be a light receiving element capable of receiving light in the wavelength band from visible light to terahertz waves, a light receiving element capable of receiving light in the wavelength band from visible light to millimeter waves, or a light receiving element capable of receiving light in the wavelength band from visible light to an infrared ray.

Moreover, some of the plurality of pixels arranged on the imaging plane of the imaging element 32 are light receiving elements (imaging pixels) capable of receiving light for forming an image of at least a part of the physical object and the others are light receiving elements (light receiving elements) capable of receiving the input beam 52 from the physical object. In this case, the pixel capable of receiving the input beam 52 from the physical object (the light receiving pixel) receives the input beam 51 input via the image plane 210. Furthermore, in this case, the imaging device 30D can be considered as a light receiving portion because it receives the input beam 52. Furthermore, the pixel capable of receiving the input beam 52 from a physical object of the imaging element 32 of the imaging device 30D (the light receiving pixel) may be referred to as a light receiving portion. For example, the plurality of pixels provided in the imaging element 32 may be a Bayer array. One pixel (e.g., one G pixel among R, G, B, and G pixels) in each unit pixel group of this Bayer array may be used as a light receiving element for receiving the input beam 52 from the physical object. In this case, the other pixels in each unit pixel group of the Bayer array (e.g., the R and B pixels and the other G pixel among the R, G, B, and G pixels) may be used as a light receiving element capable of receiving light for forming an image of at least a part of the physical object.

Furthermore, the light receiving element for receiving the input beam 52 from the physical object is not limited to an element capable of receiving visible light (e.g., the above-described green wavelength band), and may be an element capable of receiving light in other wavelength bands (e.g., light in the wavelength band including terahertz waves for use in optical wireless communication or light in the wavelength band including infrared rays).

Furthermore, the imaging element 32 may be a monochrome image sensor.

The control device 50 of the light emitting device 1D may control the position changing device 40D so that optical wireless communication with another light emitting devices 1D serving as a physical object is performed on the basis of a result of imaging at least a part of the physical object in the imaging device 30D (e.g., the inclination angle of the reflective element of the input angle changing member 72 may be changed). In this case, the emission beam 51 from the light emitting device 1D is received by the light receiving portion 831 of the light transmitting/receiving device 83 of the other party and the input beam 52 from the light transmitting/receiving device 83 of the other party is received by the imaging device 30D via the image plane 210 of the image forming optical system 10 of the light emitting device 1D, such that optical wireless communication may be performed. For example, the control device 50 of the light emitting device 1D may control the position changing device 40D (e.g., the inclination angle of the reflective element of the input angle changing member 72 may be changed) so that the emission beam 51 from the light emitting device 1D is input to the light receiving portion 831 on the basis of a position of a feature location of the light transmitting/receiving device 83 of the other party on the image acquired by the imaging device 30D (a marker arranged in the light transmitting/receiving device 83 as an example) identified in the above-described image processing and a positional relationship between a feature location of the light transmitting/receiving device 83 of the other party and the light receiving portion 831.

Furthermore, the control device 50 of the light emitting device 1D is not limited to the above-described process and control and the process and control of at least a part of the control device 50 of the first embodiment and the control device 50 of the second embodiment may be applied.

Furthermore, the light emitting device 1D is not limited to the light transmitting/receiving device 83 serving as the physical object and optical wireless communication with at least one of the light emitting device 1 of the first embodiment, the light emitting device 1C of the second embodiment, and the light emitting device 1D of the present embodiment may be performed. In this case, the processes and control of at least some of the control device 50 of the light emitting device 1 of the first embodiment, the control device 50 of the light emitting device 1C of the second embodiment, and the control device 50 of the present embodiment described above may be applied to the control device 50 of the light emitting device 1D.

Furthermore, the light emitting device 1D is not limited to the light transmitting/receiving device 83 serving as the physical object, and may also perform optical wireless communication with the above-described light receiving device 81 or the above-described light transmitting device 82 serving as the physical object. Even in this case, the control device 50 of the light emitting device 1D may perform optical wireless communication with the light receiving device 81 or the light transmitting device 82 by performing the processes and control of at least some of the control device 50 of the light emitting device 1 of the first embodiment, the control device 50 of the light emitting device 1C of the second embodiment, and the control device 50 of the present embodiment.

Furthermore, the light emitting device 1D is used instead of the light emitting device 1A of the optical wireless communication system 100A of the first embodiment and optical wireless communication may be performed by the light emitting device 1D, 0 or more light receiving devices 81, the light transmitting device 82, and the light transmitting/receiving device 83. Even in the above case, the control device 50 of the light emitting device 1D executes the processes and control of at least some of the control device 50 of the light emitting device 1 of the first embodiment, the control device 50 of the light emitting device 1C of the second embodiment, and the control device 50 of the present embodiment, such that optical wireless communication may be performed by the 0 or more light receiving devices 81, the light transmitting device 82, and the light transmitting/receiving device 83. Furthermore, the light transmitting/receiving device 83 may have the same configuration as the light emitting device 1, the light emitting device 1C, or the light emitting device 1D.

For example, when the light emitting device 1D performs optical wireless communication with a plurality of light receiving devices 81 or a plurality of light transmitting/receiving devices 83, the light emitting device 1D may include a plurality of communication boards 62, a plurality of optical fibers 61, a plurality of light transmitting optical elements 41D, a plurality of collimating lenses 73, and a plurality of input angle changing members 72 in accordance with the number of light receiving devices 81 of the other party for performing optical wireless communication. In this case, the light emitting device 1D may not include a plurality of communication boards 62 and may generate a plurality of emission beams input to the plurality of optical fibers 61 from the common communication board 62. Furthermore, the position changing device 40D may include a plurality of input angle changing members 72. The control device 50 of the light emitting device 1D may separately change the reflection angle of the emission beam 51 in each input angle changing member 72 by controlling the position changing device 40D.

For example, when the optical wireless communication system 100A includes the light emitting device 1D and two light transmitting/receiving devices 83 (a first light transmitting/receiving device 83-1 and a second light transmitting/receiving device 83-2), the light emitting device 1D may output the first emission beam 51-1 generated by the first communication board 62-1 from the image forming optical system 10 via a first light transmitting optical system 41D-1, a first collimating lens 73-1, a first input angle changing member 72-1, and the condensing optical system 71 and the imaging device 30D may receive the first input beam 52-1 for optical wireless communication with the light emitting device 1D output from the first light transmitting/receiving device 83-1 via the image forming optical system 10. Moreover, the light emitting device 1D may output a second emission beam 51-2 generated by the second communication board 62-2 from the image forming optical system 10 via the second light transmitting optical system 41D-2, the second collimating lens 73-2, the second input angle changing member 72-2, and the condensing optical system 71 and the imaging device 30D may receive a second input beam 52-2 for performing optical wireless communication with the light emitting device 1D output from the second light transmitting/receiving device 83-2 via the image forming optical system 10. Furthermore, the position changing device 40D may include the first input angle changing member 72-1 and the second input angle changing member 72-2.

In this case, in the light emitting system 100A, the first emission beam 51-1 from the light emitting device 1D is emitted to the first light receiving portion 831-1 of the first light transmitting/receiving device 83-1 and the first input beam 52-1 from the first light transmitting portion 832-1 of the first light transmitting/receiving device 83-1 is received by the imaging device 30D of the light emitting device 1D, such that optical wireless communication may be performed by the light emitting device 1D and the first light transmitting/receiving device 83-1. Moreover, in the light emitting system 100A, the second emission beam 51-2 from the light emitting device 1D is emitted to the second light receiving portion 831-2 of the second light transmitting/receiving device 83-2 and the second input beam 52-2 from the second light transmitting portion 832-2 of the second light transmitting/receiving device 83-2 is received by the imaging device 30D of the light emitting device 1D, such that optical wireless communication may be performed by the light emitting device 1D and the second light transmitting/receiving device 83-2. That is, in this example, the light emitting device 1D may mutually transmit and receive information to and from the first light transmitting/receiving device 83-1. The light emitting device 1D may mutually transmit and receive information to and from the second light transmitting/receiving device 83-2. The light emitting device 1D may mutually transmit and receive information to and from the first light transmitting/receiving device 83-1 and the second light transmitting/receiving device 83-2 simultaneously.

The control device 50 of the light emitting device 1D may control the position changing device 40D (i.e., may change a reflection angle of the first emission beam 51-1 in the first input angle changing member 72-1) so that the first emission beam 51-1 output from the light emitting device 1D is input to the first light receiving portion 831-1 on the basis of a position of the feature location of the first light transmitting/receiving device 83-1 serving as a physical object on the image acquired by the imaging device 30D identified in the above-described image processing and a positional relationship between the feature location of the first light transmitting/receiving device 83-1 and the first light receiving portion 831-1 of the first light transmitting/receiving device 83-1. The light emitting device 1D may receive the first input beam 52-1 from the first light transmitting portion 832-1 of the first light transmitting/receiving device 83-1 with the imaging device 30D via the image forming optical system 10.

Moreover, the control device 50 of the light emitting device 1D may control the position changing device 40D (i.e., may change the reflection angle of the second emission beam 51-2 in the second input angle changing member 72-2) so that the second emission beam 51-2 output from the light emitting device 1D is input to the second light receiving portion 831-2 on the basis of a position of the feature location of the second light transmitting/receiving device 83-2 serving as a physical object on the image acquired by the imaging device 30D identified in the above-described image processing and a positional relationship between the feature location of the second light transmitting/receiving device 83-2 and the second light receiving portion 831-2 of the second light transmitting/receiving device 83-2. The light emitting device 1D may receive the second input beam 52-2 from the second light transmitting portion 832-2 of the second light transmitting/receiving device 83-2 with the imaging device 30D via the image forming optical system 10.

Furthermore, when the light emitting device 1D performs optical wireless communication with the plurality of light receiving devices 81 or the plurality of light transmitting/receiving devices 83, the light emitting device 1D may not include a plurality of communication boards 62, a plurality of optical fibers 61, a plurality of light transmitting optical elements 41D, a plurality of collimating lenses 73, and a plurality of input angle changing members 72. For example, the light emitting device 1D may include a single communication board 81, a single optical fiber 61, a single light transmitting optical element 41D, a single collimating lens 73, and a single input angle changing member 72. In this case, the single input angle changing member 72 may be a spatial light modulator or a DMD serving as a spatial light modulator. When the optical wireless communication system 100A includes a light emitting device 1D and two light transmitting/receiving devices 83 (a first light transmitting/receiving device 83-1 and a second light transmitting/receiving device 83-2), some reflective elements (that may be referred to as a first reflective element group) among the plurality of reflective elements of the single input angle changing member 72 may be used to change a reflection angle (i.e., to change the position of the first emission beam 51-1 on the conjugate plane 220) so that the first emission beam 51-1 serving as a part of the emission beam 51 from the collimating lens 73 is input to the first light receiving portion 831-1 of the first light transmitting/receiving device 83-1. Moreover, the other reflective elements (that may be referred to as a second reflective element group) among the plurality of reflective elements of the single input angle changing member 72 may be used to change a reflection angle (i.e., to change the position of the second emission beam 51-2 on the conjugate plane 220) so that the second emission beam 51-2 serving as the other part of the emission beam 51 from the collimating lens 73 is input to the second light receiving portion 831-2 of the second light transmitting/receiving device 83-2.

In this case, the control device 50 of the light emitting device 1D may control the position changing device 40D (i.e., may change a reflection angle of the first emission beam 51-1 in the first reflective element group of the input angle changing member 72) so that the first emission beam 51-1 output from the light emitting device 1D is input to the first light receiving portion 831-1 on the basis of a position of the feature location of the first light transmitting/receiving device 83-1 on the image acquired by the imaging device 30D identified in the above-described image processing and a positional relationship between the feature location of the first light transmitting/receiving device 83-1 and the first light receiving portion 831-1 of the first light transmitting/receiving device 83-1. The light emitting device 1D may receive the first input beam 52-1 from the first light transmitting portion 832-1 of the first light transmitting/receiving device 83-1 with the imaging device 30D via the image forming optical system 10.

Moreover, the control device 50 of the light emitting device 1D may control the position changing device 40D (i.e., may change the reflection angle of the second emission beam 51-2 in the second reflective element group of the input angle changing member 72) so that the second emission beam 51-2 output from the light emitting device 1D is input to the second light receiving portion 831-2 on the basis of a position of the feature location of the second light transmitting/receiving device 83-2 serving as a physical object on the image acquired by the imaging device 30D identified in the above-described image processing and a positional relationship between the feature location of the second light transmitting/receiving device 83-2 and the second light receiving portion 831-2 of the second light transmitting/receiving device 83-2. The light emitting device 1D may receive the second input beam 52-2 from the second light transmitting portion 832-2 of the second light transmitting/receiving device 83-2 with the imaging device 30D via the image forming optical system 10.

Furthermore, the control device 50 of the light emitting device 1D may identify the position of the feature location of the first light transmitting/receiving device 83-1 and the position of the feature location of the second light transmitting/receiving device 83-2 on the same image acquired by the imaging device 30D in the above-described image processing.

Furthermore, the imaging element 32 of the imaging device 30D may be configured to identify and receive the first input beam 52-1 and the second input beam 52-2. For example, the first input beam 52-1 and the second input beam 52-2 may have different optical conditions. The optical conditions include at least one of a wavelength, frequency, phase, and degree of polarization. In the imaging element 32, light receiving elements (light receiving pixels) may be arranged so that the difference in the optical conditions of the first input beam 52-1 and the second input beam 52-2 can be identified. For example, when the wavelength of the first input beam 52-1 and the wavelength of the second input beam 52-2 are different, a light receiving element capable of receiving light of a wavelength of the first input beam 52-1 (e.g., light in the wavelength band including terahertz waves) and a light receiving element capable of receiving light of the wavelength of the second input beam 52-2 (light in the wavelength band including infrared rays) may be arranged as light receiving pixels on the imaging plane. Furthermore, the light receiving element capable of receiving light having the wavelength of the first input beam 52-1 may not be able to receive light having the wavelength of the second input beam 52-2. Furthermore, the light receiving element capable of receiving light having the wavelength of the second input beam 52-2 may not be able to receive light having the wavelength of the first input beam 52-1. The control device 50 of the light emitting device 1D may identify the first input beam 52-1 and the second input beam 52-2 on the basis of the light reception result of the imaging device 30D (the imaging element 32) described above.

Furthermore, the control device 50 of the light emitting device 1D may identify the first light transmitting/receiving device 83-1 and the second light transmitting/receiving device 83-2 to perform optical wireless communication. For example, the control device 50 may identify the first light transmitting/receiving device 83-1 and the second light transmitting/receiving device 83-2 on the basis of the image acquired by the imaging device 30D. In this case, feature locations are provided on the first light transmitting/receiving device 83-1 and the second light transmitting/receiving device 83-2 so that that the feature location of the first light transmitting/receiving device 83-1 and the feature location of the second light transmitting/receiving device 83-2 can be distinguished on the image acquired by the imaging device 30D. For example, shapes of the marker serving as a feature location of the first light transmitting/receiving device 83-1 and the marker serving as a feature location of the second light transmitting/receiving device 83-2 may be different. In this case, the control device 50 may identify the first light transmitting/receiving device 83-1 and the second light transmitting/receiving device 83-2 on the basis of the shape of the marker of the first light transmitting/receiving device 83-1 and the shape of the marker of the second light transmitting/receiving device 83-2 on the image acquired by the imaging device 30D.

Furthermore, the control device 50 may identify the first light transmitting/receiving device 83-1 and the second light transmitting/receiving device 83-2 on the basis of results of receiving the first input beam 52-1 from the first light transmitting/receiving device 83-1 and the second input beam 52-2 from the second light transmitting/receiving device 83-2 in the imaging device 30D in addition to the feature location difference. In this case, input beams may be output from the first light transmitting/receiving devices 83-1 and the second light transmitting/receiving devices 83-2 so that the first input beam 52-1 from the first light transmitting/receiving device 83-1 and the second input beam 52-2 from the second light transmitting/receiving device 83-2 can be distinguished. For example, as described above, the first input beam 52-1 and the second input beam 52-2 may have different optical conditions. The control device 50 may identify the first light transmitting/receiving device 83-1 and the second light transmitting/receiving device 83-2 on the basis of an optical condition difference between the first input beam 52-1 from the first light transmitting/receiving device 83-1 and the second input beam 52-2 from the second light transmitting/receiving device 83-2 received by the imaging device 30D (e.g., the wavelength difference as described above,).

Furthermore, as in the first embodiment, the calibration of the imaging device 30D may be performed. Moreover, the calibration of the input angle changing member 72 may be performed. In the calibration of the input angle changing member 72, the reflection angle of the emission beam 51 in the input angle changing member 72 (the inclination angle of the reflective element of the input angle changing member 72) and the position on the image acquired by the imaging device 30D may be associated. The association between the reflection angle of the emission beam 51 in the input angle changing member 72 and the position on the image acquired by the imaging device 30D may be performed, for example, using the above-described reflective surface.

For example, the light emitting device 1D emitting light from the light transmitting optical element 41D toward the reflective surface via the input angle changing member 72, the condensing optical system 71, the optical member 20, and the image forming optical system 10 and the imaging device 30D receives light reflected on the reflective surface through light emitted from the image forming optical system 10 toward the reflective surface, such that the reflection angle of the emission beam 51 in the input angle changing member 72 and the position on the image acquired by the imaging device 30D may be associated. As described above, if the reflection angle of the emission beam 51 in the input angle changing member 72 (the inclination angle of the reflective element of the input angle changing member 72) changes, an emission position (an emission orientation) of the light output by the image forming optical system 10 changes. Therefore, when the reflection angle of the emission beam 51 in the input angle changing member 72 changes, because the reflection position on the reflective surface also changes, the input position of the reflected light for the imaging device 30D (the imaging plane of the imaging element 32) also changes (i.e., the position of the reflected light on the image acquired by the imaging device 30D also changes). It can be said that the light emitting device 1D performs the calibration of the input angle changing member 72 on the basis of the reflection angle of the emission beam 51 in the input angle changing member 72 and the position of the reflected light on the image acquired by the imaging device 30D. Furthermore, the calibration of the input angle changing member 72 may be referred to as a calibration of the input angle changing member 72 and the imaging device 30D, a calibration of the position changing device 40D, or a calibration of the position changing device 40D and the imaging device 30D.

Furthermore, the light emitting device 1D may include an optical system on an optical path between the condensing optical system 71 and the input angle changing member 72. This optical system may be an optical system in which the pupil of the condensing optical system 71 and the input angle changing member 72 are conjugate. For example, when the input angle changing member 72 is a reflective spatial light modulator such as a DMD or a galvanometer mirror, the optical system may be an optical system in which the pupil of the condensing optical system 71 and a reflective surface of the reflective spatial light modulator such as a DMD or a galvanometer mirror are conjugate. The optical system may include at least one existing optical member.

As described above, according to the present embodiment, the condensing optical system 71 is provided to condense the emission beam 51 output from the light outputting portion of the light generating device 60 and the input angle changing member 72 is provided to change the input angle of the emission beam 51 for the condensing optical system 71 and change the position of the emission beam 51 on the conjugate plane 220 (i.e., change the emission position of the emission beam 51 output by the image forming optical system 10) by changing the input angle of the emission beam 51 for the condensing optical system 71. Therefore, according to the present embodiment, it is not necessary to move the light transmitting/receiving optical element 41 on the x-z plane (e.g., on a plane intersecting the optical axis 111a or 111c on the conjugate plane 220 side of the image forming optical system 10). Therefore, according to the present embodiment, the device can be miniaturized. Moreover, according to the present embodiment, because it is not necessary to move the light transmitting/receiving optical element 41 on the x-z plane, the emission position of the emission beam 51 can be changed at high speed.

Moreover, according to the above-described embodiment, the imaging device 30D has a plurality of imaging pixels for capturing at least a part of the image of a physical object and at least some of the pixels of the plurality of imaging pixels can receive the input beam 52. Moreover, the imaging pixel capable of receiving the input beam 52 receives the input beam 52 input via the image plane 210. Therefore, according to the present embodiment, it is not necessary to move the light transmitting/receiving optical element 41 on the x-z plane (e.g., on a plane intersecting the optical axis 111a or 111c on the conjugate plane 220 side of the image forming optical system 10) so that the input beam 52 is received. Therefore, according to the present embodiment, the device can be miniaturized. Moreover, according to the present embodiment, because it is not necessary to move the light transmitting/receiving optical element 41 on the x-z plane, the input beam 52 can be received at high speed.

Moreover, according to the above-described embodiment, the imaging device 30D includes a plurality of imaging pixels for capturing at least a part of the image of a physical object and a light receiving pixel different from the imaging pixel and serving as a light receiving portion for receiving the input beam 52. Moreover, the light receiving pixel receives the input beam 52 input via the image plane 210. Therefore, according to the present embodiment, it is not necessary to move the light transmitting/receiving optical element 41 on the x-z plane so that the input beam 52 is received. Therefore, according to the present embodiment, the device can be miniaturized. Moreover, according to the present embodiment, because it is not necessary to move the light transmitting/receiving optical element 41 on the x-z plane, the input beam 52 can be received at high speed.

### [Fourth Embodiment]

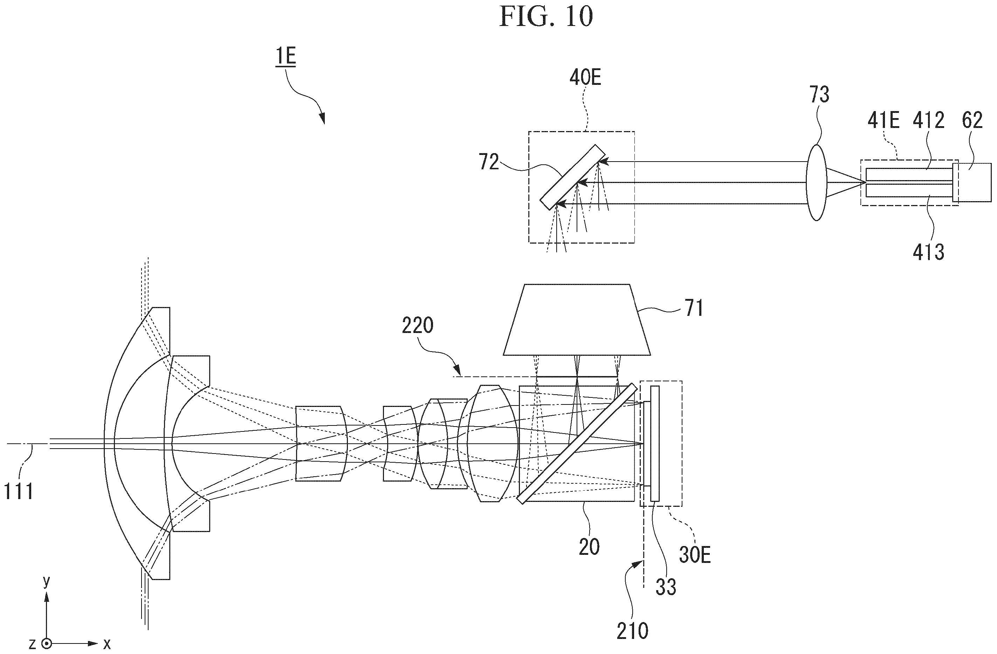

Next, a light emitting device 1E according to a fourth embodiment will be described with reference to FIGS. 10 to 12.

FIG. 10 is a schematic configuration diagram schematically showing the light emitting device according to the fourth embodiment. First, a schematic configuration of the light emitting device 1E according to the fourth embodiment will be described with reference to FIG. 10.

Unlike the light emitting device 1D, the light emitting device 1E includes a light transmitting/receiving optical element 41E instead of the light transmitting optical element 41D. Moreover, the light emitting device 1E includes an imaging device 30E instead of the imaging device 30D. Furthermore, the above-described feature location may be provided in the light emitting device 1E. Furthermore, the above-described movable object may be installed on the light emitting device 1E. Constituent elements similar to those of the light emitting device 1D are denoted by similar reference signs and description thereof may be omitted in the description of the light emitting device 1E. Furthermore, in FIG. 10, the illustration of the control device 50 is omitted.

In the present embodiment, the light emitting device 1E may perform optical wireless communication.

The light transmitting/receiving optical element 41E includes at least a light transmitting optical system 412 and a light receiving optical system 413. Furthermore, the light transmitting/receiving optical element 41E may be referred to as a light outputting portion, a light receiving portion, or a light transmitting/receiving portion.

The light transmitting optical system 412 may include an optical fiber configured to output the emission beam 51 generated by the communication board 62 toward the collimating lens 73. Furthermore, the light transmitting optical system 412 may include an existing optical member in addition to the optical fiber. Furthermore, the light transmitting optical system 412 may include at least one existing optical member if the emission beam 51 from the communication board 62 can be output toward the collimating lens 73. Furthermore, the light transmitting optical system 412 may be similar to the above-described light transmitting optical element 41D. Furthermore, the light transmitting optical system 412 may be referred to as a light transmitting optical element or a light outputting portion. Furthermore, the light transmitting optical system 412 may include, for example, the optical fiber 61-1 and the Fresnel lens 42-1 described above.

The light receiving optical system 413 may include an optical fiber configured to output the input beam 52 input via an image forming optical system 10, a condensing optical system 71, an input angle changing member 72, and the collimating lens 73 toward the communication board 62. Furthermore, the light receiving optical system 413 may include an existing optical member in addition to the optical fiber. Furthermore, the light receiving optical system 413 may include at least one existing optical member if the input beam 52 from the collimating lens 73 can be output toward the communication board 62. Furthermore, the light receiving optical system 413 may be referred to as a light receiving optical element or a light receiving portion. Furthermore, the light receiving optical system 413 may include, for example, the optical fiber 61-2 and the Fresnel lens 42-2 described above.

Like the above-described imaging device 30, the imaging device 30E is arranged near an image plane 210 of the image forming optical system 10 and captures an image of at least a part of the physical object formed on the image plane 210. The imaging device 30E includes an imaging element 33 having a plurality of pixels arranged on an imaging plane like the imaging element 31 of the imaging device 30. It can be said that the imaging element 33 captures a reduced image of at least a part of the physical object formed on the image plane 210. For example, the imaging plane of the imaging element 33 may be arranged on the image plane 210 of the image forming optical system 10. Moreover, the imaging plane of the imaging element 33 may not be arranged on the image plane 210 of the image forming optical system 10 and may be arranged near the image plane 210. Furthermore, the imaging element 33 may be an imaging element capable of outputting color image data (e.g., an RGB image sensor) or an imaging element capable of outputting monochrome image data (e.g., a monochrome image sensor).

The position changing device 40E includes at least an input angle changing member 72. The position changing device 40E changes the position of the emission beam 51 from the light transmitting optical system 412 (the collimating lens 73) on the conjugate plane 220. Furthermore, it can be said that the position changing device 40E changes the position of the input beam 52 input from the optical member 20 to the light receiving optical system 413 on the conjugate plane 220.

Furthermore, the position changing device 40E may include at least one existing optical member in addition to the input angle changing member 72. Furthermore, the position changing device 40E may be another existing device capable of changing the position of the emission beam 51 input from the light transmitting optical system 412 via the collimating lens 73 on the conjugate plane 220. Furthermore, the position changing device 40E may be similar to the position changing device 40D.

The input angle changing member 72 may be, for example, a spatial light modulator such as a mirror array which has a plurality of reflective elements arranged two-dimensionally and in which the inclination angle of each reflective element can be changed. In this case, the input angle changing member 72 may be a digital mirror device (DMD) as a spatial light modulator. The input angle changing member 72 is not limited to the reflection type, and may be an existing transmissive spatial light modulator. Furthermore, the input angle changing member 72 is not limited to a spatial light modulator and may be a galvanometer mirror (that may be referred to as a galvanometer scanner) or a polygon mirror (that may be referred to as a polygon scanner).

The emission beam 51 from the light transmitting optical system 413 is converted into parallel light by the collimating lens 73 and input to the input angle changing member 72. The emission beam 51 input to the input angle changing member 72 is output toward the physical object (e.g., the light transmitting/receiving device 83 of the other party) via the condensing optical system 71, the optical member 20, and the image forming optical system 10.

The input angle changing member 72 may input the condensing optical system 71 at any input angle by reflecting the emission beam 51 from the light transmitting optical system 412 at any angle. The input angle changing member 72 can change the reflection angle of the input emission beam 51 (e.g., the inclination angle of the reflective element of the input angle changing member 72).

An input angle of the emission beam 51 for the condensing optical system 71 is changed by changing the reflection angle of the emission beam 51 with the input angle changing member 72. The condensing optical system 71 condenses the input emission beam 51 toward the conjugate plane 220. Here, for example, when the condensing optical system 71 is an fθ lens, a light condensing position on the conjugate plane 220 changes with the input angle of the input emission beam 51. Therefore, the control device 50 changes the position of the emission beam 51 on the conjugate plane 220 by changing the input angle of the emission beam 51 to the condensing optical system 71.

Furthermore, because the setting of the emission position of the emission beam 51 from the light transmitting optical system 412 for the physical object (i.e., the control of the position changing device 40E) by the control device 50 is similar to the setting of the emission position of the emission beam 52 from the light transmitting/receiving optical element 41D for the physical object (i.e., the control of the position changing device 40D) by the control device 50 in the above-described third embodiment, description thereof will be omitted.

The input beam 52 input from a physical object (e.g., the light transmitting/receiving device 83 of the other party) to the image forming optical system 10 is input to the input angle changing member 72 via the optical member 20 and the condensing optical system 71. The input angle changing member 72 reflects the input beam 52 toward the collimating lens 73. The collimating lens 73 condenses the input beam 52 from the input angle changing member 72 on the light receiving optical system 412. The light condensed on the light receiving optical system 412 is received by the communication board 62.

By changing the reflection angle of the input beam 52 with the input angle changing member 72, the input beam 52 passing through any position on the conjugate plane 220 can be selectively output toward the light receiving optical system 413 (the communication board 62). Furthermore, it can be said that the optical path of the input beam 52 input from the conjugate plane 220 (the optical member 20) to the light receiving optical system 413 (the communication board 62) via the input angle changing member 72 can be selected by changing the reflection angle of the input beam 52 with the input angle changing member 72.

The input angle changing member 72 may pass through any position on the conjugate plane 220 and reflect the input beam 52 input via the condensing optical system 71 at any angle, such that the input beam 52 may be output toward the light receiving optical system 413 (the communication board 62).

If a light condensing position of the input beam 52 on the conjugate plane 220 changes, the input position of the input beam 52 for the condensing optical system 71 changes. Here, when the condensing optical system 71 is an fθ lens, if the input position of the input beam 52 for the condensing optical system 71 changes, an output angle of the input beam 52 from the condensing optical system 71 changes. If the output angle of the input beam 52 from the condensing optical system 71 changes, the input angle of the input beam 52 to the input angle changing member 72 changes. The control device 50 controls the position changing device 40E (the input angle changing member 72), i.e., sets the reflection angle of the input beam 52 (e.g., the inclination angle of the reflective element of the input angle changing member 72), so that the input beam 52 is input to the light receiving optical system 413 (the communication board 62) via the collimating lens 73 in accordance with the input angle of the input beam 52 for the input angle changing member 72.

Furthermore, if the input position of the input beam 52 from the physical object to the image forming optical system 10 (e.g., the optical member closest to the physical object side of the image forming optical system 10), i.e., the light reception position of the input beam 52, changes with a positional relationship between the light emitting device 1E and the physical object (e.g., the light transmitting/receiving device 83 of the other party), a light condensing position of the input beam 52 on the conjugate plane 220 changes. Therefore, the position changing device 40E (the input angle changing member 72) can input the input beam 52 input at any position of the image forming optical system 10 to the light receiving optical system 413 (the communication board 62) by changing the reflection angle of the input beam 52 (e.g., the inclination angle of the reflective element of the input angle changing member 72). Furthermore, it can be said that the position changing device 40E changes a light reception position of the input beam 52 to be input to the light receiving optical system 413 (the communication board 62) by changing the reflection angle of the input beam 52 (e.g., the inclination angle of the reflective element of the input angle changing member 72).

Furthermore, as described above, at least one of the condensing optical system 71 and the collimating lens 73 can be considered as a part of the position changing device 40E because it contributes to changing the position of the emission beam 51 on the conjugate plane 220.

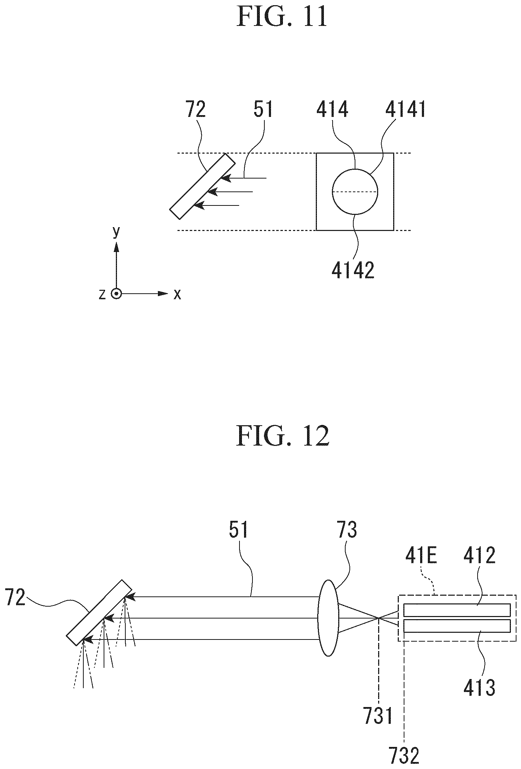

For example, the input angle changing member 72 may be a digital mirror device (DMD) that has a plurality of reflective elements arranged two-dimensionally and can separately change the inclination angle of each reflective element. Here, it can be said that the input angle changing member 72 has a light reflection region where it is possible to reflect input light with a plurality of reflective elements arranged two-dimensionally. FIG. 11 is a schematic diagram for describing a case where the light reflection region of the input angle changing member 72 is divided into a light transmission region 4141 where at least a part of the emission beam 51 from the light transmitting optical system 412 is reflected toward the condensing optical system 71 and a light reception region 4142 where at least a part of the input beam 52 from the condensing optical system 71 is reflected toward the light receiving optical system 413 according to the fourth embodiment.

The division of light reception and light transmission will be described with reference to FIG. 11.

A plurality of reflective elements of the input angle changing member 72 corresponding to the light transmission region 4141 are used to change the reflection angle so that the emission beam 51 from the light transmitting optical system 412 is input to a physical object (e.g., the light emitting device 1E of the other party) (i.e., change the position of the emission beam 51 on the conjugate plane 220). A plurality of other reflective elements of the input angle changing member 72 corresponding to the light reception region 4142 may be used to change the reflection angle so that the input beam 52 from the condensing optical system 71 is input to the light receiving optical system 413 (the communication board 62).

As an example, when the light emitting device 1E and the above-described light transmitting/receiving device 83 perform optical wireless communication, the control device 50, for example, identifies a position of a feature location provided in the light transmitting/receiving device 83 (a marker arranged in the light transmitting/receiving device 83 as an example) on the image acquired by the imaging device 30E in the above-described image processing. The control device 50 may control the position changing device 40E (i.e., may set the inclination angles of the plurality of reflective elements corresponding to the light transmission region 4141 in the input angle changing member 72) so that the emission beam 51 output from the light emitting device 1E is input to the light receiving portion 831 on the basis of the identified position of the feature location on the image and the positional relationship between the light receiving portion 831 of the light transmitting/receiving device 83 that is a target to which the emission beam 51 is emitted and the feature location. The control device 50 may control the position changing device 40E (i.e., may set the inclination angles of the plurality of other reflective elements corresponding to the light reception region 4142 in the input angle changing member 72) so that the input beam 52 output from the light transmitting portion 832 is input to the light receiving optical system 413 (the communication board 62) on the basis of the identified position of the feature location on the image and the positional relationship between the light transmitting portion 832 of the light transmitting/receiving device 83 to which the input beam 52 is output and the feature location. Furthermore, the feature location of the light transmitting/receiving device 83 used when the position changing device 40E is controlled so that the emission beam 51 output from the light emitting device 1E is input to the light receiving portion 831 may be different from the feature location used when the position changing device 40E is controlled so that the input beam 52 output from the light transmitting portion 832 is input to the light receiving optical system 413. For example, each feature location may be a different feature location (e.g., a mark of a different shape or color) arranged in the light transmitting/receiving device 83.

In the above case, it is possible to receive the input beam 52 from the light transmitting portion 832 with the light receiving optical system 413 (the communication board 62) while inputting the emission beam 51 to the light receiving portion 831 in a case where the light receiving portion 831 and the light transmitting portion 832 of the light transmitting/receiving device 83 are separated from each other as well as a case where the light receiving portion 831 and the light transmitting portion 832 of the light transmitting/receiving device 83 are arranged adjacent or close to each other. Furthermore, it is possible to perform optical wireless communication with the light receiving device 81 and the light transmitting device 82 described above in addition to the light transmitting/receiving device 83. That is, while the emission beam 51 is input to the light receiving portion 811 of the light receiving device 81, the input beam 52 from the light transmitting portion 821 of the light transmitting device 82 can be received by the light receiving optical system 413 (the communication board 62).

Furthermore, as shown in FIG. 12, the light transmitting/receiving optical element 41E may be arranged at a defocus position 732. For example, the end of the light transmitting/receiving optical element 41E may be arranged at the defocus position 732. For example, a light output end of the optical fiber of the light transmitting optical system 412 of the light transmitting/receiving optical element 41E (the output end of the optical fiber outputting the emission beam 51 to the collimating lens 73) and a light reception end of the optical fiber of the light receiving optical system 413 of the light transmitting/receiving optical element 41E (a light reception end of the optical fiber receiving the input beam 52 from the collimating lens 73) may be arranged at the defocus position 732.

The light transmitting/receiving optical element 41E may be arranged at the defocus position 732 located further in the positive x-axis direction from the focus position 731 on the light transmitting/receiving optical element 41E side of the collimating lens 73. Furthermore, the light transmitting/receiving optical element 41E may be arranged at the defocus position located in the negative x-axis direction from the focus position 731. The focus position 731 may be referred to as a focus position of the collimating lens 73. The focus position 731 may be referred to as a focus position of the condensing optical system 71.

Furthermore, according to a light distribution of the emission beam 51 output from the light transmitting optical system 412 and a light distribution of the input beam 52 input to the light receiving optical system 413, a part of the optical path of the emission beam 51 and a part of the optical path of the input beam 52 in the light emitting device 1E may overlap. In this case, it is not possible to identify and change the reflection angle of the emission beam 51 and the reflection angle of the input beam 52 with a plurality of reflecting elements corresponding to the light transmission region 4141 and a plurality of reflective elements corresponding to the light reception region 4142. Therefore, an optical member configured to adjust a light distribution of the emission beam 51 from the light transmitting optical system 412 may be provided on the optical path between the light transmitting optical system 412 and the collimating lens 73 so that a part of the optical path of the emission beam 51 and a part of the optical path of the input beam 52 do not overlap. The optical member may be a prism. For example, a prism having a vertical angle in the positive y-axis direction (e.g., a triangular prism) may be arranged on the optical path between the light transmitting optical system 412 and the collimating lens 73. An optical member may be provided on the optical path between the light receiving optical system 413 and the collimating lens 73 to adjust the light distribution of the input beam 52 input to the light receiving optical system 413 so that a part of the optical path of the emission beam 51 and a part of the optical path of the input beam 52 are prevented from overlapping. The optical member may be a prism. For example, the prism (e.g., a triangular prism) having a vertical angle in the negative y-axis direction may be arranged on the optical path between the light receiving optical system 413 and the collimating lens 73.

Furthermore, the input angle changing member 72 is not limited to a spatial light modulation element and may be a galvanometer mirror or a polygon mirror.

Furthermore, the light emitting device 1E may include an optical system on the optical path between the condensing optical system 71 and the input angle changing member 72. This optical system may be an optical system in which the pupil of the condensing optical system 71 and the input angle changing member 72 are conjugate. For example, when the input angle changing member 72 is a reflective spatial light modulator such as a DMD or a galvanometer mirror, the optical system may be an optical system in which the pupil of the condensing optical system 71 and a reflective surface of a reflective spatial light modulator such as a DMD or a galvanometer mirror are conjugate. Furthermore, the optical system may include at least one existing optical member.

As described above, according to the present embodiment, the input angle changing member 72 is provided to change the input angle of the emission beam 51 for the condensing optical system 71 and change the position of the emission beam 51 on the conjugate plane 220 (i.e., change the emission position of the emission beam 51 output by the image forming optical system 10) by changing the input angle of the emission beam 51 for the condensing optical system 71. Therefore, according to the present embodiment, it is not necessary to move the light transmitting/receiving optical element 41 on the x-z plane (e.g., on a plane intersecting the optical axis 111a or 111c on the conjugate plane 220 side of the image forming optical system 10). Therefore, according to the present embodiment, the device can be miniaturized. Moreover, according to the present embodiment, because it is not necessary to move the light transmitting/receiving optical element 41 on the x-z plane, the emission position of the emission beam 51 can be changed at high speed.

As described above, according to the present embodiment, the input angle changing member 72 is provided to change a reflection angle of the input beam 52 input at a predetermined angle from the condensing optical system 71 and input the input beam 52 to the light receiving optical system 413 (the communication board 62). Therefore, according to the present embodiment, it is not necessary to move the light transmitting/receiving optical element 41 on the x-z plane (e.g., on a plane intersecting the optical axis 111a or 111c on the conjugate plane 220 side of the image forming optical system 10). Therefore, according to the present embodiment, the device can be miniaturized. Moreover, according to the present embodiment, because it is not necessary to move the light transmitting/receiving optical element 41 on the x-z plane, the light reception position of the input beam 52 can be changed at high speed.

Furthermore, in the present embodiment, the light of at least one of the emission beam 51 and the input beam 52 is not limited to light for performing optical wireless communication. For example, light of at least one of the emission beam 51 and the input beam 52 may be light for optical wireless power supply. A wavelength of light for performing optical wireless power supply may be an infrared wavelength band, an ultraviolet wavelength band, or a wavelength band of visible light. An output of the light for optical wireless power supply may be several watts (W), several tens of watts (W), or several kilowatts (kW).

As an example, when the emission beam 51 is used as light for performing optical wireless power supply, the light emitting device 1D may emit the emission beam 51 to a target device for performing optical wireless power supply (e.g., at least one device of the light emitting device 1D, the light receiving device 82, and the light transmitting/receiving device 83) according to the above-described process and control of the control device 50 and therefore may supply electric power to the device. Furthermore, the light emitting device 1D may be referred to as a power supply device.

### [Fifth Embodiment]

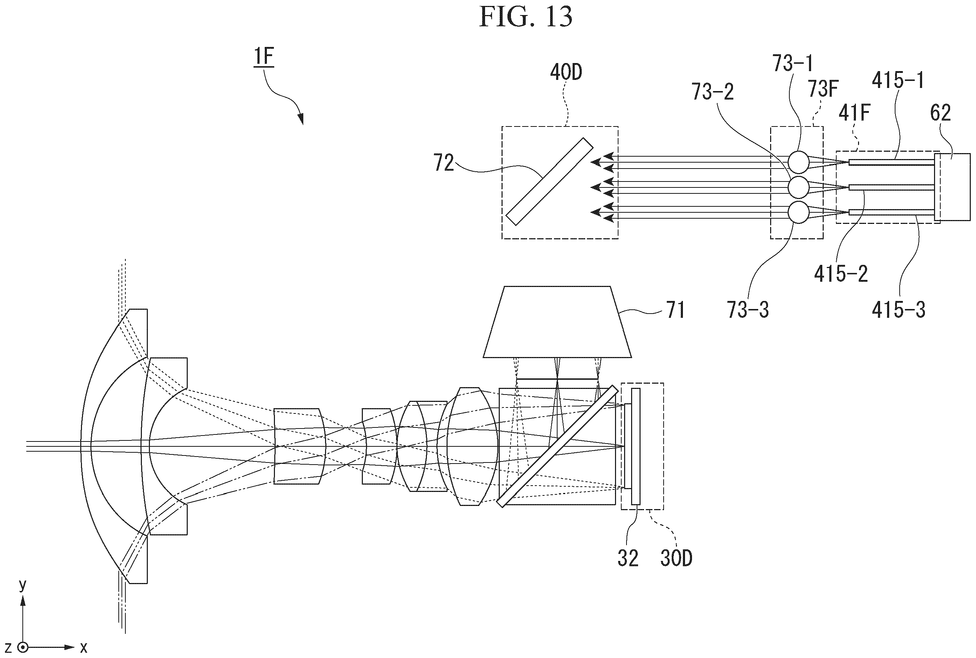

FIG. 13 is a schematic configuration diagram schematically showing a light emitting device according to a fifth embodiment.

A light emitting device 1F according to the fifth embodiment will be described with reference to FIG. 13. Unlike the light emitting device 1D, the light emitting device 1F includes a light transmitting optical element 41F instead of the light transmitting optical element 41D of the light emitting device 1D of the third embodiment. Moreover, unlike the light emitting device 1D, the light emitting device 1F includes a collimating lens 73F. Furthermore, the above-described feature location may be provided in the light emitting device 1F. Furthermore, the light emitting device 1F may be installed on the above-described movable object.

Constituent elements similar to those of the light emitting device 1D are denoted by similar reference signs and description thereof may be omitted in the description of the light emitting device 1F. Furthermore, in FIG. 13, the illustration of the control device 50 is omitted.

In the present embodiment, the light emitting device 1F may perform optical wireless communication.

For example, the light emitting device 1F may perform optical wireless communication with a plurality of light receiving devices 81, a plurality of light transmitting devices 82, or a plurality of light transmitting/receiving devices 83 serving as a physical object. Furthermore, the light emitting device 1F may perform optical wireless communication with at least two of the three types of devices of the light transmitting/receiving device 83, the light transmitting device 82, and the light transmitting/receiving device 83. Furthermore, the light emitting device 1F may perform optical wireless communication with a plurality of light emitting devices 1, a plurality of light emitting devices 1C, a plurality of light emitting devices 1D, or a plurality of light emitting devices 1E serving as a physical object. Furthermore, the light emitting device 1F may perform optical wireless communication with at least two of the four types of devices of the light emitting device 1, the light emitting device 1C, the light emitting device 1D, and the light emitting device 1E serving as a physical object. Furthermore, optical wireless communication with a plurality of devices included in the optical wireless communication system 100A may be performed using the light emitting device 1F instead of the light emitting device 1A of the optical wireless communication system 100A of the first embodiment.

The light transmitting optical element 41F may include a plurality of optical fibers configured to output emission beams 51 toward the corresponding collimating lenses 73F when the emission beams 51 generated in the communication board 62 are distributed by a distributor (not shown). For example, as shown in FIG. 13, the light transmitting optical element 41F may include three light transmitting optical elements (a first light transmitting optical element 415-1, a second light transmitting optical element 415-2, and a third light transmission element 415-3). Furthermore, the light transmitting optical element 41F may include an existing optical member in addition to the plurality of optical fibers. Furthermore, the light transmitting optical element 41F may include at least one existing optical member if each of the plurality of emission beams 51 distributed from the communication board 62 can be output toward the corresponding collimating lens 73F. Furthermore, the light transmitting optical element 41F may include, for example, the plurality of optical fibers 61-1 described above and the plurality of Fresnel lenses 42-1 described above. Furthermore, one optical fiber (and/or optical member) of the light transmitting optical element 41F can also be considered as the light transmitting optical element 41D of the third embodiment. That is, the light transmitting optical element 41F including a plurality of light transmitting optical elements 41D can also be considered. Furthermore, the number of communication boards 62 provided in the light emitting device 1F is not limited to one, but may be two or more. In this case, the light emitting device 1F may include the communication board 62 corresponding to each of the plurality of optical fibers of the light transmitting optical element 41F. That is, the light emitting device 1F may include a plurality of communication boards 62 equal in number to the plurality of optical fibers of the light transmitting optical element 41F. In this case, the communication beam 51 generated by each communication board 62 may be output toward the collimating lens 73F via each optical fiber of the light transmitting optical element 41F.

The collimating lens 73F converts each emission beam 51 output from the light transmitting optical element 41F into parallel light. For example, the collimating lenses 73F include a plurality of collimating lenses configured to convert each emission beam 51 output from the light transmitting optical element 41F into parallel light. For example, the collimating lenses 73F may include three collimating lenses (a first collimating lens 73-1, a second collimating lens 73-2, and a third collimating lens 73-3) as shown in FIG. 13. Furthermore, the collimating lenses 73F may include an existing optical member in addition to a plurality of collimating lenses. Furthermore, one collimating lens among the collimating lenses 73F can also be considered as the collimating lens 73 of the third embodiment. That is, the collimating lenses 73F including a plurality of collimating lenses 73 can also be considered.

For example, as shown in FIG. 13, the collimating lens 73-1 may convert the light output from the first light transmitting optical element 415-1 into parallel light, the collimating lens 73-2 may convert the light output from the second light transmitting optical element 415-2 into parallel light, and the collimating lens 73-3 may convert the light output from the third light transmitting optical element 415-3 into parallel light.

Furthermore, the communication board 62 may be referred to as a light transmission source. Furthermore, a light transmission source including the communication board 62 and the light transmitting optical element 41F can be considered. Furthermore, a light transmission source including the communication board 62, the light transmitting optical element 41F, and the collimating lens 73F can be considered.

The imaging device 30 identifies and independently receives a plurality of input beams 52 input to the image forming optical system 10.

The input angle changing member 72 may be, for example, a spatial light modulator such as a mirror array which has a plurality of reflective elements arranged two-dimensionally and in which the inclination angle of each reflective element can be changed. In this case, the input angle changing member 72 may be a digital mirror device (DMD) serving as a spatial light modulator. The input angle changing member 72 is not limited to the reflection type, and may be an existing transmissive spatial light modulator.

Here, a case where the light emitting device 1F performs optical wireless communication with three light transmitting/receiving devices 83 (the first light transmitting/receiving device 83-1, the second light transmitting/receiving device 83-2, and the third light transmitting/receiving device 83-3) will be described. In this case, the light emitting device 1F may include three collimating lenses (the first collimating lens 73-1, the second collimating lens 73-2, and the third collimating lens 73-3) and three light transmitting optical elements (the first light transmitting optical element 415-1, the second light transmitting optical element 415-2, and the third light transmitting optical element 415-3). Moreover, three communication boards (a first communication board 62-1, a second communication board 62-2, and a third communication board 62-3) configured to generate emission beams 51 (a first emission beam 51-1, a second emission beam 51-2, and a third emission beam 51-3) input to the three light transmitting optical elements of the light emitting device 1F may be provided. The input angle changing member 72 may be a digital mirror device (DMD). Here, at least some of the plurality of reflective elements (which may be referred to as a first reflective element group) in the input angle changing member 72 may be used to change a reflection angle (i.e., change a position of the emission beam 51 on the conjugate plane 220) so that the first emission beam 51-1 from the first collimating lens 73-1 is input to the first light receiving portion 831-1 of the first light transmitting/receiving device 83-1. At least some of the plurality of reflective elements (which may be referred to as a second reflective element group different from the first reflective element group) in the input angle changing member 72 may be used to change a reflection angle so that the second emission beam 51-2 from the second collimating lens 73-2 is input to the second light receiving portion 831-2 of the second light transmitting/receiving device 83-2. At least the others of the plurality of reflective elements (which may be referred to as a third reflective element group different from the first and second reflective element groups) in the input angle changing member 72 may be used to change a reflection angle so that the third emission beam 51-3 from the third collimating lens 73-3 is input to the third light receiving portion 831-3 of the third light transmitting/receiving device 83-3.

The light emitting device 1F may output the first emission beam 51-1 generated by the first communication board 62-1 from the image forming optical system 10 via the first light transmitting optical element 415-1, the first collimating lens 73-1, the first reflective element group of the input angle changing member 72, and the condensing optical system 71 or may receive the first input beam 52-1 output from the first light transmitting/receiving device 83-1 with the imaging device 30D via the image forming optical system 10. Moreover, the light emitting device 1F may output the second emission beam 51-2 generated by the second communication board 62-2 from the image forming optical system 10 via the second light transmitting optical element 415-2, the second collimating lens 73-2, the second reflective element group of the input angle changing member 72, and the condensing optical system 71 or may receive the second input beam 52-2 output from the second light transmitting/receiving device 83-2 with the imaging device 30D via the image forming optical system 10. Moreover, the light emitting device 1F may output the third emission beam 51-3 generated by the third communication board 62-3 from the image forming optical system 10 via the third light transmitting optical element 415-3, the third collimating lens 73-3, the third reflective element group of the input angle changing member 72, and the condensing optical system 71 or may receive the third input beam 52-3 output from the third light transmitting/receiving device 83-3 with the imaging device 30D via the image forming optical system 10.

In this case, the first emission beam 51-1 from the light emitting device 1F is emitted to the first light receiving portion 831-1 of the first light transmitting/receiving device 83-1 and the first input beam 52-1 from the first light transmitting portion 832-1 of the first light transmitting/receiving device 83-1 is received by the imaging device 30D of the light emitting device 1F, such that optical wireless communication may be performed by the light emitting device 1F and the first light transmitting/receiving device 83-1. Moreover, the second emission beam 51-2 from the light emitting device 1F is emitted to the second light receiving portion 831-2 of the second light transmitting/receiving device 83-2 and the second input beam 52-2 from the second light transmitting portion 832-2 of the second light transmitting/receiving device 83-2 is received by the imaging device 30D of the light emitting device 1F, such that optical wireless communication may be performed by the light emitting device 1F and the second light transmitting/receiving device 83-2. Moreover, the third emission beam 51-3 from the light emitting device 1F is emitted to the third light receiving portion 831-3 of the third light transmitting/receiving device 83-3 and the third input beam 52-3 from the third light transmitting portion 832-3 of the third light transmitting/receiving device 83-3 is received by the imaging device 30D of the light emitting device 1F, such that optical wireless communication may be performed by the light emitting device 1F and the third light transmitting/receiving device 83-3.

The control device 50 of the light emitting device 1F may control the position changing device 40D (i.e., may change the reflection angle of the first emission beam 51-1 in the first reflective element group of the input angle changing member 72) so that the first emission beam 51-1 output from the light emitting device 1F is input to the first light receiving portion 831-1 on the basis of a position of the feature location of the first light transmitting/receiving device 83-1 on the image acquired by the imaging device 30D identified in the above-described image processing and a positional relationship between the feature location of the first light transmitting/receiving device 83-1 and the first light receiving portion 831-1 of the first light transmitting/receiving device 83-1. The light emitting device 1D may receive the first input beam 52-1 from the first light transmitting portion 832-1 of the first light transmitting/receiving device 83-1 with the imaging device 30D via the image forming optical system 10.

The control device 50 may control the position changing device 40D (i.e., may change the reflection angle of the second emission beam 51-2 in the second reflective element group of the input angle changing member 72) so that the second emission beam 51-2 output from the light emitting device 1F is input to the second light receiving portion 831-2 on the basis of a position of the feature location of the second light transmitting/receiving device 83-2 on the image acquired by the imaging device 30D identified in the above-described image processing and a positional relationship between the feature location of the second light transmitting/receiving device 83-2 and the second light receiving portion 831-2 of the second light transmitting/receiving device 83-2. The light emitting device 1F may receive the second input beam 52-2 from the second light transmitting portion 832-2 of the second light transmitting/receiving device 83-2 with the imaging device 30D via the image forming optical system 10.

The control device 50 may control the position changing device 40D (i.e., may change the reflection angle of the third emission beam 51-2 in the third reflective element group of the input angle changing member 72) so that the third emission beam 51-3 output from the light emitting device 1F is input to the third light receiving portion 831-3 on the basis of a position of the feature location of the third light transmitting/receiving device 83-3 on the image acquired by the imaging device 30D identified in the above-described image processing and a positional relationship between the feature location of the third light transmitting/receiving device 83-3 and the third light receiving portion 831-3 of the third light transmitting/receiving device 83-3. The light emitting device 1F may receive the third input beam 52-3 from the third light transmitting portion 832-3 of the third light transmitting/receiving device 83-3 with the imaging device 30D via the image forming optical system 10.

Furthermore, as in the above-described third embodiment, the imaging element 32 of the imaging device 30D may be configured to identify and receive light from the first input beam 52-1, the second input beam 52-2, and the third input beam 52-3. For example, the optical conditions of the first input beam 52-1, the second input beam 52-2, and the third input beam 52-3 may be different. In the imaging element 32, the light receiving elements (light receiving pixels) may be arranged so that differences between the optical conditions of the first input beam 52-1, the second input beam 52-2, and the third input beam 52-3 can be identified. For example, when the wavelength of the first input beam 52-1, the wavelength of the second input beam 52-2, and the wavelength of the third input beam 52-3 are different, a light receiving element capable of receiving light of the wavelength of the first input beam 52-1, a light receiving element capable of receiving light of the wavelength of the second input beam 52-2, and a light receiving element capable of receiving light of the wavelength of the third input beam 52-3 may be arranged as light receiving pixels on the imaging plane. Furthermore, the light receiving element capable of receiving light having the wavelength of the first input beam 52-1 may not be able to receive light having the wavelength of the second input beam 52-2 and light having the wavelength of the third input beam 52-3. Furthermore, the light receiving element capable of receiving light of the wavelength of the second input beam 52-2 may not be able to receive light of the wavelength of the third input beam 52-3 and light having the wavelength of the first input beam 52-1. Furthermore, the light receiving element capable of receiving light having the wavelength of the third input beam 52-3 may not be able to receive light of the wavelength of the first input beam 52-1 and light having the wavelength of the second input beam 52-2. The control device 50 of the light emitting device 1F may identify the first input beam 52-1, the second input beam 52-2, and the third input beam 52-3 on the basis of the light reception results of the imaging device 30D (the imaging element 32) described above.

Furthermore, as in the third embodiment described above, the control device 50 of the light emitting device 1F may identify the first light transmitting/receiving device 83-1, the second light transmitting/receiving device 83-2, and the third light transmitting/receiving device 83-3 to perform optical wireless communication. In this case, the control device 50 may identify the first light transmitting/receiving device 8-1, the second light transmitting/receiving device 83-2, and the third transmitting/receiving device 83-3 on the basis of differences between the feature location of the first light transmitting/receiving device 83-1, the feature location of the second light transmitting/receiving device 83-2, and the feature location of the third light transmitting/receiving device 83-3 on the image acquired by the imaging device 30D (e.g., differences of shapes of markers serving as the feature locations). Furthermore, as in the above-described third embodiment, the control device 50 may identify the first light transmitting/receiving device 83-1 and the second light transmitting/receiving device 83-2 on the basis of light reception results of the first input beam 52-1 from the first light transmitting/receiving device 83-1, the second input beam 52-2 from the second light transmitting/receiving device 83-2, and the third input beam 52-3 from the third light transmitting/receiving device 83-3 in the imaging device 30D. The control device 50 may identify the first light transmitting/receiving device 83-1, the second light transmitting/receiving device 83-2, and the third light transmitting/receiving device 83-3 on the basis of differences between optical conditions of the first input beam 52-1 from the first light transmitting/receiving device 83-1, the second input beam 52-2 from the second light transmitting/receiving device 83-2, and the third input beam 52-3 from the third light transmitting/receiving device 83-3 received by the imaging device 30D.

As described above, the control device 50 of the light emitting device 1F may control the position changing device 40D (the input angle changing member 72) configured to change the position of each of the plurality of emission beams 51 on the conjugate plane 220 by separately changing a reflection angle of each of the plurality of emission beams 51 (i.e., an input angle for the condensing optical system 71) on the basis of results of imaging the feature locations of the plurality of light transmitting/receiving devices 83 serving as physical objects in the imaging device 30D.

Furthermore, in this case, it can be said that the position changing device 40D (the input angle changing member 72) distributes a plurality of emission beams 51 from the collimating lens 73F in a direction in which the emission beams 51 are input to the light receiving portions 831 of the plurality of light transmitting/receiving devices 83.

Furthermore, as described above, the light emitting device 1F is not limited to the case where optical wireless communication with the three light transmitting/receiving devices 83 (the first light transmitting/receiving device 83-1, the second light transmitting/receiving device 83-2, and the third light transmitting/receiving device 83-3) is performed. For example, the light emitting device 1F may perform optical wireless communication with two light transmitting/receiving devices 83 and one light receiving device 81. In this case, the first emission beam 51-1 from the light emitting device 1F is emitted to the first light receiving portion 831-1 of the first light transmitting/receiving device 83-1 and the first input beam 52-1 from the first light transmitting portion 832-1 of the first light transmitting/receiving device 83-1 is received by the imaging device 30D of the light emitting device 1F, such that the light emitting device 1F and the first light transmitting/receiving device 83-1 may perform optical wireless communication. Moreover, the second emission beam 51-2 from the light emitting device 1F is emitted to the second light receiving portion 831-2 of the second light transmitting/receiving device 83-2 and the second input beam 52-2 from the second light transmitting portion 832-2 of the second light transmitting/receiving device 83-2 is received by the imaging device 30D of the light emitting device 1F, such that the light emitting device 1F and the second light transmitting/receiving device 83-2 may perform optical wireless communication. Moreover, the third emission beam 51-3 from the light emitting device 1F is emitted to the light receiving portion 811 of the light receiving device 81 and the light emitting device 1F and the light receiving device 81 may perform optical wireless communication. That is, the number of emission beams 51 output from the light emitting device 1F may be different from the number of input beams 52 input to the light emitting device 1 F.

As described above, according to the present embodiment, the control device 50 can input a plurality of emission beams 51 from a plurality of light transmitting optical elements to a plurality of physical objects (e.g., light receiving portions 831 of a plurality of light transmitting/receiving devices 83) by controlling the position changing device 40D (the input angle changing member 72) on the basis of the imaging result of the imaging device 30D (e.g., feature locations of the plurality of light transmitting/receiving devices 83 serving as a plurality of physical objects on the image identified in the above-described image processing). According to the present embodiment, the emission beams 51 can be emitted to the plurality of physical objects (e.g., the light receiving portions 831 of the plurality of light transmitting/receiving devices 83) at the same time. That is, optical wireless communication with the light emitting device 1F and the plurality of physical objects (e.g., the plurality of light transmitting/receiving devices 83) can be performed at the same time.

Moreover, according to the present embodiment, the imaging device 30D identifies and independently receives the plurality of input beams 52 from the plurality of physical objects (e.g., the light transmitting portions 832 of the plurality of light transmitting/receiving devices 83) input to the image forming optical system 10. Therefore, according to the present embodiment, the plurality of input beams 52 from the plurality of physical objects (the light transmitting portions 832 of the plurality of light transmitting/receiving devices 83) can be received at the same time. That is, optical wireless communication with the light emitting device 1F and the plurality of physical objects (e.g., the plurality of light transmitting/receiving devices 83) can be performed at the same time.

Moreover, according to the present embodiment, it is possible to receive the plurality of input beams 52 while collectively imaging the plurality of physical objects (e.g., the feature locations of the plurality of light transmitting/receiving devices 83) in one imaging device 30D (one imaging element 32).

Furthermore, in the present embodiment, light of at least one of the emission beam 51 and the input beam 52 is not limited to light for performing optical wireless communication. For example, light of at least one of the emission beam 51 and the input beam 52 may be light for optical wireless power supply. A wavelength of light for performing optical wireless power supply may be an infrared wavelength band, an ultraviolet wavelength band, or a wavelength band of visible light. An output of the light for optical wireless power supply may be several watts (W), several tens of watts (W), or several kilowatts (kW).

As an example, when the emission beam 51 is used as light for performing optical wireless power supply, the light emitting device 1F may emit the emission beam 51 to a target device for performing optical wireless power supply (e.g., at least one device of the light emitting device 1F, the light receiving device 82, and the light transmitting/receiving device 83) according to the above-described process and control of the control device 50 and therefore may supply electric power to the device. Furthermore, the light emitting device 1F may be referred to as a power supply device.

### [Sixth Embodiment]

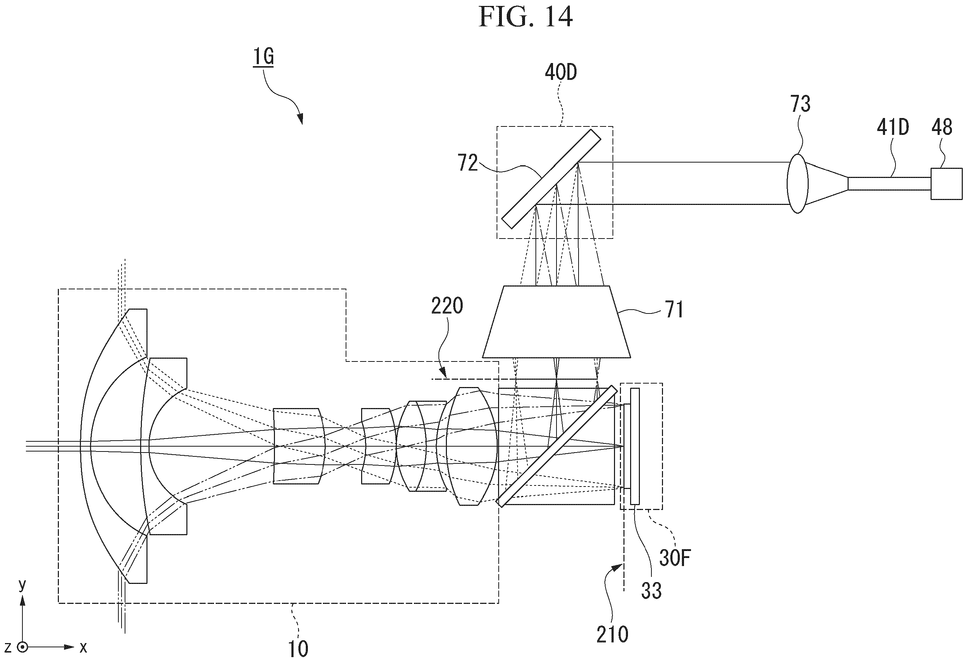

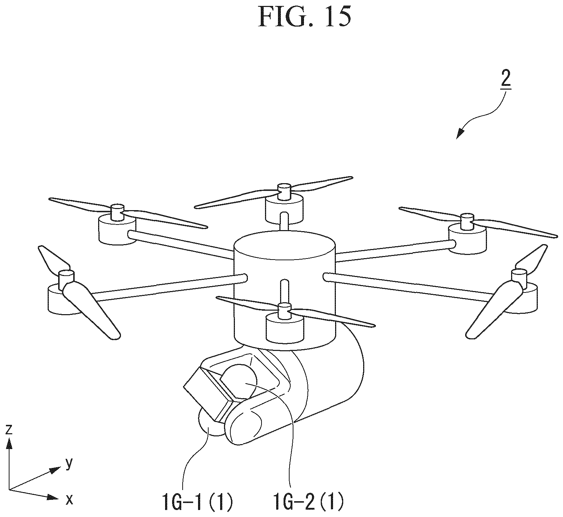

Next, a light emitting device 1G according to a sixth embodiment will be described with reference to FIGS. 14 and 15.

FIG. 14 is a schematic configuration diagram schematically showing the light emitting device according to the sixth embodiment. First, the schematic configuration of the light emitting device 1G according to the sixth embodiment will be described with reference to FIG. 14. Unlike the light emitting device 1D, the light emitting device 1G includes a high-power beam generating device 48 instead of the communication board 62 of the light emitting device 1D of the above-described third embodiment. Unlike the light emitting device 1D, the light emitting device 1G includes an imaging device 30F instead of the imaging device 30D of the light emitting device 1D. Furthermore, the light emitting device 1G may be installed on the above-described movable object.

Constituent elements similar to those of the light emitting device 1D are denoted by similar reference signs and description thereof may be omitted in the description of the light emitting device 1G. Furthermore, in FIG. 14, the illustration of the control device 50 is omitted.

The imaging device 30F includes an imaging element 33 having a plurality of pixels arranged on an imaging plane. It can be said that the imaging element 33 captures an image of at least a part of a physical object formed on an image plane 210. For example, the imaging plane of the imaging element 33 may be arranged on the image plane 210 of the image forming optical system 10. Moreover, the imaging plane of the imaging element 33 may not be arranged on the image plane 210 of the image forming optical system 10 and may be arranged near the image plane 210. Furthermore, the imaging element 33 may be an imaging element capable of outputting color image data (e.g., an RGB image sensor) or an imaging element capable of outputting monochrome image data (e.g., a monochrome image sensor). Furthermore, the imaging device 30F may be configured to be able to capture a reduced image of at least a part of the physical object formed on the image plane 210. Furthermore, the imaging device 30F may be configured to be able to capture a magnified image or an unmagnified image of at least a part of the physical object formed on the image plane 210. Furthermore, the imaging device 30F may be similar to the imaging device 30 of the light emitting device 1 of the first embodiment. That is, the imaging device 30F can be considered as the imaging device 30. Furthermore, the imaging element 33 of the imaging device 30F may be similar to the imaging element 31 of the imaging device 30 of the light emitting device 1. That is, the imaging device 33 can be considered as the imaging device 31.

The high-power beam generating device 48 generates (outputs) a high-power beam. That is, in the present embodiment, the light emitting device 1G emits a high-power beam to a physical object. The high-power beam generating device 48 generates (outputs) a light beam having a higher intensity than the emission beam 51 that can be generated by the communication board 62 of the light emitting device 1D. Furthermore, the high-power beam emitted by the light emitting device 1G may be referred to as the emission beam 51. For example, the high-power beam generating device 48 may generate (output) a high-power laser. Furthermore, the high-power beam generating device 48 may be referred to as a high-power laser generating device.

The position changing device 40D includes at least an input angle changing member 72.

The input angle changing member 72 may be, for example, a spatial light modulator such as a mirror array which has a plurality of reflective elements arranged two-dimensionally and in which the inclination angle of each reflective element can be changed. In this case, the input angle changing member 72 may be a digital mirror device (DMD) as a spatial light modulator. The input angle changing member 72 is not limited to the reflection type, and may be an existing transmissive spatial light modulator. Furthermore, the input angle changing member 72 is not limited to a spatial light modulator and may be a galvanometer mirror or a polygon mirror.

The light emitting device 1G may emit the high-power beam (i.e., the emission beam 51) to at least a part of the physical object to destroy, exterminate, or remove the physical object. The light emitting device 1G may emit a high-power beam to, for example, at least a part of space debris drifting in outer space serving as a physical object. The light emitting device 1G may destroy space debris by, for example, emitting a high-power beam to the space debris.

Furthermore, the light emitting device 1G may emit a high-power beam to at least one of weeds, pests, and vermin serving as physical objects to remove the physical object.

Furthermore, the physical objects to which the light emitting device 1G emits the high-power beam are not limited to the above-described space debris, weeds, pests, and vermin. The light emitting device 1G may destroy, exterminate, or remove any physical object to be destroyed, exterminated, or removed by emitting the high-power beam (i.e., the emission beam 51) to the physical object.

For example, when the light processing device 1G removes weeds serving as physical objects, the control device 50 of the light emitting device 1G may control the position changing device 40D (e.g., may change the inclination angle of the reflective element of the input angle changing member 72) so that the high-power beam (i.e., the emission beam 51) from the light emitting device 1G is emitted to the weeds on the basis of a position of the weeds on the image acquired by the imaging device 30F identified in the above-described image processing.

Furthermore, as in the third embodiment, a calibration of the imaging device 30F may be performed or a calibration of the input angle changing member 72 may be performed.

The input angle changing member 72 may be a spatial light modulator. For example, the input angle changing member 72 may be a DMD serving as the spatial light modulator. In this case, some reflective elements (that may be referred to as a first reflective element group) among a plurality of reflective elements of the input angle changing member 72 may be used to change a reflection angle (i.e., change a position of the first emission beam 51-1 on the conjugate plane 220) so that the first emission beam 51-1 serving as a part of the high-power beam (the emission beam 51) output from the high-power beam generating device 48 via the light transmitting optical element 41D and the collimating lens 73 is emitted to the first physical object. Moreover, the other reflective elements (that may be referred to as a second reflective element group) among the plurality of reflective elements of the input angle changing member 72 may be used to change a reflection angle (i.e., change a position of the second emission beam 51-2 on the conjugate plane 220) so that the second emission beam 51-2 serving as the other part of the high-power beam output from the high-power beam generating device 48 via the light transmitting optical element 41D and the collimating lens 73 is emitted to the second physical object. Furthermore, the first physical object and the second physical object may be the above-described space debris, weeds, pests, or vermin located at different positions. The control device 50 of the light emitting device 1G may control the position changing device 40D (i.e., may change the reflection angle of the first emission beam 51-1 in the first reflective element group of the input angle changing member 72) so that the first emission beam 51-1 output from the light emitting device 1G is emitted to the first physical object on the basis of the position of the first physical object on the image acquired by the imaging device 30F identified in the above-described image processing. Moreover, the control device 50 of the light emitting device 1G may control the position changing device 40D (i.e., may change the reflection angle of the second emission beam 51-2 in the second reflective element group of the input angle changing member 72) so that the second emission beam 51-2 output from the light emitting device 1G is emitted to the second physical object on the basis of the position of the second physical object on the image acquired by the imaging device 30F identified in the above-described image processing. Furthermore, the control device 50 of the light emitting device 1G may identify the position of the first physical object and the position of the second physical object on the same image acquired by the imaging device 30F in the above-described image processing. According to the above-described process and control of the control device 50, the light emitting device 1G may simultaneously emit high-power beams (e.g., the first emission beam 51-1 and the second emission beam 51-2) to the plurality of physical objects (e.g., the first physical object and the second physical object) located at different positions.

Furthermore, the light emitting device 1G may include an optical system on an optical path between the condensing optical system 71 and the input angle changing member 72. This optical system may be an optical system in which the pupil of the condensing optical system 71 and the input angle changing member 72 are conjugate. For example, when the input angle changing member 72 is a reflective spatial light modulator such as a DMD or a galvanometer mirror, the optical system may be an optical system in which the pupil of the condensing optical system 71 and a reflective surface of the reflective spatial light modulator such as a DMD or a galvanometer mirror are conjugate. Furthermore, the optical system may include at least one existing optical member.

FIG. 15 is a diagram showing an example of a form in which the light emitting device 1G of the sixth embodiment is provided on the above-described movable object. The movable object may be, for example, an unmanned aircraft (drone).

As shown in FIG. 15, the movable object 2 may include the light emitting device 1G to emit a high-power beam (i.e., an emission beam 51) from the sky to weeds, pests, or vermin serving as physical objects. The movable object 2 may include a plurality of light emitting devices 1G. For example, the movable object 2 may include a light emitting device 1G-1 and a light emitting device 1G-2. The movable object 2 may be arranged in different directions by 180° between the light emitting device 1G-1 and the light emitting device 1G-2. A high-power beam can be emitted to at least one of the weeds, pests, and vermin serving as physical objects located in a wide range. Furthermore, the movable object 2 may not include a plurality of light emitting devices 1G and may include a single light emitting device 1G.

Furthermore, the movable object 2 is not limited to the light emitting device 1G of the sixth embodiment, and may be provided with a light emitting device of another embodiment. For example, when the light emitting device of the first, second, third, fourth, or fifth embodiment is provided on the movable object 2, the light emitting device may perform optical wireless communication with other physical objects (e.g., 0 or more light receiving devices 81, 0 or more light transmitting devices 82, and 0 or more light transmitting/receiving devices 83).

As described above, according to the present embodiment, the light emitting device 1G includes the high-power beam generating device 48 to emit the high-power beam (the emission beam 51) to a physical object. The light emitting device 1G can destroy, exterminate, or remove the physical object by emitting the high-power beam to the physical object. Moreover, the light emitting device 1G includes the input angle changing member 72, such that it is possible to switch the emission position of the high-power beam at high speed.

The light emitting device 1G controls the position changing device 40D on the basis of the position of the physical object on the image acquired by the imaging device 30F identified in the above-described image processing, thereby accurately emitting the high-power beam (i.e., the emission beam 51) from the light emitting device 1G to a target physical object.

### [Seventh Embodiment]

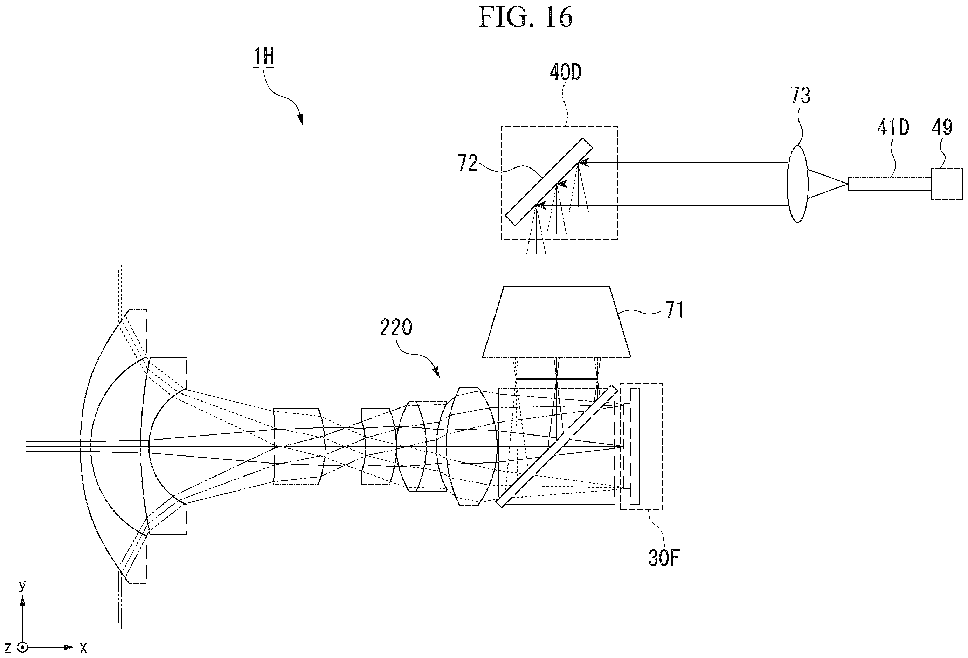

FIG. 16 is a schematic configuration diagram schematically showing a light emitting device according to a seventh embodiment.

A light emitting device 1H according to the seventh embodiment will be described with reference to FIG. 16. Unlike the light emitting device 1G of the sixth embodiment described above, the light emitting device 1H includes a light source 49 for projecting a light pattern onto a physical object instead of the high-power beam generating device 48 for destroying, exterminating, or removing a physical object in the light emitting device 1G.

Constituent elements similar to those of the light emitting device 1G are denoted by similar reference signs and description thereof may be omitted in the description of the light emitting device 1H. Furthermore, in FIG. 16, the illustration of the control device 50 is omitted.

The light emitting device 1H may project a light pattern onto a physical object. The light pattern projected onto the physical object from the light emitting device 1H may be light having any intensity distribution. The light pattern may be referred to as structured light.

The light source 49 may be a light emitting diode (LED). Furthermore, the light source 49 is not limited to an LED if it can be used to project a light pattern onto a physical object. For example, the light source 49 may be a water source lamp or a laser light source.

The input angle changing member 72 may be a spatial light modulator such as a mirror array in which a plurality of reflective elements arranged two-dimensionally and the inclination angle of each reflective element can be changed. Furthermore, the input angle changing member 72 is not limited to a reflection type and may be an existing transmissive spatial light modulator.

The spatial light modulator serving as the input angle changing member 72 spatially modulates the light flux (the emission beam 51) input from the light source 49 via the light transmitting optical element 41D and the collimating lens 73 and forms a light pattern on the conjugate plane 220 via the condensing optical system 71. The light pattern formed on the conjugate plane 220 is projected onto the physical object via the optical member 20 and the image forming optical system 10. In this case, the light projected from the light emitting device 1H (the image forming optical system 10) onto the physical object may also be referred to as a light pattern. Furthermore, the light pattern projected onto the physical object from the light emitting device 1H may be referred to as the emission beam 51. Furthermore, the condensing optical system 71 may be referred to as a conjugate optical system in which the spatial light modulator and the conjugate plane 220 are optically conjugate. Furthermore, the light pattern formed on the conjugate plane 220 may be different from the light pattern projected onto the physical object from the light emitting device 1H. Furthermore, the intensity distribution of the light formed on the conjugate plane 220 may be different from the intensity distribution of the light projected onto the physical object from the light emitting device 1H (the image forming optical system 10).

For example, the input angle changing member 72 may be a digital mirror device (DMD) serving as a spatial light modulator. In this case, the light pattern (intensity distribution of light) formed on the conjugate plane 220 is determined in accordance with the inclination angle of each reflective element of the input angle changing member 72.

Furthermore, the light pattern may be referred to as image information or video information. Furthermore, the light emitting device 1H may be referred to as a projector that projects a light pattern onto a physical object. Furthermore, the light emitting device 1H may be provided on the above-described movable object.

The light emitting device 1H may perform projection mapping by projecting the light pattern (the emission beam 51) onto the physical object.

The physical object onto which the light pattern is projected by the light emitting device 1H may be a three-dimensional object. Furthermore, the physical object onto which the light pattern from the light emitting device 1H is projected may be at least one of a building, furniture, a movable object (e.g., the above-described movable object such as a vehicle or an aircraft), a three-dimensional screen, a tree, a mountain, and land (ground) serving as three-dimensional objects. Furthermore, the physical object onto which the light pattern from the light emitting device 1H is projected is not limited to a three-dimensional physical object and may be a flat surface. In this case, for example, the physical object onto which the light pattern from the light emitting device 1H is projected may be at least one of a wall surface and a flat screen. The physical object onto which the light pattern is projected from the light emitting device 1H may have the above-described feature locations (e.g., markers or the like). In this case, a positional relationship between a feature location provided on the physical object and a target position of the physical object onto which the light pattern from the light emitting device 1H is projected may be known.

The light emitting device 1H may perform projection mapping by projecting a light pattern onto a building serving as a physical object.

In this case, the control device 50 of the light emitting device 1H may control the position changing device 40D (e.g., may change an inclination angle of each reflective element of the input angle changing member 72) so that a desired light pattern is projected onto a target position of a building from the light emitting device 1H on the basis of a position of the feature location of the building on the image acquired by the imaging device 30F identified in the above-described image processing and a positional relationship between the feature location of the building and a target position of the building onto which the light pattern is projected.

The light emitting device 1H may perform projection mapping by projecting a light pattern onto a movable object serving as a physical object.

In this case, the control device 50 of the light emitting device 1H may control the position changing device 40D so that the position of the feature location of the movable object on an acquired image is identified in the above-described image processing every time the imaging device 30F performs an imaging process at a predetermined frame rate to acquire the image and the light pattern (the emission beam 51) output from the light emitting device 1H is projected onto the target position of the moving movable object on the basis of a positional relationship between the feature location of the movable object and the target position of the movable object onto which the light pattern is projected.

Furthermore, the intensity distribution of the light pattern projected at the target position of the physical object may be predetermined. Furthermore, as in the third embodiment, a calibration of the imaging device 30F may be performed or a calibration of the input angle changing member 72 may be performed.

As described above, according to the present embodiment, the input angle changing member 72 may be a spatial light modulator configured to spatially modulate the emission beam 51 from the light generating device 60. Therefore, according to the present embodiment, the light pattern (the emission beam 51) can be projected onto the physical object. Moreover, the light emitting device 1H includes the input angle changing member 72, such that it is possible to switch the light pattern (the intensity distribution of the light pattern) to be projected onto the physical object at high speed. The light emitting device 1H controls the position changing device 40D on the basis of the position of the physical object on the image acquired by the imaging device 30F identified in the above-described image processing, thereby accurately projecting a desired light pattern (i.e., the emission beam 51) from the light emitting device 1H onto a target physical object.

### [Eighth Embodiment]

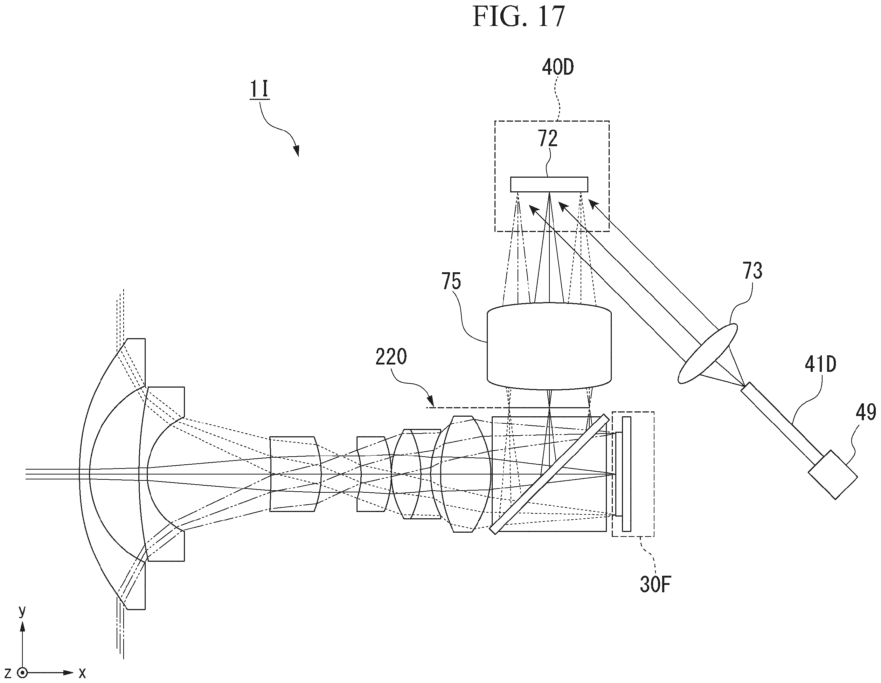

FIG. 17 is a schematic configuration diagram schematically showing a light emitting device according to an eighth embodiment.

A light emitting device 1I according to the eighth embodiment will be described with reference to FIG. 17. The light emitting device 1I projects a light pattern onto a physical object as in the seventh embodiment. However, unlike the light emitting device 1H, the light emitting device 1I includes an imaging lens 75 instead of the condensing optical system 71.

Constituent elements similar to those of the light emitting device 1H are denoted by similar reference signs and description thereof may be omitted in the description of the light emitting device 1I. Furthermore, in FIG. 17, the illustration of the control device 50 is omitted.

The input angle changing member 72 may be a spatial light modulator such as a mirror array which has a plurality of reflective elements arranged two-dimensionally and in which the inclination angle of each reflective element can be changed.

The imaging lens 75 may be a conjugate optical system in which the input angle changing member 72 (the spatial light modulator) and the conjugate plane 220 are optically conjugate. An image of the input angle changing member 72 (the spatial light modulator) may be formed on the conjugate plane 220. The imaging lens 75 may include at least one lens. Furthermore, the imaging lens 75 may include another existing optical member in addition to one lens. For example, the imaging lens 75 may include a plurality of lenses.

The light pattern may be different from the light pattern projected onto the physical object from III.

The input angle changing member 72 may be a digital mirror device (DMD) serving as a spatial light modulator. In this case, the imaging lens 75 may form an image of the reflective surface of each reflective element of the input angle changing member 72 on the conjugate plane 220. It can be said that the imaging lens 75 makes the reflective surface of each reflective element of the DMD serving as the spatial light modulator optically conjugate to the conjugate plane 220. Moreover, the light pattern (the light intensity distribution) formed on the conjugate plane 220 is determined in accordance with the inclination angle of each reflective element of the input angle changing member 72 (e.g., the DMD serving as the spatial light modulator).

Furthermore, the light pattern may be referred to as image information or video information. Furthermore, the light emitting device 1I may be referred to as a projector that projects a light pattern onto the physical object. Furthermore, the light emitting device 1I may be provided on the above-described movable object.

The light emitting device 1I may perform projection mapping by projecting the light pattern (the emission beam 51) onto the physical object.

The physical object onto which the light pattern is projected by the light emitting device 1I may be a three-dimensional physical object as in the seventh embodiment. Furthermore, the physical object onto which the light pattern from the light emitting device 1I is projected is not limited to a three-dimensional physical object and may be a flat surface. The physical object onto which the light pattern is projected from the light emitting device 1I may have the above-described feature location (e.g., a marker or the like). In this case, the positional relationship between the feature location provided on the physical object and the target position of the physical object onto which the light pattern from the light emitting device 1I is projected may be known.

The light emitting device 1I may perform projection mapping by projecting a light pattern onto a building serving as a physical object.

In this case, the control device 50 of the light emitting device 1I may control the position changing device 40D (e.g., may change an inclination angle of each reflective element of the input angle changing member 72) so that a desired light pattern (the emission beam 51) is projected onto a target position of a building from the light emitting device 1I on the basis of a position of the feature location of the building on the image acquired by the imaging device 30F identified in the above-described image processing and a positional relationship between the feature location of the building and a target position of the building onto which the light pattern is projected.

The light emitting device 1I may perform projection mapping by projecting a light pattern onto a movable object serving as a physical object.

In this case, the control device 50 of the light emitting device 1I may control the position changing device 40D so that the position of the feature location of the movable object on an acquired image is identified in the above-described image processing every time the imaging device 30F performs an imaging process at a predetermined frame rate to acquire the image and the light pattern (the emission beam 51) output from the light emitting device 1I is projected onto the target position of the moving movable object on the basis of a positional relationship between the feature location of the movable object and the target position of the movable object onto which the light pattern is projected.

Furthermore, the intensity distribution of the light pattern projected at the target position of the physical object may be predetermined.

Furthermore, as in the third embodiment, a calibration of the imaging device 30F may be performed or a calibration of the input angle changing member 72 may be performed.

The imaging lens 75 forms an image of a light pattern formed by performing a spatial modulation process using a spatial light modulator serving as the input angle changing member 72 on the conjugate plane 220. The imaging lens 75 serving as the conjugate optical system makes the spatial light modulator serving as the input angle changing member 72 optically conjugate to the conjugate plane 220.

As described above, according to the present embodiment, the light emitting device 1I includes the imaging lens 75 to make the spatial light modulator serving as the input angle changing member 72 optically conjugate to the conjugate plane 220. Therefore, according to the present embodiment, it is not necessary to use an fθ lens and the desired light pattern (the emission beam 51) can be projected onto the physical object. Moreover, the light emitting device 1I includes the input angle changing member 72, such that it is possible to switch the light pattern (the intensity distribution of the light pattern) projected onto the physical object at high speed.

The light emitting device 1I controls the position changing device 40D on the basis of the position of the physical object on the image acquired by the imaging device 30F identified in the above-described image processing, thereby accurately projecting the desired light pattern (i.e., the emission beam 51) from the light emitting device 1I onto a target physical object.

Furthermore, in the present embodiment, the emission beam 51 may be light for performing the above-described optical wireless communication. In this case, the physical object to which the emission beam 51 is emitted by the light emitting device 1H may be a target device for performing optical wireless communication such as the light receiving device 82 of the first embodiment described above.

Furthermore, the emission beam 51 may be light for optical wireless power supply. A wavelength of light for performing optical wireless power supply may be an infrared wavelength band, an ultraviolet wavelength band, or a wavelength band of visible light. An output of the light for optical wireless power supply may be several watts (W), several tens of watts (W), or several kilowatts (kW).

As an example, when the emission beam 51 is used as light for optical wireless power supply, the light emitting device 1H emits the emission beam 51 to a target device to which optical wireless power is supplied (e.g., at least one device of the light receiving device 82, and the light transmitting/receiving device 83) according to the above-described process and control of the control device 50, and therefore electric power may be supplied to the device. Furthermore, the light emitting device 1H may be referred to as a power supply device.

### [Ninth Embodiment]

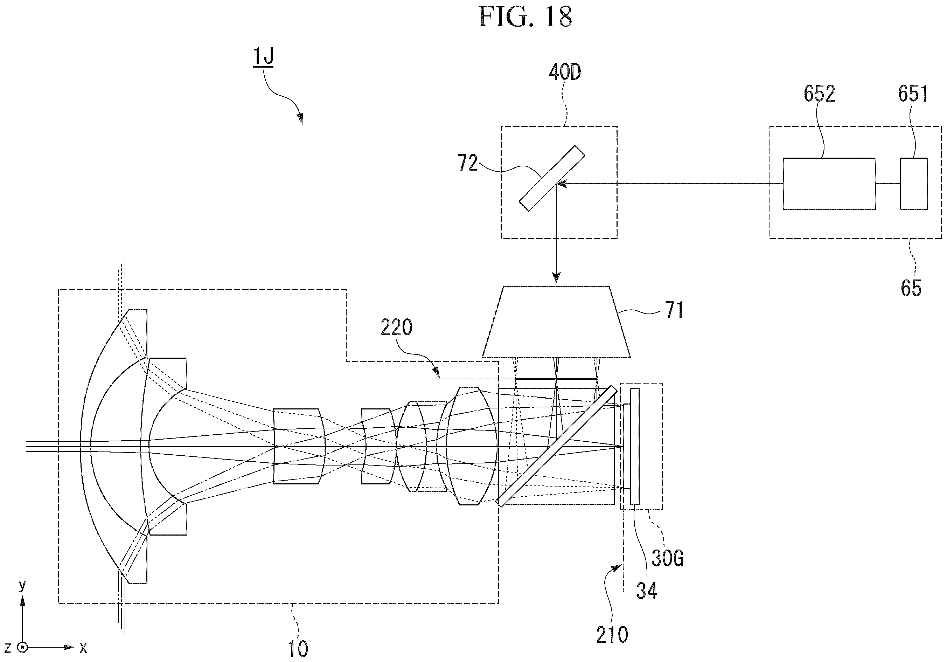

FIG. 18 is a schematic configuration diagram schematically showing a light emitting device according to a ninth embodiment.

A light emitting device 1J according to the ninth embodiment will be described with reference to FIG. 18. Unlike the light emitting device 1D, the light emitting device 1J includes a light generating device 65 instead of the communication board 62, the light transmitting optical element 41D, and the collimating lens 73 of the light emitting device 1D of the above-described third embodiment. Unlike the light emitting device 1D, the light emitting device 1J includes an imaging device 30G instead of the imaging device 30D of the light emitting device 1D. The light emitting device 1J may be installed on the above-described movable object.

Constituent elements similar to those of the light emitting device 1D are denoted by similar reference signs and description thereof may be omitted in the description of the light emitting device 1J. Furthermore, in FIG. 18, the illustration of the control device 50 is omitted.

The imaging device 30G includes an imaging element 34 having a plurality of pixels arranged on an imaging plane. It can be said that the imaging element 33 captures an image of at least a part of a physical object formed on an image plane 210. For example, the imaging plane of the imaging element 34 may be arranged on the image plane 210 of the image forming optical system 10. Moreover, the imaging plane of the imaging element 34 may not be arranged on the image plane 210 of the image forming optical system 10 and may be arranged near the image plane 210. Furthermore, the imaging element 34 may be an imaging element capable of outputting color image data (e.g., an RGB image sensor) or an imaging element capable of outputting monochrome image data (e.g., a monochrome image sensor). Furthermore, the imaging device 30G may be configured to be able to capture a reduced image of at least a part of the physical object formed on the image plane 210 by the image forming optical system 10. Furthermore, the imaging device 30G may be configured to be able to capture a magnified image or an unmagnified image of at least a part of the physical object formed on the image plane 210 by the image forming optical system 10. Furthermore, the imaging device 30G may be similar to the imaging device 30 of the light emitting device 1 of the first embodiment. That is, the imaging device 30G can be considered as the imaging device 30. Furthermore, the imaging element 34 of the imaging device 30G may be similar to the imaging element 31 of the imaging device 30 of the light emitting device 1. That is, the imaging device 34 can be considered as the imaging device 31.

The position changing device 40D includes at least an input angle changing member 72.

The input angle changing member 72 may be a galvanometer mirror (a galvanometer scanner).

Furthermore, the input angle changing member 72 may be a polygon mirror (a polygon scanner).

Furthermore, the input angle changing member 72 may be, for example, a spatial light modulator such as a mirror array which has a plurality of reflective elements arranged two-dimensionally and in which the inclination angle of each reflective element can be changed. Furthermore, the input angle changing member 72 is not limited to the reflection type and may be an existing transmissive spatial light modulator.

The light emitting device 1J emits measurement light to at least a part of the physical object and receives light (e.g., reflected light) generated by the emission of the measurement light so that the three-dimensional position of the physical object in space is calculated.

For example, the light emitting device 1J may emit measurement light from the light generating device 65 to at least a part of the physical object and receive light (e.g., reflected light) generated by the emission of the measurement light so that the three-dimensional position of the physical object is calculated. Furthermore, the measurement light emitted for the physical object may be referred to as the emission beam 51. Furthermore, the light generated by the emission of the measurement light (e.g., reflected light) may be referred to as the input beam 52. The physical object can be calibrated on the basis of the three-dimensional position of the physical object calculated by the light emitting device 1J. For example, the light emitting device 1J may emit measurement light from the light generating device 65 to at least a part of the above-described movable object serving as a physical object. The movable object may be a robot.

The light emitting device 1J may emit the measurement light from the light generating device 65 to an optical target provided on a movable object serving as a physical object. Also, the light emitting device 1J may receive light reflected by the optical target by emitting the measurement light. Furthermore, the optical target may be a retroreflective member configured to retroreflect the emitted measurement light. The optical target may not have to be a retroreflective member and may be another existing member as long as it is a member configured to reflect at least a part of the emitted measurement light. Furthermore, the optical target may be referred to as a reflector. Furthermore, the optical target provided on a physical object (e.g., a movable object) may be referred to as at least a part of the physical object. Furthermore, the physical objects are not limited to movable objects. For example, the physical object may be a machine tool or a part of any structure. Furthermore, the optical target may be referred to as a feature location of a physical object (a movable object). Furthermore, the optical target may be referred to as a physical object or a feature location.

The light emitting device 1J may emit the measurement light (the emission beam 51) to a physical object serving as a measurement target (e.g., an optical target provided on a movable object) and receive light from the physical object (e.g., an input beam 52 such as reflected light from an optical target). The light emitting device 1J may calculate a distance to the physical object on the basis of a result of receiving light from the physical object. Furthermore, the light emitting device 1J may calculate a position of a physical object (e.g., an optical target provided on a movable object) for any reference position on the basis of the result of receiving light from the physical object. Furthermore, the reference position may be a predetermined position in a space where the optical target is arranged.

For example, the light generating device 65 may include a light source 651 and an optical comb interference portion 652.

The light source 651 generates measurement light. The measurement light may be an optical comb. The optical comb is pulsed light whose spectral intensity is precisely and evenly spaced in a comb-like manner on a frequency axis. The light source 651 may be a pulsed light source capable of generating an optical comb.

The optical comb interference portion 652 may output measurement light from the light source 651 toward the input angle changing member 72. The optical comb interference portion 652 may extract a part of the measurement light from the light source 651 as reference light. Moreover, the optical comb interference portion 652 may receive light (e.g., reflected light) generated by emission of measurement light for at least a part of the physical object (e.g., the above-described optical target) and interfere with the reference light described above. The control device 50 of the light emitting device 1J may measure a distance from the light emitting device 1J to a physical object (e.g., the above-described optical target) on the basis of the interference light (an interference signal). For example, the control device 50 may measure a distance from the light emitting device 1J to a physical object (e.g., the above-described optical target) on the basis of generation positions of interference fringes between different pulses of the optical comb. Furthermore, light generated by emitting the measurement light to at least a part of the physical object and received by the optical comb interference portion 652 (the light emitting device 1J) (e.g., at least a part of the reflected light of the measurement light in the physical object) may be referred to as an input beam 52. Furthermore, the optical comb interference portion 652 may be referred to as a light receiving portion because the optical comb interference portion 652 receives light generated by emission of measurement light for at least a part of the physical object. Moreover, the light generating device 65 including the optical comb interference portion 652 may be referred to as the light receiving portion. Moreover, the light receiving portion including the light generating device 65 and the position changing device 40D (the input angle changing member 72) may be considered. Furthermore, the optical comb interference portion 652 can also be considered as a light transmitting/receiving portion because the optical comb interference portion 652 outputs measurement light and receives light generated by the emission of the measurement light for the physical object. Moreover, the light generating device 65 including the optical comb interference portion 652 may be referred to as a light transmitting/receiving portion. Moreover, a light transmitting/receiving portion including the light generating device 65 and the position changing device 40D (the input angle changing member 72) can be considered.

Furthermore, the control device 50 may not calculate the distance from the light emitting device 1J to the physical object on the basis of the interference light (the interference signal) generated by the optical comb interference portion 652. For example, a signal processing portion (not shown) different from the control device 50 may calculate the distance from the light emitting device 1J to the physical object on the basis of the above-described interference light (interference signal). Furthermore, the signal processing portion (not shown) may be included in the light generating device 65. Furthermore, the above-described interference light (interference signal) can be considered as a light reception result because the above-described interference light (interference signal) is generated by the light emitting device 1J (the optical comb interference portion 562) receiving light generated by emission of measurement light for a physical object.

Furthermore, as the optical comb interference portion 652, the technology disclosed in United States Patent No. 6,493,091 may be used.

Furthermore, according to the measurement of the distance using an optical comb, for example, the distance can be measured with an accuracy of the order of sub-micrometers.

As an example, a case where a three-dimensional position of a movable object on which a retroreflective member serving as an optical target is provided is obtained will be described. Furthermore, the retroreflective member may be referred to as a physical object or may be referred to as a feature location of a movable object serving as a physical object.

The control device 50 of the light emitting device 1J may control the position changing device 40D (or may change the inclination angle of the galvanometer mirror serving as the input angle changing member 72) so that the measured light (the emission beam 51) from the light emitting device 1J is input to the retroreflective member on the basis of the position of the retroreflective member serving as a feature location on the image acquired by the imaging device 30G identified in the above-described image processing. That is, according to the control of the control device 50, the position changing device 40D may change the input angle of the measurement light from the input angle changing member 72 to the condensing optical system 71 and change the input position of the measurement light from the condensing optical system 71 to the conjugate plane 220 (the position of the measurement light on the conjugate plane 220) to emit the measurement light from the light emitting device 1J to the physical object (the retroreflective member).

Here, the control device 50 may calculate an orientation of the physical object (the retroreflective member) for the light emitting device 1J on the basis of the position of the retroreflective member on the image acquired by the imaging device 30G. As described above, an emission direction of the measurement light output by the image forming optical system 10 via the optical member 20 is determined in accordance with the position of the measurement light (the emission beam 51) on the conjugate plane 220 (the inclination angle of the galvanometer mirror serving as the input angle changing member 72). When the measurement light is output by the image forming optical system 10 so that the measurement light is input to the physical object, the emission direction of the measurement light may be referred to as the orientation of the physical object (e.g., the retroreflective member) for the light emitting device 1J. Therefore, the control device 50 can calculate the orientation of the physical object for the light emitting device 1J on the basis of the position of the feature location of the physical object on the image acquired by the imaging device 30G. The control device 50 may calculate an orientation of the movable object serving as a physical object (e.g., an orientation of the center of gravity of the movable object) on the basis of the calculated orientation of the physical object (the retroreflective member). For example, the control device 50 may calculate the orientation of the movable object serving as the physical object on the basis of the calculated orientation of the physical object (the retroreflective member) and an installation position of the retroreflective member at the movable object. Furthermore, the control device 50 may use the calculated orientation of the retroreflective member as the orientation of the movable object.

Furthermore, the position of a feature location of the physical object on the image acquired by the imaging device 30G can be considered as information about the change in the position of the measurement light (the emission beam 51) on the conjugate plane 220, because the position of the measurement light (the emission beam 51) on the conjugate plane 220 is changed by the control device 50 in accordance with the position of the feature location. Furthermore, the position of the feature location of the physical object on the image acquired by the imaging device 30G can be considered as information about the position of the measurement light (the emission beam 51) on the conjugate plane 220, because the position of the measurement light (the emission beam 51) on the conjugate plane 220 is set by the control device 50 in accordance with the position of the feature location.

Furthermore, the orientation of the physical object for the light emitting device 1J may be referred to as an orientation of the physical object for the image forming optical system 10. Furthermore, the orientation of the physical object may be referred to as a direction of the physical object.

Furthermore, as in the third embodiment, a calibration of the imaging device 30G may be performed or a calibration of the input angle changing member 72 may be performed.

Furthermore, in the calibration of the input angle changing member 72, the association of the position on the image acquired by the imaging device 30G and the emission direction from the image forming optical system 10 (i.e., the orientation of the physical object) may be performed in addition to/in place of the association of the reflection angle (the inclination angle of the galvanometer mirror serving as the input angle changing member 72) of the measurement light (the emission beam 51) at the input angle changing member 72 and the position on the image acquired by the imaging device 30G.

Furthermore, the control device 50 is not limited to a process of calculating the orientation of the physical object with respect to the light emitting device 1J on the basis of the position of the feature location of the physical object on the image acquired by the imaging device 30G and may calculate the orientation of the physical object for the light emitting device 1J on the basis of the reflection angle in the input angle changing member 72 (e.g., the inclination angle of the galvanometer mirror serving as the input angle changing member 72). Furthermore, it can be said that the control device 50 calculates the orientation of the physical object for the light emitting device 1J on the basis of the position of the measurement light (the emission beam 51) on the conjugate plane 220. Furthermore, the reflection angle in the input angle changing member 72 and the position of the measurement light (the emission beam 51) on the conjugate plane 220 may be referred to as information about the position of the measurement light (the emission beam 51) on the conjugate plane 220.

Furthermore, the control device 50 may calculate the orientation of the physical object for the light emitting device 1J on the basis of an amount of change in the reflection angle in the input angle changing member 72 (e.g., an amount of change in the inclination angle of the galvanometer mirror serving as the input angle changing member 72). Furthermore, it can be said that the control device 50 calculates the orientation of the physical object for the light emitting device 1J on the basis of the amount of change in the measurement light (the emission beam 51) on the conjugate plane 220. Furthermore, the amount of change in the reflection angle in the input angle changing member 72 and the amount of change in the measurement light (the emission beam 51) on the conjugate plane 220 may be referred to as information about the change in the position of the measurement light (the emission beam 51) on the conjugate plane 220. Furthermore, the amount of change in the measurement light (the emission beam 51) on the conjugate plane 220 may be referred to as information about the position of the measurement light (the emission beam 51) on the conjugate plane 220.

As described above, the inclination angle of the galvanometer mirror serving as the input angle changing member 72 is set so that the measurement light from the light emitting device 1J is input to the physical object (the retroreflective member) on the basis of the position of the feature location of the physical object (e.g., the retroreflective member) on the image calculated by the control device 50. The measurement light (the emission beam 51) from the light source 651 (the light generating device 65) is input to the optical comb interference portion 652. The measurement light from the optical comb interference portion 652 is condensed on the conjugate plane 220 via the input angle changing member 72 and the condensing optical system 71. The measurement light from the conjugate plane 220 is emitted toward the physical object via the optical member 20 and the image forming optical system 10. Light from the physical object (e.g., the reflected light) is input to the optical comb interference portion 652 via the image forming optical system 10, the optical member 20, the condensing optical system 71, and the input angle changing member 72. The light from the physical object input to the optical comb interference portion 652 interferes with a part of the measurement light serving as the reference light and an interference result (an interference signal) is output to the control device 50. The control device 50 may calculate a distance from the light emitting device 1J to the physical object on the basis of the interference result (the interference signal).

Furthermore, the control device 50 may calculate the three-dimensional position of the physical object on the basis of the orientation of the physical object for the light emitting device 1J and the distance from the light emitting device 1J to the physical object calculated as described above. Furthermore, the control device 50 may calculate the distance from the light emitting device 1J to the movable object serving as the physical object (e.g., the distance from the light emitting device 1J to the center of gravity of the movable object) on the basis of the distance from the light emitting device 1J to the physical object (the retroreflective member). For example, the control device 50 may calculate the distance from the light emitting device 1J to the movable object on the basis of the calculated distance from the light emitting device 1J to the retroreflective member and the installation position of the retroreflective member in the movable object. Furthermore, the control device 50 may use the calculated distance of the retroreflective member from the light emitting device 1J as the distance from the light emitting device 1J to the movable object.

Furthermore, the optical member 20 may be a half mirror. Furthermore, the optical member 20 may be a dichroic mirror. In this case, each wavelength of light may be determined so that the measurement light (the emission beam 51) is reflected by the dichroic mirror and the light from the image forming optical system 10 for forming an image of at least a part of the physical object on the image plane 210 is transmitted.

The light emitting device 1J may calculate the three-dimensional position of the movable object in accordance with the movement of the movable object serving as the physical object. In this case, the control device 50 may identify the position of the feature location (e.g., a retroreflective member) on the acquired image in the above-described image processing every time the imaging device 30G performs an imaging process at a predetermined frame rate to acquire the image, calculate at least one of an orientation and a distance of the movable object serving as the physical object as described above, and calculate a three-dimensional position of the movable object serving as the physical object.

Furthermore, a plurality of retroreflective members may be provided on the movable object. As described above, the control device 50 may calculate at least one of the orientation and distance of each retroreflective member provided on the movable object and calculate at least one of the orientation and distance of the movable object (e.g., at least one of the orientation and distance of the center of gravity of the movable object) on the basis of at least one of the calculated orientation and distance of each retroreflective member. The control device 50 may calculate the orientation and distance of each retroreflective member provided in the movable object and calculate a three-dimensional position of the movable object (e.g., a three-dimensional position of the center of gravity of the movable object) on the basis of the calculated orientation and distance of each retroreflective member.

Furthermore, the feature location of the movable object does not have to be an optical target (e.g., the retroreflective member). The feature location of the movable object may be the marker described above. A positional relationship between the marker provided on the movable object and the retroreflective member may be known. In this case, the control device 50 of the light emitting device 1J may control the position changing device 40D (or may change the inclination angle of the galvanometer mirror serving as the input angle changing member 72) so that the measured light (the emission beam 51) from the light emitting device 1J is input to the retroreflective member on the basis of the position of the marker serving as a feature location on the image acquired by the imaging device 30G identified in the above-described image processing.

Furthermore, the retroreflective member may not be provided on the movable object.

The control device 50 of the light emitting device 1J may control the position changing device 40D so that the measured light (the emission beam 51) from the light emitting device 1J is input to a specific position of the movable object on the basis of the position of the feature location of the movable object serving as the physical object (e.g., an edge or texture of the movable object) on the image acquired by the imaging device 30G identified in the above-described image processing.

As described above, the movable object can be calibrated on the basis of the three-dimensional position of the movable object calculated by the light emitting device 1J.

Furthermore, the physical object whose three-dimensional position is calculated is not limited to a movable object. For example, as described above, the light emitting device 1J may calculate a three-dimensional position of a machine tool serving as a physical object. For example, a retroreflective member may be provided as a feature location on the spindle of the machine tool. For example, the retroreflective member may be provided removably at the tip of the spindle of the machine tool. In this case, the light emitting device 1J may control the position changing device 40D so that the measurement light (the emission beam 51) from the light emitting device 1J is input to the retroreflective member on the basis of the position of the feature location (the retroreflective member) on the image acquired by the imaging device 30G. As described above, the control device 50 of the light emitting device 1J may calculate a distance from the light emitting device 1J to the retroreflective member on the basis of a result of receiving light (reflected light) from the retroreflective member due to the emission of the measurement light (i.e., the interference light due to interference of the light from the retroreflective member and a part of the measured light). Moreover, as described above, the control device 50 may calculate the orientation of the retroreflective member for the light emitting device 1J on the basis of the position of the retroreflective member serving as a feature location on the image. The control device 50 may calculate the three-dimensional position of the retroreflective member on the basis of the distance from the light emitting device 1J to the retroreflective member and the orientation of the retroreflective member for the light emitting device 1J. Furthermore, when a retroreflective member is provided at the tip of the spindle of the machine tool, the three-dimensional position of the retroreflective member can be considered as a three-dimensional position of the tip of the spindle of the machine tool. The spindle can be calibrated on the basis of the three-dimensional position of the tip of the spindle of the machine tool.

In the present embodiment, the light receiving portion receives the reflected light of the emission beam 51 emitted by the light generating device 65 as the input beam 52. That is, the light receiving portion 120 receives light generated by emitting the emission beam 51 from the image forming optical system 10 to at least a part of the physical object via the image forming optical system 10 and the optical member 20.

The light receiving portion receives light generated by emission to at least a part of the physical object via the conjugate plane 220.

The light receiving portion is a light transmitting/receiving portion (e.g., an optical comb interference portion 652) configured to output the emission beam 51.

The condensing optical system 71 is arranged on the optical path between the light transmitting/receiving portion and the optical member 20, and condenses the emission beam output from the light transmitting/receiving portion.

The input angle changing member 72 changes an input angle of the emission beam 51 for the condensing optical system 71. The input angle changing member 72 may be, for example, a galvanometer mirror. The input angle changing member 72 changes a position of the emission beam 51 on the conjugate plane 220 by changing the input angle of the emission beam 51 for the condensing optical system 71.

The light transmitting/receiving portion receives light traveling along the optical path of the emission beam 51 within light generated by emission to at least a part of the physical object via the condensing optical system 71 and the input angle changing member 72.

The control device 50 calculates a distance to the physical object on the basis of the light reception result of the light receiving portion.

The control device 50 calculates an orientation of the physical object for the image forming optical system 10 on the basis of information about a change in a position on the conjugate plane 220 by the position changing device 40D.

Although an example in which a position where the emission beam 51 is emitted is changed by the input angle changing member 72 and the condensing optical system 71 has been described in the present embodiment, a method of changing a position of the emission beam 51 is not limited to this example. For example, instead of an example including the input angle changing member 72 and the condensing optical system 71, the position changing device 40D may move the light generating device 65 on the x-z plane so that the position of the measurement light (the emission beam 51) on the conjugate plane 220 can be changed. In this case, it is not necessary to move the entire configuration of the light generating device 65. For example, the light source 651 may be arranged at a fixed position.

Although an example of distance measurement using an optical comb has been described in the present embodiment, the light emitting device 1J may measure a distance by an interference method other than an optical comb. For example, the light emitting device 1J may measure the distance by an interference method such as an optical coherence tomography (OCT) method, a phase modulation method, or an intensity modulation method.

Furthermore, the light emitting device 1J may measure the distance by a method other than the interference method. For example, the distance may be measured by a method such as a triangulation method, a stereo method, a phase shift method, a confocal method, a time of flight (ToF) method, or a frequency modulated continuous wave (FMCW) method.

As described above, according to the present embodiment, the light receiving portion receives light generated by emitting the emission beam 51 from the image forming optical system 10 to at least a part of the physical object via the image forming optical system 10 and the optical member 20. In the present embodiment, the emission beam 51 is an optical comb. Therefore, according to the light emitting device 1J, the distance can be measured with high accuracy using an optical comb.

The light emitting device 1J controls the position changing device 40D (the input angle changing member 72) on the basis of the position of the feature location of the physical object on the image acquired by the imaging device 30G identified in the above-described image processing, such that it is possible to accurately emit the measurement light (i.e., the emission beam 51) from the light emitting device 1J to a desired position at a target physical object. That is, the light emitting device 1J can calculate the distance from the light emitting device 1J to a desired position in the target physical object.

Moreover, the light emitting device 1J can accurately calculate the distance from the light emitting device 1J to the physical object by measuring the distance using an optical comb as described above.

Moreover, the light emitting device 1J can switch the emission position (the emission direction) of the measurement light (the emission beam 51) at high speed by providing the input angle changing member 72. That is, the light emitting device 1J can switch the measurement position of the distance from the light emitting device 1J at high speed.

The light emitting device 1J can accurately calculate the orientation of the physical object for the light emitting device 1J at high speed on the basis of the position of the feature location of the physical object on the image acquired by the imaging device 30G (i.e., information about the change in the position of the measurement light on the conjugate plane 220) identified in the above-described image processing.

The light emitting device 1J can calculate a three-dimensional position of the physical object on the basis of the calculated distance from the light emitting device 1J to the physical object and the orientation of the physical object for the light emitting device 1J.

The physical object can be calibrated on the basis of the three-dimensional position of the physical object calculated by the light emitting device 1J.

Furthermore, the invention of each of the above-mentioned embodiments will be able to contribute to Goal 9 of the Sustainable Development Goals (SDGs), "Industry, Innovation, and Infrastructure," introduced by the United Nations.

While an embodiment of the present invention has been described above in detail with reference to the drawings, a specific configuration is not limited to the above-described embodiment and various design changes and the like can be made without departing from the scope and spirit of the invention. Moreover, the configurations described in the above-described embodiments and examples may be combined.

Furthermore, the invention described in the above embodiment will be summarized and disclosed as an appendix.

### (Appendix 1)

A light emitting device for emitting an emission beam from a light generating device to a physical object, the light emitting device including:
an image forming optical system;
an optical member configured to output light passing through at least a part of the image forming optical system toward an image plane of the image forming optical system and output the emission beam from the light generating device toward at least a part of the image forming optical system;
an imaging device configured to capture at least a part of an image of the physical object formed on the image plane by the image forming optical system; and
a position changing device configured to change an input position of the emission beam from the light generating device to the optical member so that an emission position of the emission beam output by the image forming optical system is changed,
wherein the emission beam output by the image forming optical system is emitted to at least a part of the physical object on the basis of imaging results of the imaging device.

### (Appendix 2)

A light emitting device for emitting an emission beam from a light generating device to a physical object, the light emitting device including:
an image forming optical system including an optical member configured to output input light toward an image plane and output the emission beam from the light generating device toward the physical object;
an imaging device configured to capture at least a part of an image of the physical object formed on the image plane by the image forming optical system; and
a position changing device configured to change an input position of the emission beam from the light generating device to the optical member so that an emission position of the emission beam output by the image forming optical system is changed,
wherein the emission beam output by the image forming optical system is emitted to at least a part of the physical object on the basis of imaging results of the imaging device.

### (Appendix 3)

An optical wireless communication device for performing optical wireless communication with a light transmitting/receiving device by emitting an emission beam to the light transmitting/receiving device and receiving the emission beam from the light transmitting/receiving device, the optical wireless communication device including:
an image forming optical system;
an optical member configured to output light passing through at least a part of the image forming optical system toward an image plane of the image forming optical system and output the emission beam from the light generating device toward at least a part of the image forming optical system;
an imaging device configured to capture an image of at least a part of the light transmitting/receiving device formed on the image plane by the image forming optical system;
a position changing device configured to change an input position of the emission beam from the light generating device to the optical member so that an emission position of the emission beam output by the image forming optical system is changed; and
a light receiving portion configured to receive the input beam output from the light transmitting/receiving device and input to the image forming optical system via the optical member,
wherein the emission beam output by the image forming optical system is emitted to a light receiving portion of the light transmitting/receiving device on the basis of imaging results of the imaging device.

### (Appendix 4)

An optical wireless communication system including:
the optical wireless communication device according to appendix 3; and
the light transmitting/receiving device.

### (Appendix 5)

An optical wireless communication device for performing optical wireless communication with a light transmitting/receiving device by emitting an emission beam to the light transmitting/receiving device and receiving the emission beam from the light transmitting/receiving device, the optical wireless communication device including:
an image forming optical system including an optical member configured to output input light toward an image plane and output the emission beam from a light generating device toward the physical object;
an imaging device configured to capture an image of at least a part of the light transmitting/receiving device formed on the image plane by the image forming optical system;
a position changing device configured to change an input position of the emission beam from the light generating device to the image forming optical system so that an emission position of the emission beam output by the image forming optical system is changed; and
a light receiving portion configured to receive the input beam output from the light transmitting/receiving device and input to the image forming optical system via the optical member,
wherein the emission beam output by the image forming optical system is emitted to a light receiving portion of the light transmitting/receiving device on the basis of imaging results of the imaging device.

### (Appendix 6)

An optical wireless communication system including:
the optical wireless communication device according to appendix 5; and
the light transmitting/receiving device.

### [Reference Signs List]

100 Light emitting system
1 Light emitting device
10 Image forming optical system
20 Optical members
30 Imaging device
31 Wide-angle sensor
32 Sensor
40 Position changing device
41 Light transmitting/receiving optical element
42 Fresnel lens
46 Collimating lens
50 Control device
60 Light generating device
61 Optical fiber
62 Communication board
70 Optical system
71 Condensing optical system
72 Input angle changing member
73 Collimating lens
210 Image plane
220 Conjugate plane
221 First conjugate plane
222 Second conjugate plane
81 Light receiving device
82 Light transmitting device
83 Light transmitting/receiving device
51 Emission beam
52 Input beam

## Claims

1. A light emitting device for emitting an emission beam from a light generating device to a physical object, the light emitting device comprising:
an image forming optical system;
an optical member configured to output light input via the image forming optical system toward an image plane of the image forming optical system and output the emission beam input from the light generating device via a conjugate plane conjugate to the image plane toward the image forming optical system;
an imaging device configured to capture at least a part of an image of the physical object formed on the image plane by the image forming optical system;
a position changing device configured to change a position of the emission beam from the light generating device on the conjugate plane so that an emission position of the emission beam output by the image forming optical system is changed; and
a control device configured to control the position changing device on the basis of imaging results of the imaging device,
wherein the control device controls the position changing device on the basis of the imaging results of the imaging device so that the emission beam output by the image forming optical system is emitted to at least a part of the physical object.

2. The light emitting device according to claim 1, wherein the image forming optical system is telecentric on a conjugate plane side.

3. The light emitting device according to claim 1 or 2, wherein a maximum angle of view of the image forming optical system is 170° or more.

4. The light emitting device according to any one of claims 1 to 3, wherein the image forming optical system forms a reduced image of the physical object on the image plane.

5. The light emitting device according to any one of claims 1 to 4, further comprising an optical system configured to designate the conjugate plane as a first conjugate plane and form a second conjugate plane conjugate to the first conjugate plane,
wherein the emission beam is input to the optical member via the second conjugate plane and the first conjugate plane, and
wherein the position changing device changes a position of the emission beam on the second conjugate plane.

6. The light emitting device according to claim 5, wherein the optical system between the first conjugate plane and the second conjugate plane is a magnification optical system.

7. The light emitting device according to any one of claims 1 to 6, wherein the control device controls the position changing device on the basis of a feature location of the physical object detected on the basis of the imaging results.

8. The light emitting device according to any one of claims 1 to 7, wherein the imaging device has a plurality of pixels.

9. The light emitting device according to any one of claims 1 to 8,
wherein the light generating device includes a light outputting portion configured to output the emission beam, and
wherein the position changing device moves the light outputting portion in a direction intersecting an optical axis of a light outputting portion side of the image forming optical system.

10. The light emitting device according to any one of claims 1 to 8, further comprising a condensing optical system arranged on an optical path between a light outputting portion of the light generating device and the optical member and configured to condense the emission beam output from the light outputting portion,
wherein the position changing device includes an input angle changing member configured to change an input angle of the emission beam for the condensing optical system and changes the position of the emission beam on the conjugate plane by changing an input angle of the emission beam for the condensing optical system.

11. The light emitting device according to any one of claims 1 to 8,
wherein the position changing device includes a spatial light modulator configured to spatially modulate the emission beam from the light generating device, and
wherein a light pattern spatially modulated by the spatial light modulator is formed on the conjugate plane.

12. The light emitting device according to claim 11, wherein the position changing device further includes a conjugate optical system in which the spatial light modulator is optically conjugate to the conjugate plane.

13. The light emitting device according to any one of claims 1 to 12,
wherein the physical object includes a light receiving portion of a light receiving device,
wherein the emission beam is emitted to the light receiving portion, and
wherein the emission beam is a light beam for performing optical wireless communication with the light receiving device.

14. The light emitting device according to any one of claims 1 to 13, further comprising a light receiving portion configured to receive an input beam output from a light outputting portion of a light transmitting device serving as the physical object and input to the image forming optical system via the optical member.

15. The light emitting device according to claim 14, wherein the light receiving portion configured to receive the input beam receives the input beam via the conjugate plane.

16. The light emitting device according to claim 14 or 15, wherein the position changing device changes a position of the light receiving portion or an output angle of the input beam that has been input so that the input beam via the conjugate plane is input to the light receiving portion.

17. The light emitting device according to any one of claims 14 to 16, wherein the position changing device moves the light receiving portion in a direction intersecting an optical axis of a light receiving portion side of the image forming optical system.

18. The light emitting device according to any one of claims 14 to 17,
wherein the light generating device includes a light outputting portion configured to output the emission beam,
wherein a positional relationship between the light receiving portion and the light outputting portion is fixed, and
wherein the position changing device moves the light outputting portion and the light receiving portion in a direction intersecting an optical axis of a light receiving portion side of the image forming optical system.

19. The light emitting device according to claim 14,
wherein the imaging device includes
a plurality of imaging pixels for capturing at least a part of an image of the physical object and
light receiving pixels different from the imaging pixels and serving as the light receiving portion for receiving the input beam, and
wherein the light receiving pixels receive the input beam input via the image plane.

20. The light emitting device according to claim 14 or 19,
wherein the imaging device includes a plurality of imaging pixels for capturing at least a part of an image of the physical object,
wherein at least some pixels of the plurality of imaging pixels are able to receive the input beam, and
wherein the imaging pixels capable of receiving the input beam receive the input beam input via the image plane.

21. The light emitting device according to any one of claims 14 to 20, wherein the input beam is a light beam for performing optical wireless communication with the light transmitting device.

22. The light emitting device according to any one of claims 14 to 21,
wherein the light transmitting device is a light transmitting/receiving device including a light receiving portion,
wherein the input beam is output from the light transmitting/receiving device,
wherein the emission beam is emitted to the light receiving portion, and
wherein each of the input beam and the emission beam is a light beam for performing optical wireless communication with the light transmitting/receiving device.

23. The light emitting device according to any one of claims 1 to 8, wherein the light generating device includes a light receiving portion configured to receive light generated by the emission beam emitted from the image forming optical system to at least a part of the physical object via the image forming optical system and the optical member.

24. The light emitting device according to claim 23, wherein the light receiving portion receives the light generated by the emission to at least a part of the physical object via the conjugate plane.

25. The light emitting device according to claim 23 or 24,
wherein the light receiving portion is a light transmitting/receiving portion configured to output the emission beam,
wherein the light emitting device further comprises a condensing optical system arranged on an optical path between the light transmitting/receiving portion and the optical member and configured to condense the emission beam output from the light transmitting/receiving portion, and
wherein the position changing device includes an input angle changing member configured to change an input angle of the emission beam for the condensing optical system and changes the position of the emission beam on the conjugate plane by changing an input angle of the emission beam for the condensing optical system.

26. The light emitting device according to claim 25, wherein the light transmitting/receiving portion receives light moving along an optical path of the emission beam within the light generated by the emission to at least a part of the physical object via the condensing optical system and the input angle changing member.

27. The light emitting device according to any one of claims 23 to 26, wherein the control device calculates a distance to the physical object on the basis of light receiving results of the light receiving portion.

28. The light emitting device according to any one of claims 23 to 27, wherein the control device calculates an orientation of the physical object for the image forming optical system on the basis of information about a change in the position on the conjugate plane by the position changing device.

29. The light emitting device according to any one of claims 1 to 8,
wherein an image of at least a part of a second physical object different from a first physical object is formed on the image plane by the image forming optical system when the physical object is the first physical object,
wherein the imaging device captures an image of at least a part of the first physical object and an image of at least a part of the second physical object,
wherein the light generating device outputs a second emission beam different from a first emission beam when the emission beam is the first emission beam,
wherein the position changing device changes a position of each of the first emission beam and the second emission beam from the light generating device on the conjugate plane so that an emission position of each of the first emission beam and the second emission beam output by the image forming optical system is changed, and
wherein the control device controls the position changing device on the basis of the imaging results of the imaging device so that the first emission beam output by the image forming optical system is emitted to at least a part of the first physical object and the second emission beam output by the image forming optical system is emitted to at least a part of the second physical object.

30. The light emitting device according to claim 29, further comprising a condensing optical system arranged on an optical path between a light outputting portion of the light generating device and the optical member and configured to condense the first emission beam and the second emission beam output from the light outputting portion,
wherein the position changing device includes an input angle changing member configured to change an input angle of each of the first emission beam and the second emission beam for the condensing optical system and changes a position of each of the first emission beam and the second emission beam on the conjugate plane by changing an input angle of each of the first emission beam and the second emission beam for the condensing optical system.

31. The light emitting device according to claim 29 or 30,
wherein the first physical object includes a light receiving portion of a first light receiving device,
wherein the second physical object includes a light receiving portion of a second light receiving device,
wherein the first emission beam is emitted to the light receiving portion of the first light receiving device,
wherein the second emission beam is emitted to the light receiving portion of the second light receiving device,
wherein the first emission beam is a light beam for performing optical wireless communication with the first light receiving device, and
wherein the second emission beam is a light beam for performing optical wireless communication with the second light receiving device.

32. The light emitting device according to claim 29 or 30, further comprising a light receiving portion configured to receive a first input beam output from a light outputting portion of a first light transmitting device serving as the first physical object and input to the image forming optical system and a second input beam output from a light outputting portion of a second light transmitting device serving as the second physical object and input to the image forming optical system via the optical member,
wherein the first input beam is a light beam for performing optical wireless communication with the first light transmitting device, and
wherein the second input beam is a light beam for performing optical wireless communication with the second light transmitting device.

33. The light emitting device according to claim 32,
wherein the first light transmitting device is a first light transmitting/receiving device including a light receiving portion,
wherein the second light transmitting device is a second light transmitting/receiving device including a light receiving portion,
wherein the first input beam is output from the first light transmitting device,
wherein the second input beam is output from the second light transmitting device, wherein the first emission beam is emitted to a light receiving portion of the first light transmitting device,
wherein the second emission beam is emitted to a light receiving portion of the second light transmitting device,
wherein each of the first input beam and the first emission beam is a light beam for performing optical wireless communication with the first light transmitting/receiving device, and
wherein each of the second input beam and the second emission beam is a light beam for performing optical wireless communication with the second light transmitting/receiving device.

34. An optical wireless communication system comprising:
the light emitting device according to claim 13; and
the light receiving device,
wherein the light emitting device and the light receiving device perform optical wireless communication when the light receiving portion of the light receiving device receives the emission beam from the light emitting device.

35. An optical wireless communication system comprising:
the light emitting device according to claim 21; and
the light transmitting device,
wherein the light transmitting device and the light emitting device perform optical wireless communication when the light receiving portion of the light emitting device receives the input beam from the light transmitting device.

36. An optical wireless communication system comprising:
the light emitting device according to claim 22; and
the light transmitting/receiving device,
wherein the light emitting device and the light transmitting/receiving device perform optical wireless communication when the emission beam is emitted from the light emitting device to the light receiving portion of the light transmitting/receiving device and the light receiving portion of the light emitting device receives the input beam from the light transmitting/receiving device.

37. An optical wireless communication system comprising:
the light emitting device according to claim 31;
the first light receiving device; and
the second light receiving device,
wherein the light emitting device and the first light receiving device perform optical wireless communication when the light receiving portion of the first light receiving device receives the first emission beam from the light emitting device and the light emitting device and the second light receiving device perform optical wireless communication when the light receiving portion of the second light receiving device receives the second emission beam from the light emitting device.

38. An optical wireless communication system comprising:
the light emitting device according to claim 32;
the first light transmitting device; and
the second light transmitting device,
wherein the first light transmitting device and the light emitting device perform optical wireless communication when the light receiving portion of the light emitting device receives the first input beam from the first light transmitting device and the second light transmitting device and the light emitting device perform optical wireless communication when the light receiving portion of the light emitting device receives the second input beam from the second light transmitting device.

39. An optical wireless communication system comprising:
the light emitting device according to claim 33;
the first light transmitting/receiving device; and
the second light transmitting/receiving device,
wherein the light emitting device and the first light transmitting/receiving device perform optical wireless communication when the first emission beam is emitted from the light emitting device to the light receiving portion of the first light transmitting/receiving device and the light receiving portion of the light emitting device receives the first input beam from the first light transmitting/receiving device and the light emitting device and the second light transmitting/receiving device perform optical wireless communication when the second emission beam is emitted from the light emitting device to the light receiving portion of the second light transmitting/receiving device and the light receiving portion of the light emitting device receives the second input beam from the second light transmitting/receiving device.
